# EUROPÄISCHE PATENTSCHRIFT

(11) **EP 1 646 703 B1**
(45) Veröffentlichungstag und Bekanntmachung des Hinweises auf die Patenterteilung: **17.03.2010**
(21) Anmeldenummer: 04740199.7
(22) Anmeldetag: 23.06.2004
(51) Int. Cl.: C09K 19/12, G02F 1/13

(54) **FLÜSSIGKRISTALLINES MEDIUM MIT MONOFLUOR-TERPHENYLVERBINDUNGEN**
LIQUID-CRYSTAL MEDIUM CONTAINING MONOFLUOROTERPHENYL COMPOUNDS
MILIEU DE CRISTAUX LIQUIDES AYANT DES COMPOSES DE MONOFLUORO-TERPHENYLE

(30) Priorität: 11.07.2003 DE 10331490
(43) Veröffentlichungstag der Anmeldung: 19.04.2006
(73) Patentinhaber: Merck Patent GmbH, 64293 Darmstadt (DE)
(72) Erfinder: MANABE, Atsutaka, 64625 Bensheim (DE); DURMAZ, Erdal, 55234 Albig (DE); POETSCH, Eike, 64367 Mühltal (DE); REIFFENRATH, Volker, 64380 Rossdorf (DE); HECKMEIER, Michael, 69502 Hemsbach (DE)
(86) Internationale Anmeldenummer: PCT/EP2004/006777
(87) Internationale Veröffentlichungsnummer: WO 2005/007775

(56) Entgegenhaltungen:
- EP-A- 0 132 377
- WO-A-87/07890
- WO-A-89/03821
- WO-A-91/15555
- WO-A-95/33802
- GB-A- 2 198 743
- GB-A- 2 200 912
- GB-A- 2 367 058
- PATENT ABSTRACTS OF JAPAN Bd. 017, Nr. 079 (C-1027), 17. Februar 1993 (1993-02-17) -& JP 04 279695 A (DAINIPPON INK & CHEM INC), 5. Oktober 1992 (1992-10-05)
- CHAN, L. K. M. ET AL: "Synthesis and evaluation of some 4,4''-disubstituted lateral fluoro-1,1':4',1''-terphenyls" MOLECULAR CRYSTALS AND LIQUID CRYSTALS ; ISSN: 0026-8941, Bd. 123, 1985, Seiten 185-204, XP009038157
- CHAN, L.K.M. ET AL.: "Reentrant nematic and injected smectic behaviour in binary mictures including those of terminally non-polar compounds" MOL. CRYST. LIQ. CRYST., Bd. 150, 1987, Seiten 335-359, XP009038155
- CHAN, L. K. M. ET AL: "Synthesis and liquid crystal behaviour of further 4,4"-disubstituted 2'-fluoro-1,1':4',1"-terphenyls" MOLECULAR CRYSTALS AND LIQUID CRYSTALS ; ISSN: 0026-8941, Bd. 158, 1988, Seiten 209-240, XP000005279
- GRAY, G. W. ET AL: "The synthesis of several lateral difluoro-substituted 4,4"-dialkyl- and 4,4"-alkoxyalkyl-terphenyls and a rationalisation of the effect of such substitution on mesophase type and transition temperatures" MOLECULAR CRYSTALS AND LIQUID CRYSTALS; ISSN: 0026-8941, Bd. 204, 1991, Seiten 43-64, XP000236763
- HIRD M ET AL: "THE SYNTHESIS AND TRANSITION TEMPERATURES OF SOME LATERAL CYANO-SUBSTITUTED 1,1':4',1''-TERPHENYLS" MOLECULAR CRYSTALS AND LIQUID CRYSTALS, Bd. 206, 1991, Seiten 205-221, XP000236824
- XU, J. ET AL: "LIQUID CRYSTAL SYSTEM AS MOLECULAR MACHINERY: INVESTIGATION OF DYNAMIC IMPEDANCE MATCHING BETWEEN MOLECULAR CORE AND TERMINAL GROUPS USING ROTOR-BEARING MODEL" JAPANESE JOURNAL OF APPLIED PHYSICS, Bd. 39, Nr. 4A, PART 1, 2000, Seiten 1801-1807, XP001014936 ISSN: 0021-4922
- REIFFENRATH, V. ET AL.: "Synthesis and properties of liquid crystalline materials with high optical anisotropy" SPIE LIQUID CRYSTAL DISPLAY AND APPLICATIONS, Bd. 1257, 1990, Seiten 84-94, XP009038208

## Beschreibung

Die vorliegende Erfindung betrifft ein flüssigkristallines Medium, dessen Verwendung für elektrooptische Zwecke sowie elektrooptische Anzeigevorrichtungen, die dieses Medium enthalten.

Flüssigkristalle werden vor allem als Dielektrika in Anzeigevorrichtungen verwendet, da die optischen Eigenschaften solcher Substanzen durch eine angelegte Spannung beeinflusst werden können. Elektrooptische Vorrichtungen auf der Basis von Flüssigkristallen sind dem Fachmann bestens bekannt und können auf verschiedenen Effekten beruhen. Derartige Vorrichtungen sind beispielsweise Zellen mit dynamischer Streuung, DAP-Zellen (Deformation aufgerichteter Phasen), Gast/Wirt-Zellen, TN-Zellen mit verdrillt nematischer ("twisted nematic") Struktur, STN-Zellen ("supertwisted nematic"), SBE-Zellen ("superbirefringence effect") und OMI-Zellen ("optical mode interterence"). Die gebräuchlichsten Anzeigevorrichtungen beruhen auf dem Schadt-Helfrich-Effekt und besitzen eine verdrillt, nematische Struktur.

Die Flüssigkristallmaterialien müssen eine gute chemische und thermische Stabilität und eine gute Stabilität gegenüber elektrischen Feldern und elektromagnetischer Strahlung besitzen. Ferner sollten die Flüssigkristallmaterialien eine niedrige Viskosität aufweisen und in den Zellen kurze Ansprechzeiten, tiefe Schwellenspannungen und einen hohen Kontrast ergeben.

Weiterhin sollten sie bei üblichen Betriebstemperaturen, d.h. in einem möglichst breiten Bereich unterhalb und oberhalb der Raumtemperatur eine geeignete Mesophase besitzen, beispielsweise für die oben genannten Zellen eine nematische oder cholesterische Mesophase. Da Flüssigkristalle in der Regel als Mischungen mehrerer Komponenten zur Anwendung gelangen, ist es wichtig, dass die Komponenten untereinander gut mischbar sind. Weitere Eigenschaften, wie die elektrische Leitfähigkeit, die dielektrische Anisotropie und die optische Anisotropie, müssen je nach Zellentyp und Anwendungsgebiet unterschiedlichen Anforderungen genügen. Beispielsweise sollten Materialien für Zellen mit verdrillt nematischer Struktur eine positive dielektrische Anisotropie und eine geringe elektrische Leitfähigkeit aufweisen.

Für Matrix-Flüssigkristallanzeigen mit integrierten nicht-linearen Elementen zur Schaltung einzelner Bildpunkte (MFK-Anzeigen) sind beispielsweise Medien mit großer positiver dielektrischer Anisotropie, breiten nematischen Phasen, relativ niedriger Doppelbrechung, sehr hohem spezifischem Widerstand, guter UV- und Temperaturstabilität sowie geringem Dampfdruck erwünscht.

Derartige Matrix-Flüssigkristallanzeigen sind bekannt. Als nicht-lineare Elemente zur individuellen Schaltung der einzelnen Bildpunkte können beispielsweise aktive Elemente (d.h. Transistoren) verwendet werden. Man spricht dann von einer "aktiven Matrix", wobei man zwei Typen unterscheidet:
1. MOS (Metal Oxide Semiconductor) oder andere Dioden auf Silizium-Wafer als Substrat.
2. Dünnfilm-Transistoren (TFT) auf einer Glasplatte als Substrat.

Die Verwendung von einkristallinem Silizium als Substratmaterial beschränkt die Displaygröße, da auch die modulartige Zusammensetzung verschiedener Teildisplays an den Stößen zu Problemen führt.

Bei dem aussichtsreicheren Typ 2, der bevorzugt ist, wird als elektrooptischer Effekt üblicherweise der TN-Effekt verwendet. Man unterscheidet zwei Technologien: TFT's aus Verbindungshalbleitern, wie z. B. CdSe, oder TFT's auf der Basis von polykristallinem oder amorphem Silizium. An letzterer Technologie wird weltweit mit großer Intensität gearbeitet.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, dass je ein Filterelement einem schaltbaren Bildelement gegenüber liegt.

Die TFT-Anzeigen arbeiten üblicherweise als TN-Zellen mit gekreuzten Polarisatoren in Transmission und sind von hinten beleuchtet.

Der Begriff MFK-Anzeigen umfasst hier jedes Matrix-Display mit integrierten, nicht-linearen Elementen, d.h. neben der aktiven Matrix auch Anzeigen mit passiven Elementen wie Varistoren oder Dioden (MIM = Metall-Isolator-Metall).

Derartige MFK-Anzeigen eignen sich insbesondere für TV-Anwendungen (z.B. Taschenfernseher) und für hochinformative Displays für Rechneranwendungen (z.B. Laptop) sowie im Automobil- und Flugzeugbau. Neben Problemen hinsichtlich der Winkelabhängigkeit des Kontrastes und der Schaltzeiten resultieren bei MFK-Anzeigen Schwierigkeiten bedingt durch einen nicht ausreichend hohen spezifischen Widerstand der Flüssigkristallmischungen [TOGASHI, S., SEKIGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Addressing of Television Liquid Crystal Displays, p. 145 ff, Paris]. Mit abnehmendem Widerstand verschlechtert sich der Kontrast einer MFK-Anzeige und es kann das Problem der "after image elimination" auftreten. Da der spezifische Widerstand der Flüssigkristallmischung durch Wechselwirkung mit den inneren Oberflächen der Anzeige im allgemeinen über die Lebenszeit einer MFK-Anzeige abnimmt, ist ein hoher (Anfangs)-Widerstand sehr wichtig, um akzeptable Standzeiten zu erreichen. Insbesondere bei lowvolt-Mischungen war es bisher nicht möglich, sehr hohe spezifische Widerstände zu realisieren. Weiterhin ist es wichtig, dass der spezifische Widerstand eine möglichst geringe Zunahme bei steigender Temperatur sowie nach Temperatur- und/oder UV-Belastung zeigt. Besonders nachteilig sind auch die Tieftemperatureigenschaften der Mischungen des Standes der Technik. Gefordert wird, dass auch bei tiefen Temperaturen keine Kristallisation und/oder smektische Phasen auftreten und die Temperaturabhängigkeit der Viskosität möglichst gering ist. Die bekannten MFK-Anzeigen genügen diesen Anforderungen nicht.

Es besteht somit immer noch ein großer Bedarf an MFK-Anzeigen mit sehr hohem spezifischem Widerstand bei gleichzeitig großem Arbeitstemperaturbereich, kurzen Schaltzeiten auch bei tiefen Temperaturen und niedriger Schwellenspannung, die die genannten Nachteile nicht oder nur in geringerem Maße zeigen.

Neben Flüssigkristallanzeigen, die eine Hintergrundbeleuchtung verwenden, also transmissiv und gegebenenfalls transflektiv betrieben werden, sind besonders auch reflektive Flüssigkristallanzeigen interessant. Diese reflektiven Flüssigkristallanzeigen benutzen das Umgebungslicht zur Informationsdarstellung. Somit verbrauchen sie wesentlich weniger Energie als hintergrundbeleuchtete Flüssigkristallanzeigen mit entsprechender Größe und Auflösung. Da der TN-Effekt durch einen sehr guten Kontrast gekennzeichnet ist, sind derartige reflektive Anzeigen auch bei hellen Umgebungsverhältnissen noch gut abzulesen. Dies ist bereits von einfachen reflektiven TN-Anzeigen, wie sie z.B. in Armbanduhren und Taschenrechnern verwendet werden, bekannt. Jedoch ist das Prinzip auch auf hochwertige, höher auflösende Aktiv-Matrix angesteuerte Anzeigen wie z.B. TFT-Displays anwendbar. Hier ist, wie bereits bei den allgemein üblichen transmissiven TFT-TN-Anzeigen, die Verwendung von Flüssigkristallen mit niedriger Doppelbrechung (Δn) nötig, um eine geringe optische Verzögerung (d · Δn) zu erreichen. Diese geringe optische Verzögerung führt zu einer meist akzeptablen geringen Blickwinkelabhängigkeit des Kontrastes (vgl. DE-PS 30 22 818). Bei reflektiven Anzeigen ist die Verwendung von Flüssigkristallen mit kleiner Doppelbrechung noch wichtiger als bei transmissiven Anzeigen, da bei reflektiven Anzeigen die effektive Schichtdicke, die das Licht durchquert, ungefähr doppelt so groß ist wie bei transmissiven Anzeigen mit derselben Schichtdicke.

Die Vorteile von reflektiven Anzeigen gegenüber transmissiven Anzeigen sind neben dem geringeren Leistungsverbrauch (da keine Hintergrundbeleuchtung nötig ist) die Platzersparnis, die zu einer sehr geringen Bautiefe führt und die Verminderung von Problemen durch Temperaturgradienten durch unterschiedliche Aufheizung durch die Hintergrundbeleuchtung.

Bei TN-(Schadt-Helfrich)-Zellen sind Medien erwünscht, die folgende Vorteile in den Zellen ermöglichen:
- erweiterter nematischer Phasenbereich (insbesondere bei tiefen Temperaturen),
- Schaltbarkeit bei extrem tiefen Temperaturen (out-door-use, Automobil, Avionik),
- erhöhte Beständigkeit gegenüber UV-Strahlung (längere Lebensdauer),
- kleine Rotationsviskositäten,
- niedere Schwellen-(Ansteuer-)spannung und
- hohe Doppelbrechung für dünnere Schichtdicken und damit kürzere Schaltzeiten.

Mit den aus dem Stand der Technik zur Verfügung stehenden Medien ist es nicht möglich, diese Vorteile unter gleichzeitigem Erhalt der übrigen Parameter zu realisieren.

Bei höher verdrillten Zellen (STN) sind Medien erwünscht, die eine höhere Multiplexierbarkeit und/oder kleinere Schwellenspannungen und/oder breitere nematische Phasenbereiche (insbesondere bei tiefen Temperaturen) ermöglichen. Hierzu ist eine weitere Ausdehnung des zur Verfügung stehenden Parameterraumes (Klärpunkt, Übergang smektisch-nematisch bzw. Schmelzpunkt, Viskosität, dielektrische Größen, elastische Größen) dringend erwünscht.

Darüber hinaus geht der Trend bei Monitor- und TV-Anwendungen zu immer schnelleren Schaltzeiten. Von Seiten der Displayhersteller wird die Schaltzeit durch die Verwendung von Displays mit kleinerer Schichtdicke reduziert. Bei konstanter optischer Weglänge d · Δn werden hierfür Flüssigkristallmischungen mit größerem Δn benötigt. Darüber hinaus führt die Verwendung von Flüssigkristallmischungen mit kleiner Rotationsviskosität ebenfalls zu einer Verkürzung der Schaltzeiten.

Der vorliegenden Erfindung lag somit die Aufgabe zugrunde, Medien für derartige MFK-, TN- oder STN-Anzeigen, vorzugsweise für MFK- und TN-Anzeigen und besonders bevorzugt für transmissive TN-Anzeigen, bereitzustellen, die die oben angegebenen Nachteile nicht oder nur in geringerem Maße, und vorzugsweise gleichzeitig sehr niedrige Rotationsviskositäten γ₁ sowie relativ hohe optische Anisotropien Δn aufweisen. Die erfindungsgemäßen Mischungen sollten vorzugsweise in transmissiven Anwendungen ihren Einsatz finden.

Es wurde nun gefunden, dass diese Aufgaben gelöst werden können, wenn man in Anzeigen die erfindungsgemäßen Medien verwendet.

Gegenstand der vorliegenden Erfindung ist somit ein flüssigkristallines Medium auf der Basis eines Gemisches von polaren Verbindungen mit positiver oder negativer dielektrischer Anisotropie, das dadurch gekennzeichnet ist, dass es eine oder mehrere Verbindungen der allgemeinen Formel I 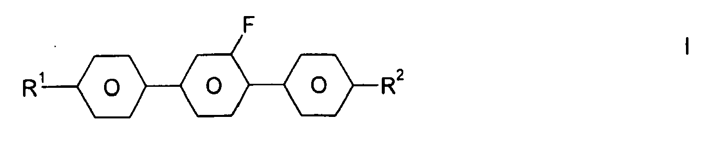 enthält,
worin
- R¹ und R²: jeweils unabhängig voneinander, gleich oder verschieden, H oder einen unsubstituierten Alkylrest mit 1 bis 12 C-Atomen bedeuten, wobei in diesen Resten auch eine oder mehrere CH₂-Gruppen jeweils unabhängig voneinander durch -CH=CH- oder -C≡C- ersetzt sein können,
und
dass es eine oder mehrere Verbindungen ausgewählt aus der Gruppe bestehend aus Verbindungen der allgemeinen Formeln XI bis XVII enthält: 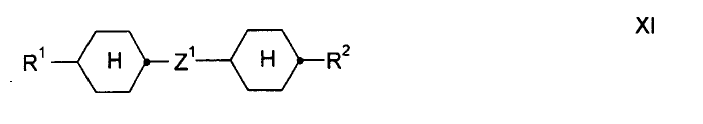 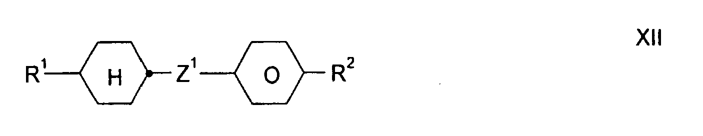 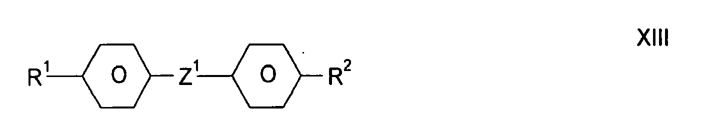 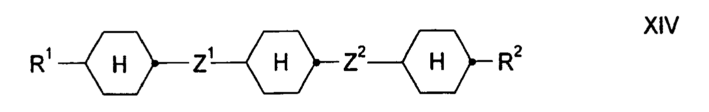 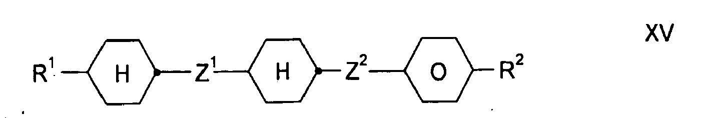 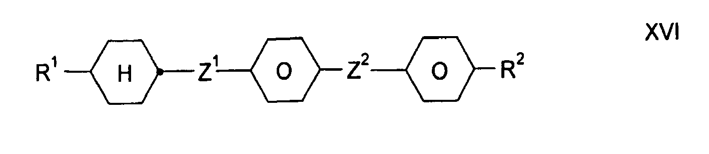 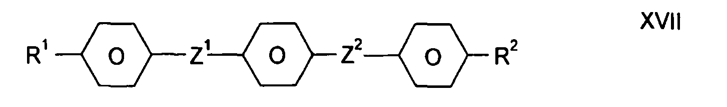 worin die einzelnen Reste die folgenden Bedeutungen haben:
- R¹, R²:: unabhängig voneinander, gleich oder verschieden n-Alkyl, n- Alkoxy oder Alkenyl mit jeweils bis zu 9 C-Atomen; und
- Z¹, Z²:: unabhängig voneinander, gleich oder verschieden eine Einfachbindung, -CF₂O-, -OCF₂-, -CH₂O-, -OCH₂-, -CH=CH-, -C₂H₄-, -C₂F₄-, -CH₂CF₂-, -CF₂CH₂- oder -C₄H₈-.

Die Verbindungen der Formel I besitzen einen breiten Anwendungsbereich. Entweder können diese Verbindungen als Basismaterialien dienen, aus denen flüssigkristalline Medien zum überwiegenden Teil zusammengesetzt sind, oder sie können flüssigkristallinen Basismaterialien aus anderen Verbindungsklassen zugesetzt werden, um beispielsweise die dielektrische und/oder optische Anisotropie eines solchen Dielektrikums zu beeinflussen und/oder um dessen Schwellenspannung und/oder dessen Viskosität zu optimieren.

Die Verbindungen der Formel I sind in reinem Zustand farblos und bilden flüssigkristalline Mesophasen in einem für die elektrooptische Verwendung günstig gelegenen Temperaturbereich. Chemisch, thermisch und gegen Licht sind sie stabil.

Falls R¹ und/oder R² einen Alkylrest bedeutet, so kann dieser geradkettig oder verzweigt sein. Vorzugsweise ist er geradkettig, hat 1, 2, 3, 4, 5, 6, 7, 8 oder 9 C-Atome und bedeutet demnach vorzugsweise Methyl, Ethyl, Propyl, Butyl, Pentyl, Hexyl, Heptyl, Octyl oder Nonyl, ferner Decyl, Undecyl oder Dodecyl. Gruppen mit 1 bis 5 Kohlenstoffatomen sind besonders bevorzugt.

Falls R¹ und/oder R² einen Alkylrest bedeutet, in dem eine CH₂-Gruppe durch -CH=CH- ersetzt ist, so kann dieser geradkettig oder verzweigt sein. Vorzugsweise ist er geradkettig und hat 2 bis 10 C-Atome. Er bedeutet demnach besonders bevorzugt Vinyl, Prop-1- oder Prop-2-enyl, But-1-, 2- oder But-3-enyl, Pent-1-, 2-, 3- oder Pent-4-enyl, Hex-1-, 2-, 3-, 4- oder Hex-5-enyl, Hept-1-, 2-, 3-, 4-, 5- oder Hept-6-enyl, Oct-1-, 2-, 3-, 4-, 5-, 6- oder Oct-7-enyl, Non-1-, 2-, 3-, 4-, 5-, 6-, 7- oder Non-8-enyl, Dec-1-, 2-, 3-, 4-, 5-, 6-, 7-, 8- oder Dec-9-enyl.

Verbindungen der Formel I, die über für Polymerisationsreaktionen geeignete Flügelgruppen R¹ und/oder R² verfügen, eignen sich zur Herstellung von flüssigkristallinen Polymeren.

Verbindungen der Formel I mit verzweigten Flügelgruppen R¹ und/oder R² können gelegentlich wegen einer besseren Löslichkeit in den üblichen flüssigkristallinen Basismaterialien von Bedeutung sein, insbesondere aber als chirale Dotierstoffe, wenn sie optisch aktiv sind. Smektische Verbindungen dieser Art eignen sich als Komponenten für ferroelektrische Materialien.

Verbindungen der Formel I mit S_{A}-Phasen eignen sich beispielsweise für thermisch adressierte Displays.

Verzweigte Gruppen dieser Art enthalten vorzugsweise nicht mehr als eine Kettenverzweigung. Bevorzugte verzweigte Reste R¹ und/oder R² sind Isopropyl, 2-Butyl (= 1-Methylpropyl), Isobutyl (= 2-Methylpropyl), 2-Methylbutyl, Isopentyl (= 3-Methylbutyl), 2-Methylpentyl, 3-Methylpentyl, 2-Ethylhexyl, 2-Propylpentyl, Isopropoxy, 2-Methylpropoxy, 2-Methylbutoxy, 3-Methylbutoxy, 2-Methylpentoxy, 3-Methylpentoxy, 2-Ethylhexoxy, 1-Methylhexoxy oder 1-Methylheptoxy.

Vorzugsweise bedeuten R¹ und/oder R² unabhängig voneinander, gleich oder verschieden, H, einen geradkettigen Alkylrest mit 1 bis 9 C-Atomen oder einen geradkettigen Alkenylrest mit 2 bis 9 C-Atomen.

Die Verbindungen der Formel I sind folglich vorzugsweise ausgewählt aus der Gruppe der Verbindungen der folgenden Unterformeln Ia bis Id, wobei Unterformel Ia besonders bevorzugt ist: 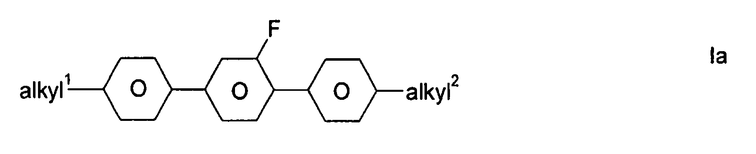 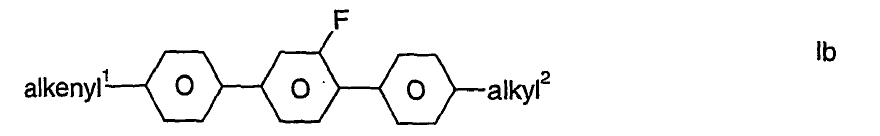 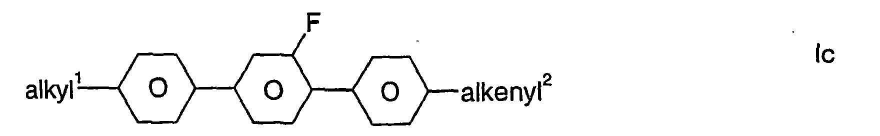 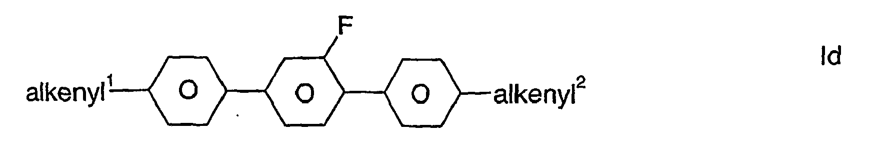 wobei in den Formeln Ia bis Id der Ausdruck "alkyl¹" und "alkyl²" jeweils unabhängig voneinander, gleich oder verschieden, ein Wasserstoffatom oder einen Alkylrest mit 1 bis 9 C-Atomen, vorzugsweise einen geradkettigen Alkylrest mit 1 bis 5 C-Atomen, und der Ausdruck "alkenyl¹" und "alkenyl²" jeweils unabhängig voneinander, gleich oder verschieden, einen Alkenylrest mit 2 bis 9 C-Atomen, vorzugsweise einen geradkettigen Alkenylrest mit 2 bis 5 C-Atomen, bedeuten.

Die Verbindungen der Formel I sind folglich besonders bevorzugt ausgewählt aus der Gruppe der Verbindungen der folgenden Unterformeln I1 bis I25:

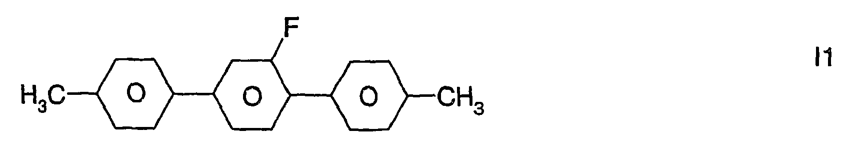

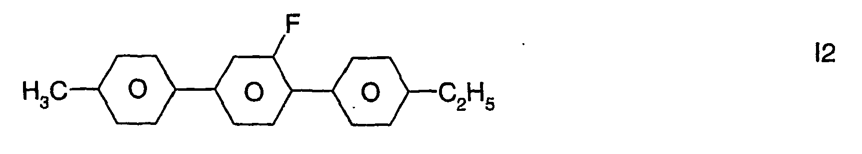

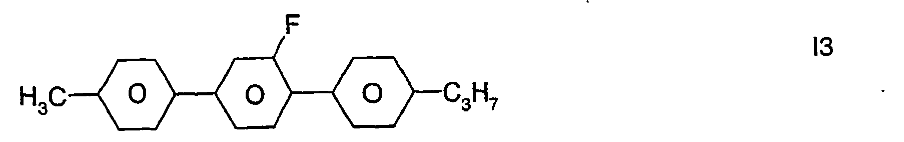

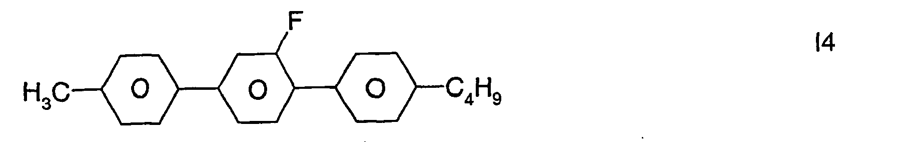

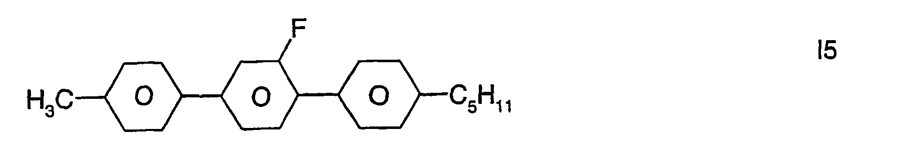

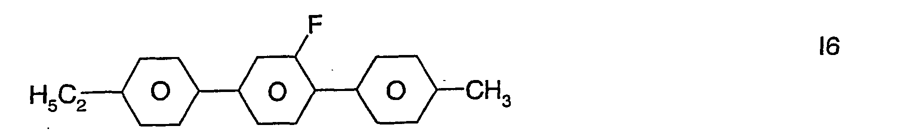

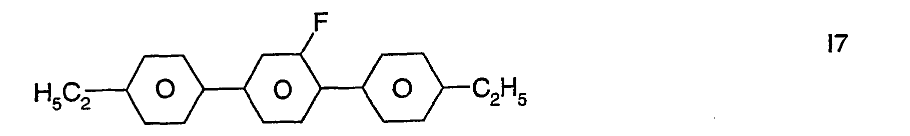

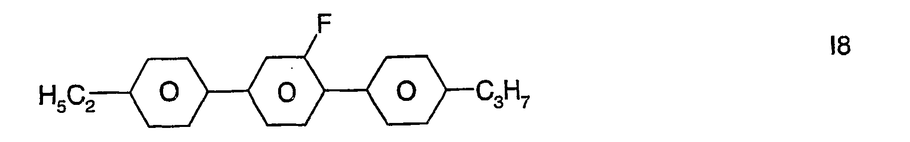

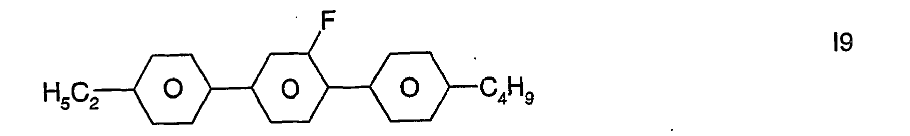

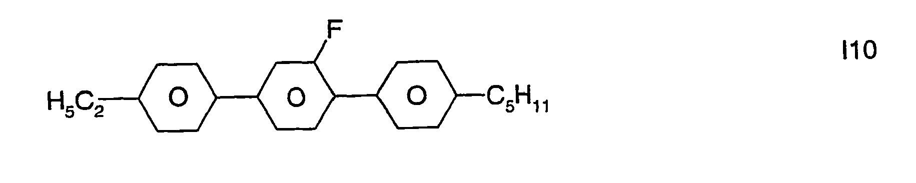

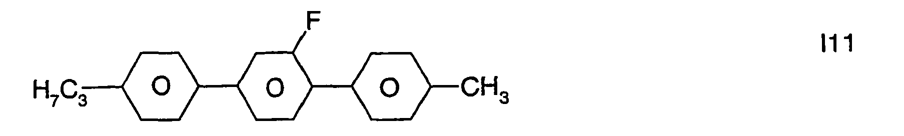

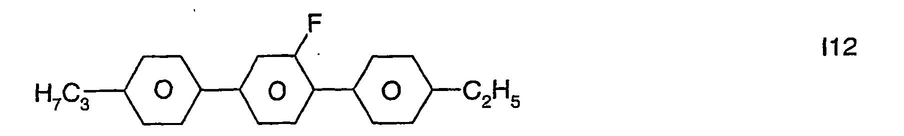

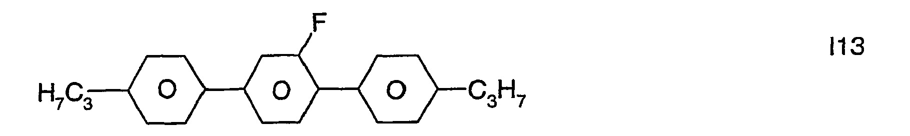

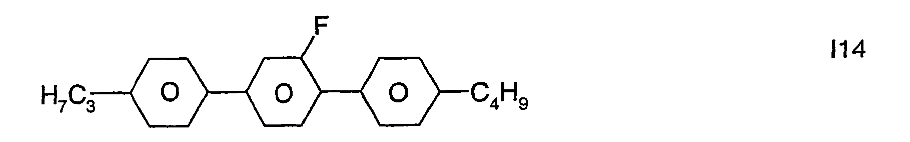

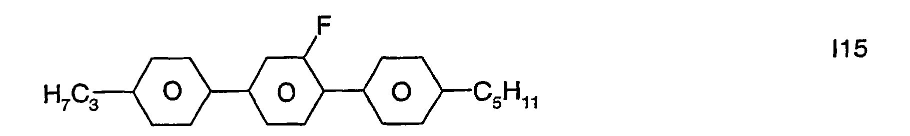

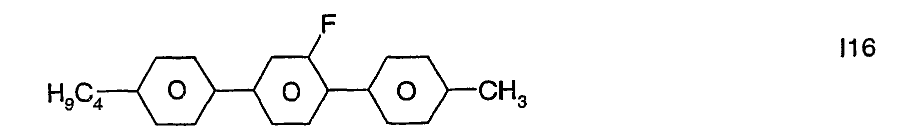

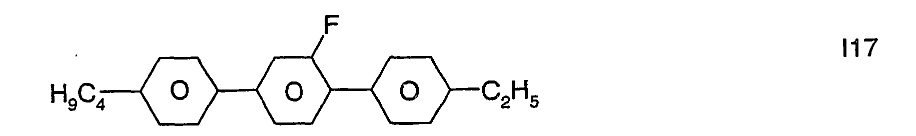

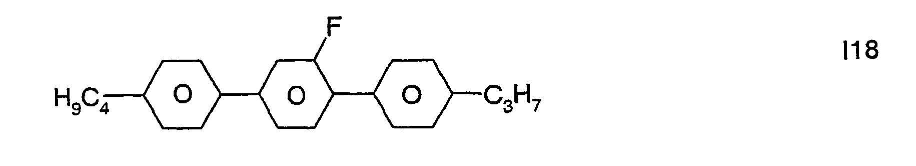

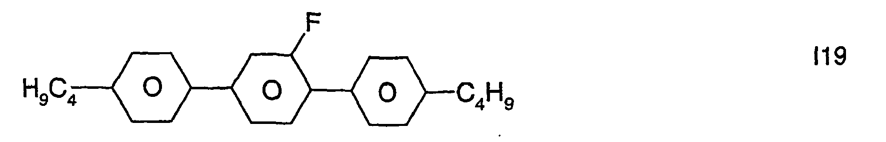

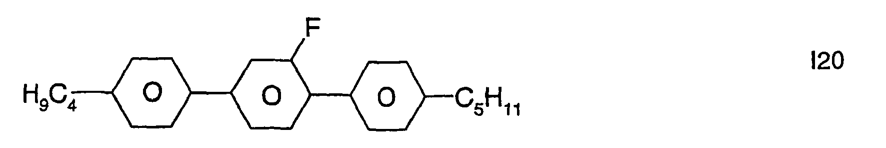

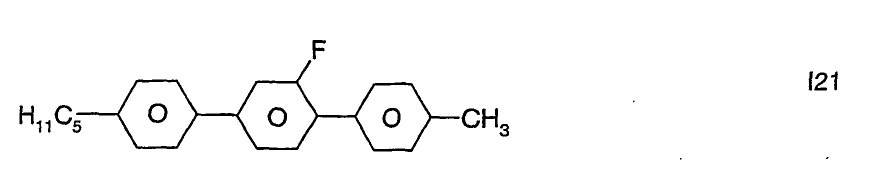

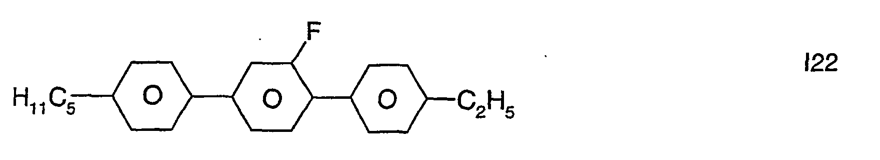

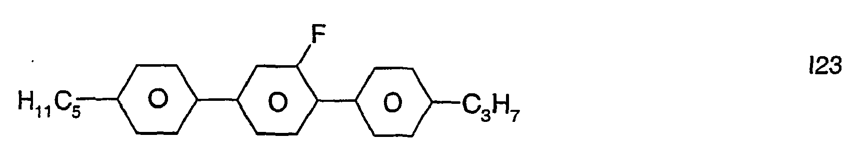

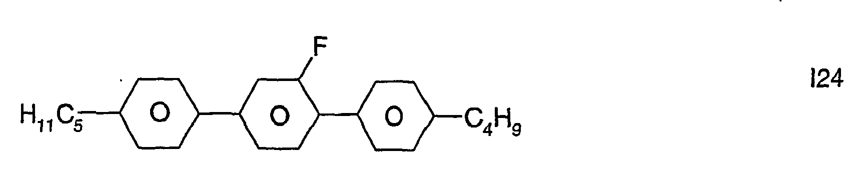

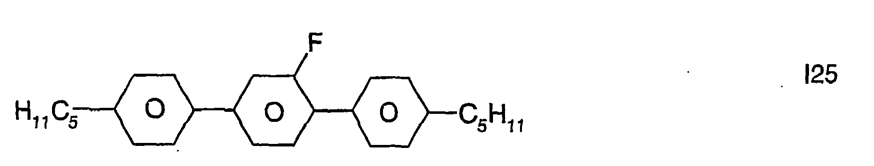

Besonders bevorzugt aus der Gruppe der Verbindungen der Unterformeln I1 bis I25 sind dabei die Verbindungen, bei denen die Summe der Kohlenstoff-Atome der beiden Alkylgruppen im Bereich von 4 bis 6 liegt.

Dies sind die Verbindungen I3 bis 15, 17 bis 19, I11 bis 113,116,117 und 121. Insbesondere bevorzugt sind dabei die Unterformeln I8, I9, I12 und I13.

Das flüssigkristalline Medium enthält besonders bevorzugt eine, zwei oder drei Verbindungen der Formel I.

Der Anteil an Verbindungen der Formel I im Gesamtgemisch beträgt 1 bis 60 Gew.-%, vorzugsweise 3 bis 50 Gew.-% und besonders bevorzugt entweder 3 bis 12 Gew.-% (Ausführungsform A) oder 15 bis 50 Gew.-% (Ausführungsform B).

Die Verbindungen der Formel I werden nach an sich bekannten Methoden hergestellt, wie sie in der Literatur (z.B. in den Standardwerken wie Houben-Weyl, Methoden der Organischen Chemie, Georg-Thieme-Verlag, Stuttgart) beschrieben sind, und zwar unter Reaktionsbedingungen, die für die genannten Umsetzungen bekannt und geeignet sind. Dabei kann man auch von an sich bekannten, hier nicht näher erwähnten Varianten Gebrauch machen.

Vorzugsweise werden die Verbindungen der Formel I hergestellt, wie in der EP 0 132 377 A2 beschrieben.

Gegenstand der vorliegenden Erfindung sind auch elektrooptische Anzeigevorrichtungen (insbesondere STN- oder MFK-Anzeigen mit zwei planparallelen Trägerplatten, die mit einer Umrandung eine Zelle bilden, integrierten nicht-linearen Elementen zur Schaltung einzelner Bildpunkte auf den Trägerplatten und einer in der Zelle befindlichen nematischen Flüssigkristallmischung mit positiver dielektrischer Anisotropie und hohem spezifischem Widerstand), die die erfindungsgemäßen Medien enthalten, sowie die Verwendung dieser Medien für elektrooptische Zwecke. Die erfindungsgemäßen Mischungen sind neben reflektiven Anwendungen ebenfalls für IPS-Anwendungen ("In Plane Switching") und OCB-Anwendungen ("Optically controlled birefringence") geeignet.

Die erfindungsgemäßen Flüssigkristallmischungen ermöglichen eine bedeutende Erweiterung des zur Verfügung stehenden Parameterraumes.

Die erzielbaren Kombinationen aus Rotationsviskosität γ₁ und optischer Anisotropie Δn übertreffen bei weitem bisherige Materialien aus dem Stand der Technik.

Die Forderung nach hohem Klärpunkt, nematischer Phase bei tiefer Temperatur, niedriger Rotationsviskosität γ₁, sowie einem hohen Δn konnte bislang nur unzureichend erfüllt werden. Systeme wie z.B. die von Merck kommerziell erhältliche Mischung des Vergleichsbeispiels 2, weisen zwar ähnliche Eigenschaften wie die erfindungsgemäßen Mischungen auf, besitzen aber deutlich schlechtere Werte für die Rotationsviskosität γ₁.

Andere Mischungssysteme, wie z.B. die von Merck kommerziell erhältliche Mischung des Vergleichsbeispiels 1, besitzen vergleichbare Rotationsviskositäten γ₁, weisen jedoch deutlich schlechtere Werte für die optische Anisotropie Δn auf.

Die erfindungsgemäßen Flüssigkristallmischungen ermöglichen es bei Beibehaltung der nematischen Phase bis -20°C, vorzugsweise bis -30°C, und besonders bevorzugt bis -40°C, Klärpunkte oberhalb 65°C, vorzugsweise oberhalb 70°C, und besonders bevorzugt oberhalb 75°C, gleichzeitig dielektrische Anisotropiewerte Dε ≥ 4, vorzugsweises ≥ 4,5 und einen hohen Wert für den spezifischen Widerstand zu erreichen, wodurch hervorragende STN- und MFK-Anzeigen erzielt werden können. Insbesondere sind die Mischungen durch kleine Operationsspannungen gekennzeichnet. Die TN-Schwellen liegen unterhalb von 2,0 V, vorzugsweise unterhalb von 1,9 V, und besonders bevorzugt unterhalb von 1,8 V.

Die erfindungsgemäßen Flüssigkristallmischungen weisen optische Anisotropien Δn auf, die im Falle der Ausführungsform A vorzugsweise ≤ 0,100 und besonders bevorzugt ≤ 0,095 sind. Im Falle der Ausführungsform B sind die optischen Anisotropien vorzugsweise ≥ 0,160, besonders bevorzugt ≥ 0,180 und insbesondere ≥ 0,200.

Es versteht sich, dass durch geeignete Wahl der Komponenten der erfindungsgemäßen Mischungen auch höhere Klärpunkte bei höheren Schwellenspannungen oder niedrigere Klärpunkte bei niedrigeren Schwellenspannungen unter Erhalt der anderen vorteilhaften Eigenschaften realisiert werden können. Ebenso können bei entsprechend wenig erhöhten Viskositäten Mischungen mit größerem Δε und somit geringeren Schwellen erhalten werden. Die erfindungsgemäßen MFK-Anzeigen arbeiten vorzugsweise im ersten Transmissionsminimum nach Gooch und Tarry [C.H. Gooch und H.A. Tarry, Electron. Lett. 10, 2-4, 1974; C.H. Gooch und H.A. Tarry, Appl. Phys., Vol. 8, 1575-1584, 1975], wobei hier besonders günstige elektrooptische Eigenschaften, wie z.B. hohe Steilheit der Kennlinie und geringe Winkelabhängigkeit des Kontrastes (DE-PS 30 22 818), erzielt werden. Darüber hinaus lassen sich unter Verwendung der erfindungsgemäßen Mischungen im ersten Minimum deutlich höhere spezifische Widerstände verwirklichen als bei Mischungen mit Cyanverbindungen. Der Fachmann kann durch geeignete Wahl der einzelnen Komponenten und deren Gewichtsanteilen mit einfachen Routinemethoden die für eine vorgegebene Schichtdicke der MFK-Anzeige erforderliche Doppelbrechung einstellen.

Die Rotationsviskosität γ₁ der erfindungsgemäßen Mischungen bei 20°C ist vorzugsweise ≤ 180 mPa·s, besonders bevorzugt ≤ 160 mPa·s. In einer speziellen Ausführungsform (Ausführungsform A) ist die Rotationsviskosität γ₁ besonders bevorzugt ≤ 80 mPa·s und insbesondere ≤ 70 mPa·s. Das Verhältnis γ₁ zu (Δn)² ist dabei vorzugsweise ≤ 8000, besonders bevorzugt ≤ 7000. In einer speziellen (Ausführungsform (Ausführungsform B) ist das Verhältnis besonders bevorzugt ≤ 5000 und insbesondere ≤ 4500. Der nematische Phasenbereich ist vorzugsweise mindestens 90°C, und erstreckt sich mindestens von -20° bis +70°C.

Messungen des "Capacity Holding-ratio" (HR) [S. Matsumoto et al., Liquid Crystals 5, 1320 (1989); K. Niwa et al., Proc. SID Conference, San Francisco, June 1984, p. 304 (1984); G. Weber et al., Liquid Crystals 5, 1381 (1989)] haben ergeben, dass erfindungsgemäße Mischungen enthaltend Verbindungen der Formel I eine deutlich kleinere Abnahme des HR mit steigender Temperatur aufweisen als analoge Mischungen enthaltend anstelle der erfindungsgemäßen Verbindungen der Formel I Cyanophenylcyclohexane der Formel 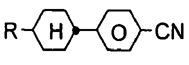 oder Ester der Formel

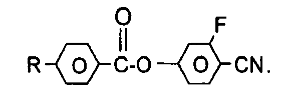

Auch die UV-Stabilität der erfindungsgemäßen Mischungen ist erheblich besser, d.h. sie zeigen eine deutlich kleinere Abnahme des HR unter UV-Belastung.

Neben mindestens einer Verbindung der Formel I enthält das erfindungsgemäße Medium eine oder mehrere Verbindungen ausgewählt aus der Gruppe bestehend aus Verbindungen der allgemeinen Formeln XI bis XVII und gegebenenfalls eine oder mehrere Verbindungen ausgewählt aus der Gruppe bestehend aus Verbindungen der allgemeinen Formeln II bis X: 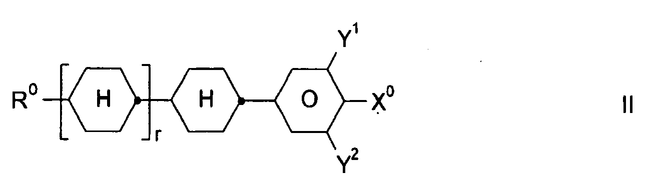 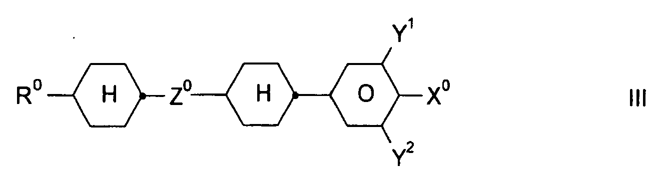 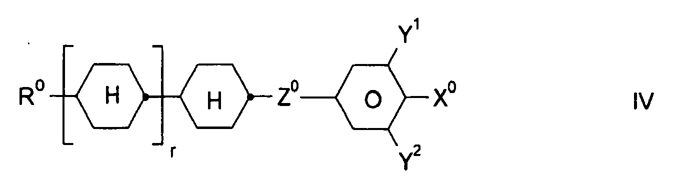 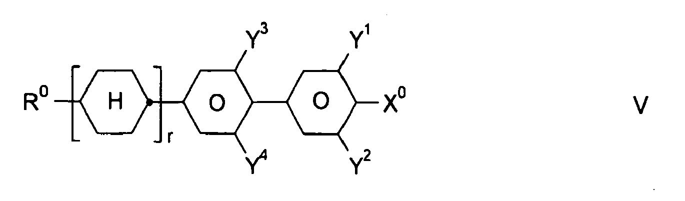 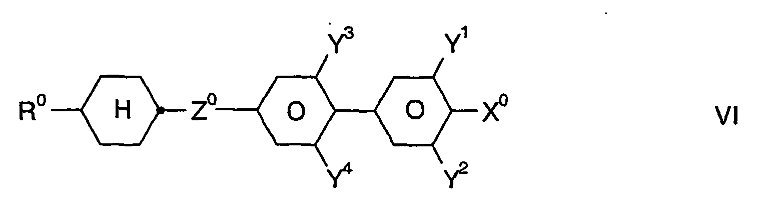 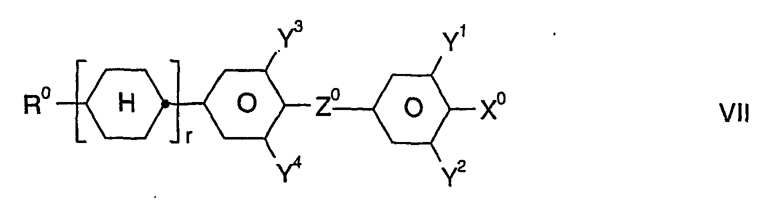 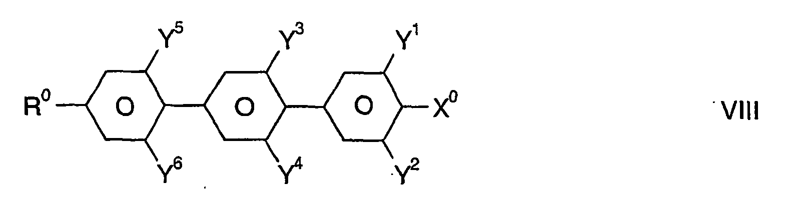 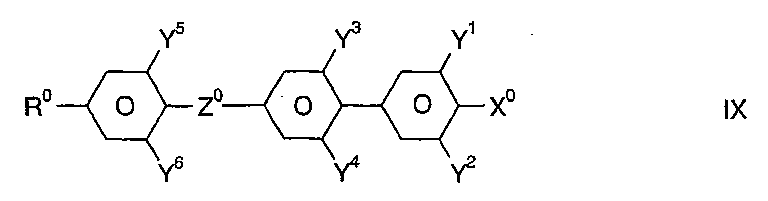 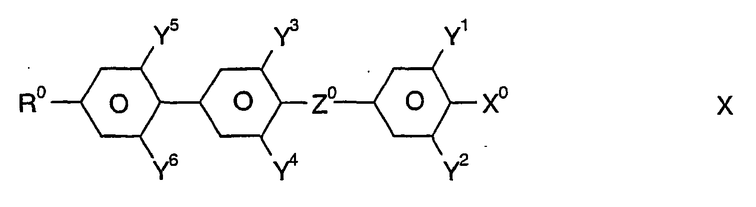 worin die einzelnen Reste die folgenden Bedeutungen haben:
- R⁰:: n-Alkyl, Oxaalkyl, Fluoralkyl oder Alkenyl mit jeweils bis zu 9 C-Atomen;
- X⁰:: F, Cl, halogeniertes Alkyl oder halogeniertes Alkoxy mit 1 bis 6 C-Atomen, bzw, halogeniertes Alkenyl mit 2 bis 6 C- Atomen;
- Z⁰:: -CF₂O-, -OCF₂-, -CH₂O-, -OCH₂-, -CO-O-, -O-CO-, -CH=CH-, -C₂H₄-, -C₂F₄-, -CH₂CF₂-, -CF₂CH₂- oder -C₄H₈-;
- Y¹, Y², Y³, Y⁴, Y⁵ und Y⁶:: jeweils unabhängig voneinander H oder F;
- r:: 0 oder 1, vorzugsweise 1.

Der Ausdruck "Alkyl" umfasst geradkettige und verzweigte Alkylgruppen mit 1 bis 9 Kohlenstoffatomen, vorzugsweise die geradkettigen Gruppen Methyl, Ethyl, Propyl, Butyl, Pentyl, Hexyl, Heptyl, Octyl und Nonyl. Gruppen mit 1 bis 5 Kohlenstoffatomen sind besonders bevorzugt.

Der Ausdruck "Alkenyl" umfasst geradkettige und verzweigte Alkenylgruppen mit 2 bis 9 Kohlenstoffatomen, vorzugsweise die geradkettigen Gruppen mit 2 bis 7 Kohlenstoffatomen. Bevorzugte Alkenylgruppen sind C₂-C₇-1E-Alkenyl, C₄-C₇-3E-Alkenyl, C₅-C₇-4-Alkenyl, C₆-C₇-5-Alkenyl und C₇-6-Alkenyl, insbesondere C₂-C₇-1 E-Alkenyl, C₄-C₇-3E-Alkenyl und C₅-C₇-4-Alkenyl. Beispiele bevorzugter Alkenylgruppen sind Vinyl, 1 E-Propenyl, 1 E-Butenyl, 1 E-Pentenyl, 1 E-Hexenyl, 1 E-Heptenyl, 3-Butenyl, 3E-Pentenyl, 3E-Hexenyl, 3E-Heptenyl, 4-Pentenyl, 4Z-Hexenyl, 4E-Hexenyl, 4Z-Heptenyl, 5-Hexenyl, 6-Heptenyl und dergleichen. Gruppen mit bis zu 5 Kohlenstoffatomen sind besonders bevorzugt.

Der Ausdruck "Fluoralkyl" umfasst vorzugsweise geradkettige Gruppen mit endständigem Fluor, d.h. Fluormethyl, 2-Fluorethyl, 3-Fluorpropyl, 4-Fluorbutyl, 5-Fluorpentyl, 6-Fluorhexyl und 7-Fluorheptyl. Andere Positionen des Fluors sind jedoch nicht ausgeschlossen.

Der Ausdruck "Oxaalkyl" umfasst vorzugsweise geradkettige Reste der Formel CₙH₂ₙ₊₁-O-(CH₂)ₘ, worin n und m jeweils unabhängig voneinander 1 bis 6 bedeuten. Vorzugsweise ist n = 1 und m = 1 bis 6.

In den Formeln II bis X ist 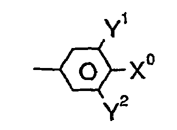 vorzugsweise

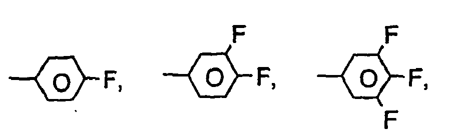

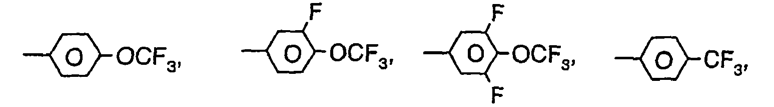

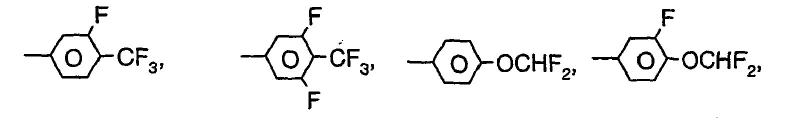

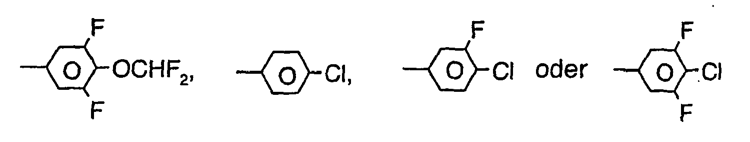

Die Verbindung der Formel II ist vorzugsweise 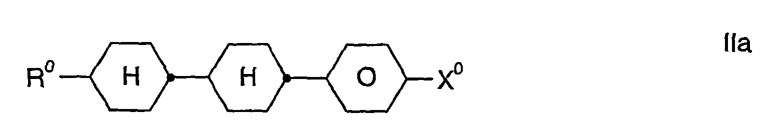 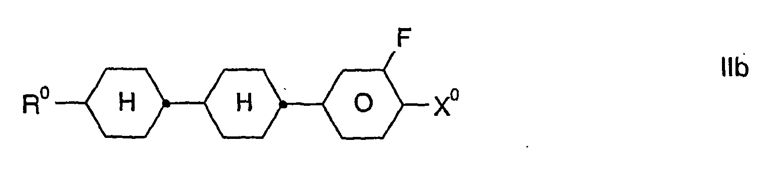 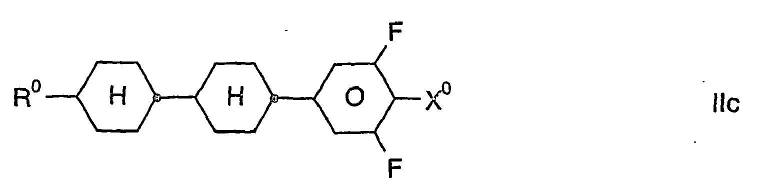 worin R⁰ und X⁰ die oben angegebenen Bedeutungen annehmen können. Vorzugsweise ist R⁰ jedoch n-Alkyl oder Alkenyl mit bis zu 9 C-Atomen, besonders bevorzugt n-Alkyl mit 1 bis 5 C-Atomen oder Alkenyl mit 2 bis 5 C-Atomen und X⁰ F, OCF₃, CF₃ oder OCHF₂.

Die Verbindung der Formel III ist vorzugsweise 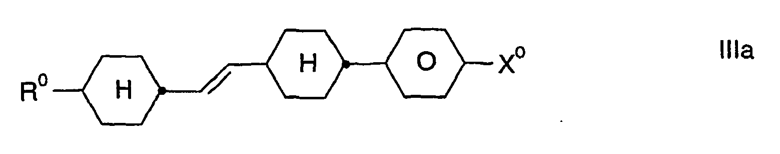 worin R⁰ und X⁰ die oben angegebenen Bedeutungen annehmen können. Vorzugsweise ist R⁰ jedoch n-Alkyl oder Alkenyl mit bis zu 9 C-Atomen, besonders bevorzugt n-Alkyl mit 1 bis 5 C-Atomen oder Alkenyl mit 2 bis 5 C-Atomen und X⁰ F, OCF₃, CF₃ oder OCHF₂.

Die Verbindung der Formel IV ist vorzugsweise 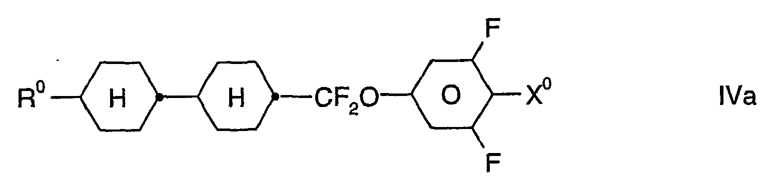 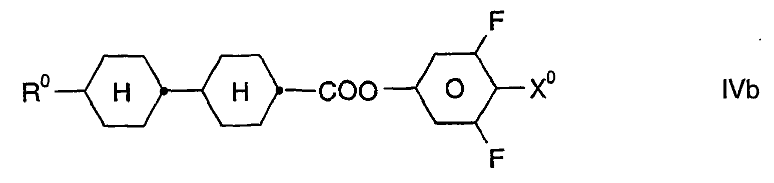 worin R⁰ und X⁰ die oben angegebenen Bedeutungen annehmen können. Vorzugsweise ist R⁰ jedoch n-Alkyl mit bis zu 9 C-Atomen, besonders bevorzugt n-Alkyl mit 1 bis 5 C-Atomen und X⁰ F, OCF₃, CF₃ oder OCHF₂, besonders bevorzugt F.

Die Verbindung der Formel V ist vorzugsweise 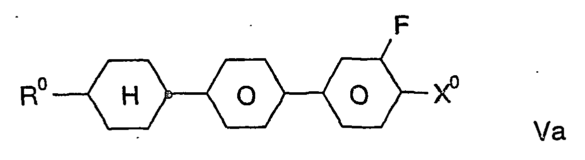 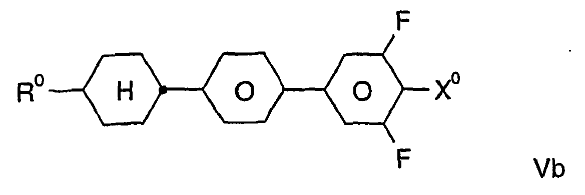 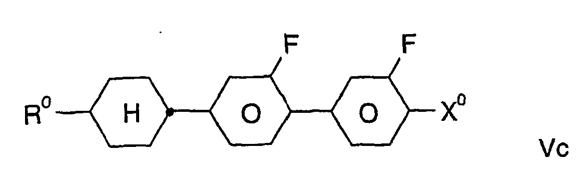 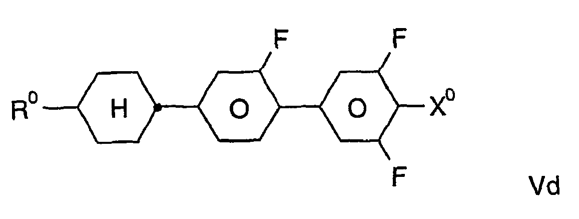 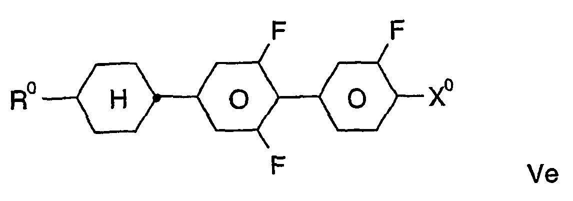 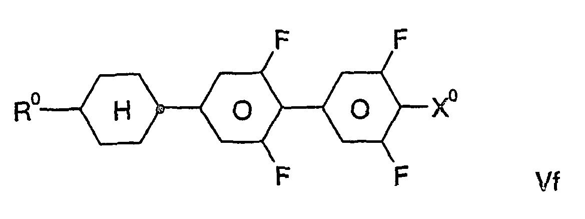 worin R⁰ und X⁰ die oben angegebenen Bedeutungen annehmen können. Vorzugsweise ist R⁰ jedoch n-Alkyl mit bis zu 9 C-Atomen, besonders bevorzugt n-Alkyl mit 1 bis 5 C-Atomen und X⁰ F, OCF₃, CF₃ oder OCHF₂, besonders bevorzugt F. Besonders bevorzugt ist Formel Vc.

Die Verbindung der Formel VII ist vorzugsweise 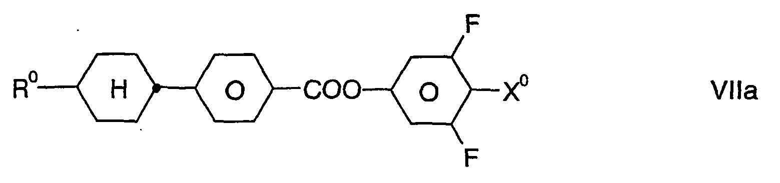 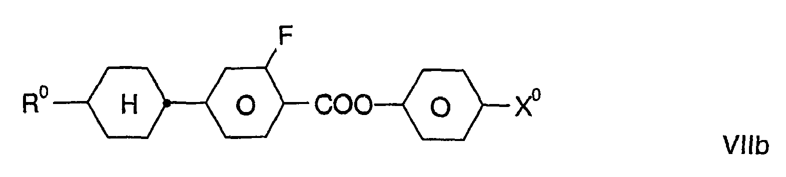 worin R⁰ und X⁰ die oben angegebenen Bedeutungen annehmen können. Vorzugsweise ist R⁰ jedoch n-Alkyl mit bis zu 9 C-Atomen, besonders bevorzugt n-Alkyl mit 1 bis 5 C-Atomen und X⁰ F, OCF₃, CF₃ oder OCHF₂.

Die Verbindung der Formel VIII ist vorzugsweise 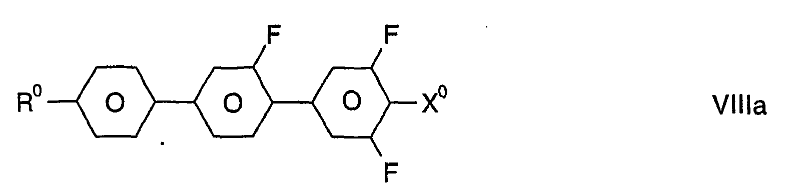 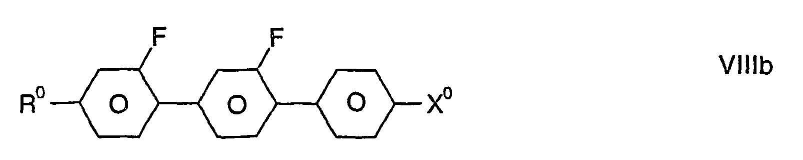 worin R⁰ und X⁰ die oben angegebenen Bedeutungen annehmen können. Vorzugsweise ist R⁰ jedoch n-Alkyl mit bis zu 9 C-Atomen, besonders bevorzugt n-Alkyl mit 1 bis 5 C-Atomen und X⁰ F, OCF₃, CF₃ oder OCHF₂, besonders bevorzugt F.

Die Verbindung der Formel X ist vorzugsweise 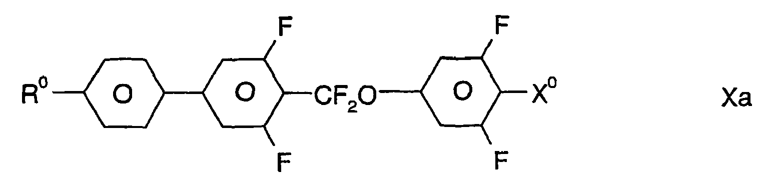 worin R⁰ und X⁰ die oben angegebenen Bedeutungen annehmen können. Vorzugsweise ist R⁰ jedoch n-Alkyl mit bis zu 9 C-Atomen, besonders bevorzugt n-Alkyl mit 1 bis 5 C-Atomen und X⁰ F, OCF₃, CF₃ oder OCHF₂, besonders bevorzugt F.

Besonders bevorzugte Ausführungsformen sind im folgenden angegeben.
- Das Medium enthält eine oder mehrere Verbindungen der Formeln II, III, IV, V, VI, VII, VIII, IX und/oder X, vorzugsweise eine oder mehrere Verbindungen der Formeln IIa, IIb, IIc, IIIa, IVa, IVb, Vc, VIIa, VIIb, VIIIa, VIIIb und/oder Xa.
- Der Anteil an Verbindungen der Formeln II bis X im Gesamtgemisch beträgt 20 bis 70 Gew.-%, vorzugsweise 30 bis 60 Gew.-% und besonders bevorzugt 35 bis 55 Gew.-%.
- Der Anteil an Verbindungen der Formeln I bis X im Gesamtgemisch beträgt zusammen mindestens 30 Gew.-%, vorzugsweise mindestens 40 Gew.-% und besonders bevorzugt mindestens 50 Gew.-%.
- Das Medium besteht im wesentlichen aus Verbindungen der Formeln I bis X.
- Das Gewichtsverhältnis I : (II + III + IV + V + VI + VII + VIII + IX + X) liegt vorzugsweise im Bereich von 1 : 10 bis 10 : 1.

Das optimale Mengenverhältnis der Verbindungen der Formeln I und II + III + IV + V + VI + VII + VIII + IX + X hängt weitgehend von den gewünschten Eigenschaften, von der Wahl der Komponenten der Formeln I, II, III, IV, V, VI, VII, VIII, IX und/oder X und von der Wahl weiterer gegebenenfalls vorhandener Komponenten ab. Geeignete Mengenverhältnisse innerhalb der oben angegebenen Bereiche können von Fall zu Fall leicht ermittelt werden.

Neben mindestens einer Verbindung der Formel I enthält das erfindungsgemäße Medium zusätzlich eine oder mehrere Verbindungen ausgewählt aus der Gruppe bestehend aus Verbindungen der allgemeinen Formeln XI bis XVII: 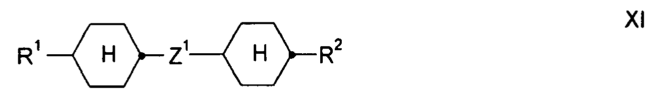 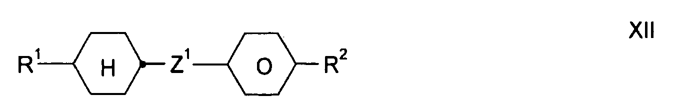 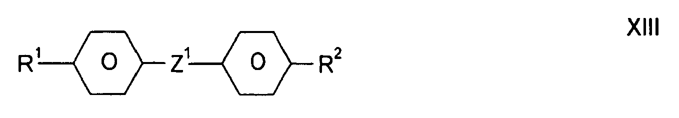 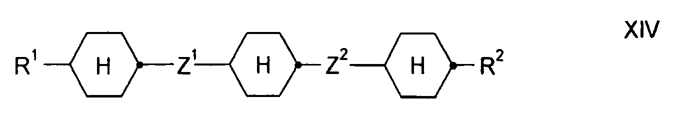 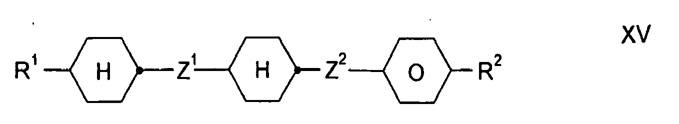 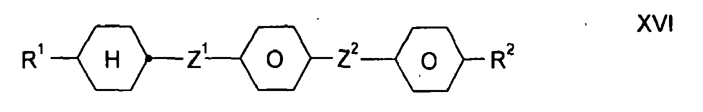 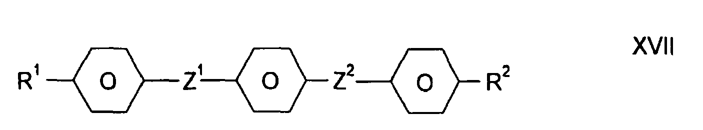 worin die einzelnen Reste die folgenden Bedeutungen haben:
- R¹, R²:: unabhängig voneinander, gleich oder verschieden n-Alkyl, n- Alkoxy oder Alkenyl mit jeweils bis zu 9 C-Atomen; und
- Z¹, Z²:: unabhängig voneinander, gleich oder verschieden eine Einfachbindung, -CF₂O-, -OCF₂-, -CH₂O-, -OCH₂-, -CH=CH-, -C₂H₄-, -C₂F₄-, -CH₂CF₂-, -CF₂CH₂- oder -C₄H₈-, vorzugsweise jeweils eine Einfachbindung.

Die Verbindung der Formel XI ist vorzugsweise 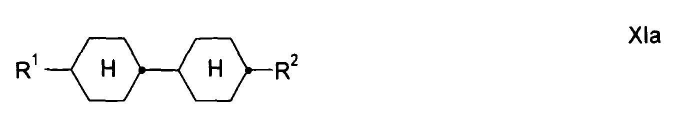 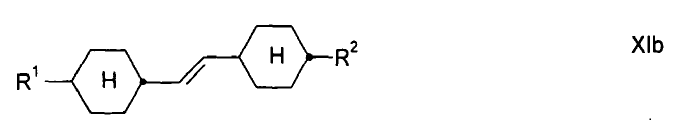 worin R¹ und R² die oben angegebenen Bedeutungen annehmen können. Vorzugsweise ist R¹ jedoch n-Alkyl oder Alkenyl mit bis zu 9 C-Atomen, besonders bevorzugt n-Alkyl mit 1 bis 5 C-Atomen oder Alkenyl mit 2 bis 5 C-Afomen und R² Alkenyl mit bis zu 9 C-Atomen, besonders bevorzugt Alkenyl mit 2 bis 5 C-Atomen.

Besonders bevorzugte Verbindungen der Formel XIa sind 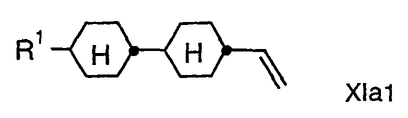 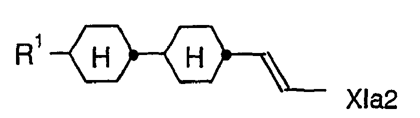 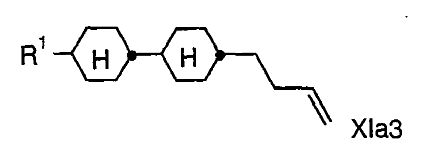 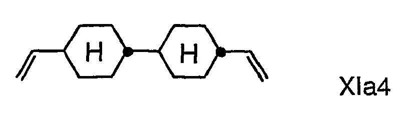 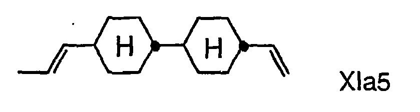 wobei R¹ die oben angegebenen Bedeutungen annehmen kann, vorzugsweise jedoch n-Alkyl mit 1 bis 5 C-Atomen ist.

Die Verbindungen der Formeln XIa1 und XIa2 sind insbesondere bevorzugt.

Die Verbindung der Formel XII ist vorzugsweise 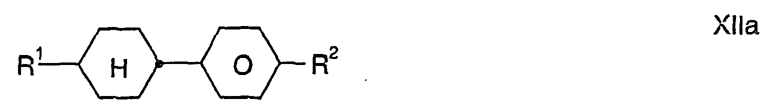 worin R¹ und R² die oben angegebenen Bedeutungen annehmen können. Vorzugsweise ist R¹ jedoch n-Alkyl mit bis zu 9 C-Atomen, besonders bevorzugt n-Alkyl mit 1 bis 5 C-Atomen und R² Alkoxy mit bis zu 9 C-Atomen, besonders bevorzugt Alkoxy mit 1 bis 5 C-Atomen.

Die Verbindung der Formel XIII ist vorzugsweise 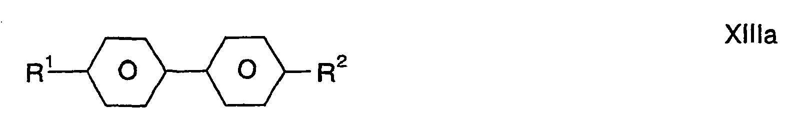 worin R¹ und R² die oben angegebenen Bedeutungen annehmen können. Vorzugsweise ist R¹ jedoch n-Alkyl mit bis zu 9 C-Atomen, besonders bevorzugt n-Alkyl mit 1 bis 5 C-Atomen und R² Alkenyl mit bis zu 9 C-Atomen, besonders bevorzugt Alkenyl mit 2 bis 5 C-Atomen.

Die Verbindung der Formel XV ist vorzugsweise 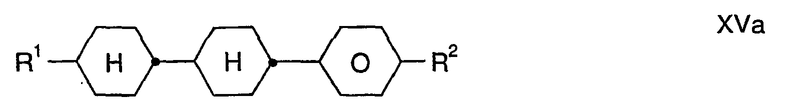 worin R¹ und R² die oben angegebenen Bedeutungen annehmen können. Vorzugsweise ist R¹ jedoch Alkenyl mit bis zu 9 C-Atomen, besonders bevorzugt Alkenyl mit 2 bis 5 C-Atomen und R² n-Alkyl mit bis zu 9 C-Atomen, besonders bevorzugt n-Alkyl mit 1 bis 5 C-Atomen.

Besonders bevorzugte Ausführungsformen sind im folgenden angegeben.
- Das Medium enthält eine oder mehrere Verbindungen der Formeln XI, XII, XIII, XIV, XV, XVI und/oder XVII, vorzugsweise eine oder mehrere Verbindungen der Formeln XIa, XIb, XIIa, XIIIa und/oder XVa.
- Der Anteil an Verbindungen der Formeln XI bis XVII im Gesamtgemisch beträgt 5 bis 70 Gew.-%, vorzugsweise 10 bis 60 Gew.-% und besonders bevorzugt entweder 10 bis 30 Gew.-% (Ausführungsform B) oder 35 bis 55 Gew.-% (Ausführungsform A).
- Der Anteil an Verbindungen der Formeln I bis XVII im Gesamtgemisch beträgt zusammen mindestens 50 Gew.-%, vorzugsweise mindestens 70 Gew.-% und besonders bevorzugt mindestens 90 Gew.-%.
- Das Medium besteht im wesentlichen aus Verbindungen der Formeln I bis XVII.

Die Gesamtmenge an Verbindungen der Formeln I bis XVII in den erfindungsgemäßen Gemischen ist nicht kritisch. Die Gemische können daher eine oder mehrere weitere Komponenten zwecks Optimierung verschiedener Eigenschaften enthalten. Der beobachtete Effekt auf die Rotationsviskosität und die optische Anisotropie ist jedoch in der Regel umso größer je höher die Gesamtkonzentration an Verbindungen der Formeln I bis XVII ist.

Ferner kann das erfindungsgemäße Medium zusätzlich eine oder mehrere Verbindungen ausgewählt aus Verbindungen der allgemeinen Formel XVIII enthalten: 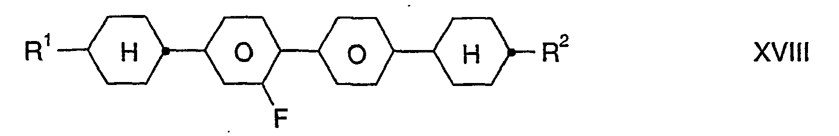 worin R¹ und R² die oben angegebenen Bedeutungen annehmen können. Vorzugsweise ist R¹ und R² jedoch n-Alkyl mit bis zu 9 C-Atomen, besonders bevorzugt n-Alkyl mit 1 bis 5 C-Atomen.

Der Anteil der Verbindungen der Formel XVIII im Gesamtgemisch kann bis 10 Gew.-% betragen.

Darüber hinaus kann das erfindungsgemäße Medium zusätzlich eine oder mehrere Verbindungen ausgewählt aus der Gruppe bestehend aus Verbindungen der allgemeinen Formeln XIX bis XXVI enthalten: 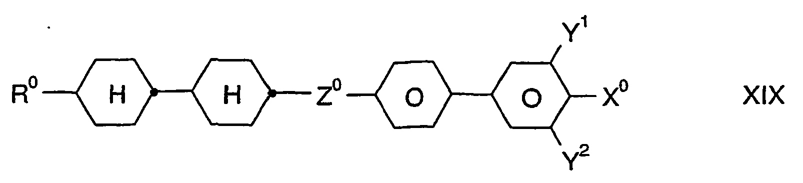 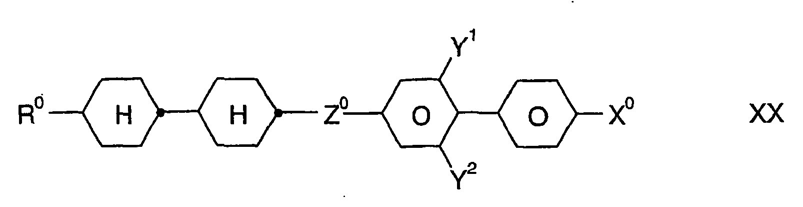 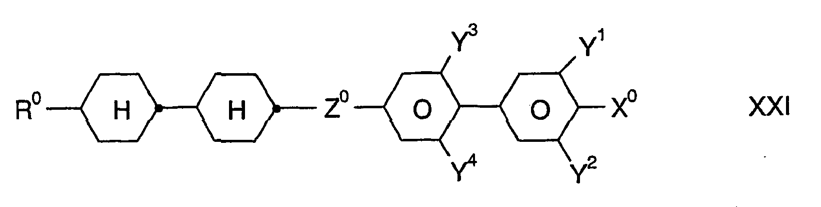 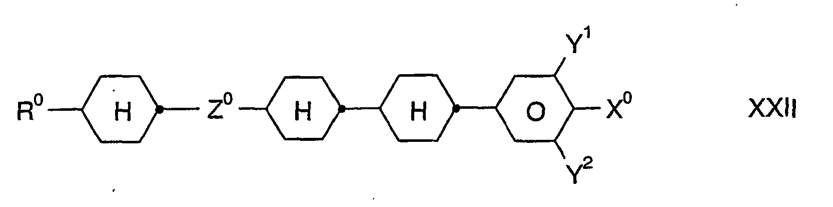 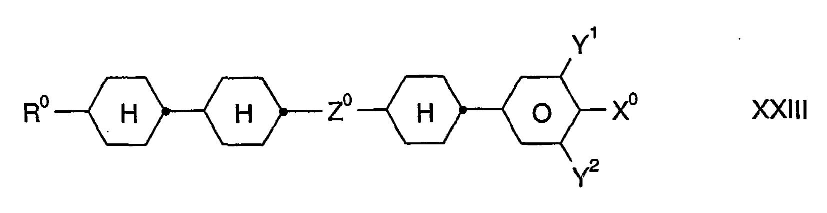 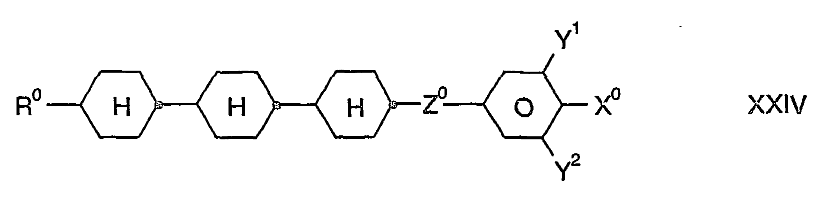 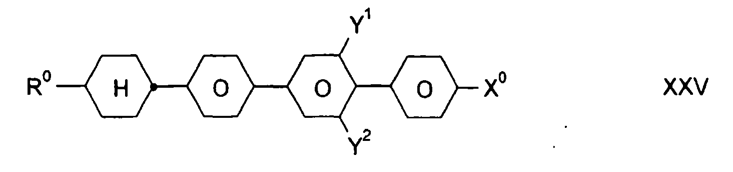 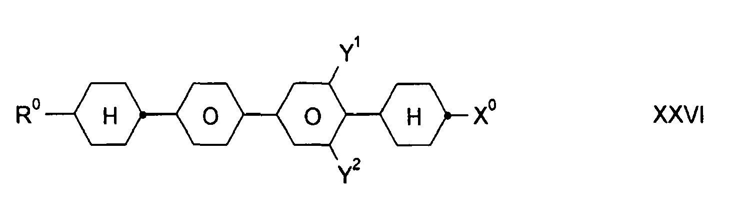 worin R⁰, X⁰, Y¹, Y², Y³, Y⁴ und Z⁰ jeweils unabhängig voneinander eine der oben angegebenen Bedeutungen haben. Vorzugsweise bedeutet X⁰ F, Cl, CF₃, OCF₃ oder OCHF₂. R⁰ bedeutet vorzugsweise Alkyl, Oxaalkyl, Fluoralkyl oder Alkenyl mit jeweils bis zu 6 C-Atomen und Z⁰ bedeutet vorzugsweise eine Einfachbindung oder -CH₂-CH₂-. Y¹, Y², Y³ und Y⁴ bedeuten jeweils unabhängig voneinander H oder F.

Die einzelnen Verbindungen der Formeln II bis XXVI und deren Unterformeln, die in den erfindungsgemäßen Medien verwendet werden können, sind entweder bekannt, oder können analog zu bekannten Verbindungen hergestellt werden.

Es wurde gefunden, dass bereits ein relativ geringer Anteil an Verbindungen der Formel I im erfindungsgemäßen flüssigkristallinen Medium, insbesondere jedoch mit einer oder mehreren Verbindungen der Formeln II, III, IV, V, VI, VII, VIII, IX und/oder X zu einer beträchtlichen Erniedrigung der Rotationsviskosität γ₁ und zu höheren Werten für die optische Anisotropie Δn führt, wodurch sich schnellere Schaltzeiten der Displays erreichen lassen, wobei gleichzeitig breite nematische Phasen mit tiefen Übergangstemperaturen smektisch-nematisch beobachtet werden, wodurch die Lagerstabilität verbessert wird. Die Verbindungen der Formeln I bis X sind farblos, stabil und untereinander und mit anderen Flüssigkristallmaterialien gut mischbar. Weiterhin zeichnen sich die erfindungsgemäßen Mischungen durch sehr hohe Klärpunkte aus.

Der Aufbau der erfindungsgemäßen MFK-Anzeige aus Polarisatoren, Elektrodengrundplatten und Elektroden mit Oberflächenbehandlung entspricht der für derartige Anzeigen üblichen Bauweise. Dabei ist der Begriff der üblichen Bauweise hier weit gefasst und umfasst auch alle Abwandlungen und Modifikationen der MFK-Anzeige, insbesondere auch Matrix-Anzeigeelemente auf Basis poly-Si TFT oder MIM.

Ein wesentlicher Unterschied der erfindungsgemäßen Anzeigen zu den bisher üblichen auf der Basis der verdrillten nematischen Zelle besteht jedoch in der Wahl der Flüssigkristallparameter der Flüssigkristalischicht.

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, vorzugsweise bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Die Dielektrika können auch weitere, dem Fachmann bekannte und in der Literatur beschriebene Zusätze enthalten. Beispielsweise können 0 bis 15 % pleochroitische Farbstoffe und/oder chirale Dotierstoffe zugesetzt werden.

In der vorliegenden Anmeldung und in den folgenden Beispielen sind die Strukturen der Flüssigkristallverbindungen durch Acronyme angegeben, wobei die Transformation in chemische Formeln gemäß der folgenden Tabellen A und B erfolgt. Alle Reste CₙH₂ₙ₊₁ und CₘH₂ₘ₊₁ sind geradkettige Alkylreste mit n bzw. m C-Atomen; n und m bedeuten vorzugsweise 0, 1, 2, 3, 4, 5, 6 oder 7. Die Codierung gemäß Tabelle B versteht sich von selbst. In Tabelle A ist nur das Acronym für den Grundkörper angegeben.

Im Einzelfall folgt getrennt vom Acronym für den Grundkörper mit einem Strich ein Code für die Substituenten R¹, R², L¹ und L².

| Code für R¹, R², L¹, L² | R¹ | R² | L¹ | L² |
|---|---|---|---|---|
| nm | CₙH₂ₙ₊₁ | CₘH₂ₘ₊₁ | H | H |
| nOm | CₙH₂ₙ₊₁ | OCₘH₂ₘ₊₁ | H | H |
| nO.m | OCₙH₂ₙ₊₁ | CₘH₂ₘ₊₁ | H | H |
| n | CₙH₂ₙ₊₁ | CN | H | H |
| nN.F | CₙH₂ₙ₊₁ | CN | H | F |
| nF | CₙH₂ₙ₊₁ | F | H | H |
| nOF | OCₙH₂ₙ₊₁ | F | H | H |
| nCl | CₙH₂ₙ₊₁ | Cl | H | H |
| nF.F | CₙH₂ₙ₊₁ | F | H | F |
| nF.F.F | CₙH₂ₙ₊₁ | F | F | F |
| nCF₃ | CₙH₂ₙ₊₁ | CF₃ | H | H |
| nOCF₃ | CₙH₂ₙ₊₁ | OCF₃ | H | H |
| nOCF₂ | CₙH₂ₙ₊₁ | OCHF₂ | H | H |
| nS | CₙH₂ₙ₊₁ | NCS | H | H |
| rVsN | CᵣH₂ᵣ₊₁-CH=CH-CₛH₂ₛ- | CN | H | H |
| rEsN | CᵣH₂ᵣ₊₁-O-CₛH₂ₛ- | CN | H | H |
| nAm | CₙH₂ₙ₊₁ | COOCₘH₂ₘ₊₁ | H | H |
| nOCCF₂.F.F | CₙH₂ₙ₊₁ | OCH₂CHF₂ | F | F |
| V-n | CH₂=CH | CₙH₂ₙ₊₁ | H | H |

Bevorzugte Mischungskomponenten des erfindungsgemäßen Mischungskonzeptes finden sich in den Tabellen A und B:

**Tabelle A:**

| |
|---|
| 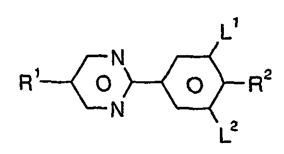 |
| **PYP** |
| 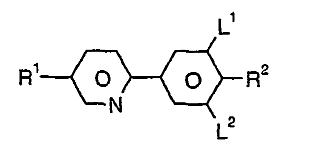 |
| **PYRP** |
| 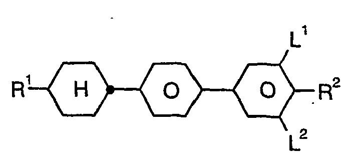 |
| **BCH** |
| 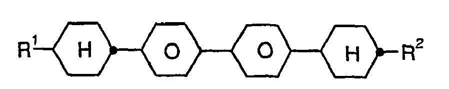 |
| **CBC** |
| 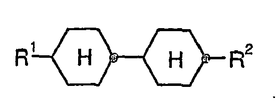 |
| **CCH** |
| 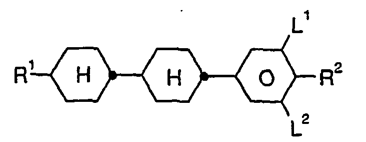 |
| **CCP** |
| 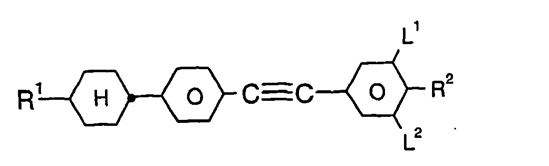 |
| **CPTP** |
| 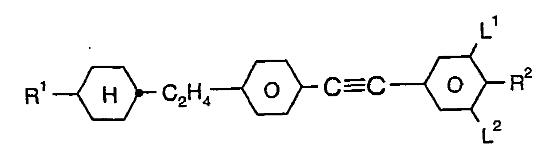 |
| **CEPTP** |
| 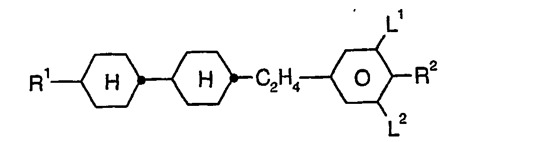 |
| **ECCP** |
| 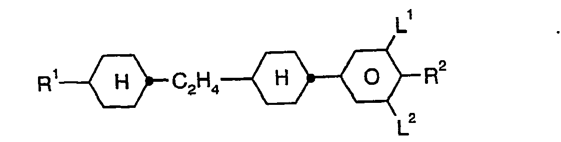 |
| **CECP** |
| 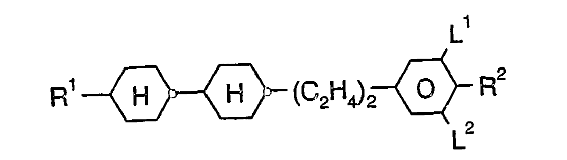 |
| **CCEEP** |
| 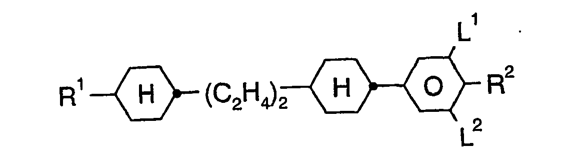 |
| **CEECP** |
| 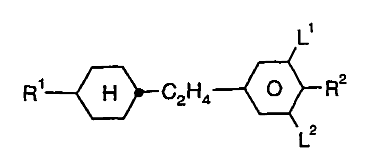 |
| **EPCH** |
| 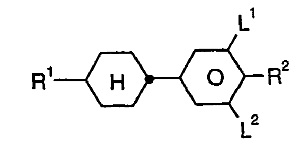 |
| **PCH** |
| 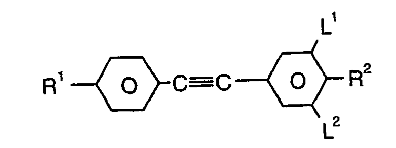 |
| **PTP** |
| 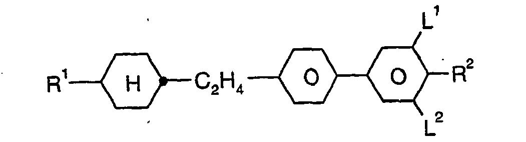 |
| **BECH** |
| 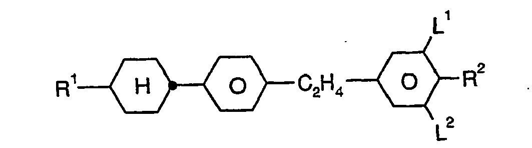 |
| **EBCH** |
| 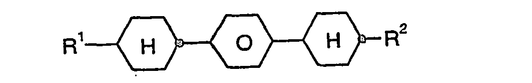 |
| **CPC** |
| 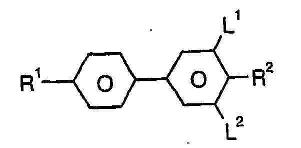 **B** |
| 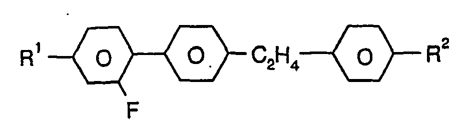 |
| **FET** |
| 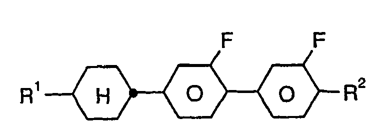 |
| **CGG** |
| 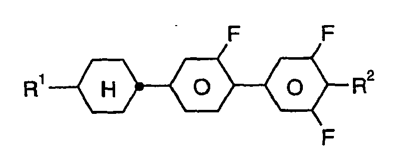 |
| **CGU** |
| 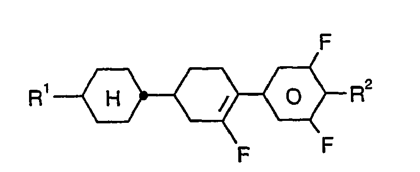 |
| **CFU** |

**Tabelle B:**

| |
|---|
| 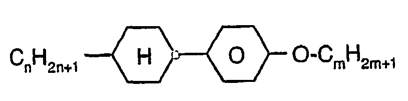 |
| **PCH-nOm** |
| 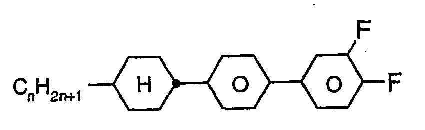 |
| **BCH-nF.F** |
| 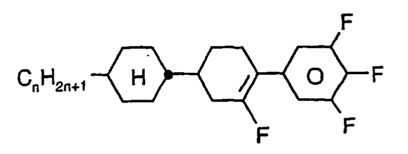 |
| **CFU-n-F** |
| 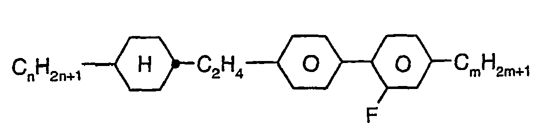 |
| **Inm** |
| 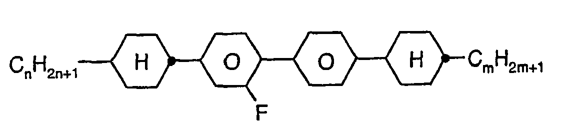 |
| **CBC-nmF** |
| 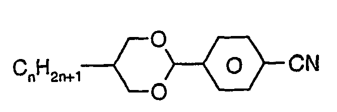 |
| **PDX-n** |
| 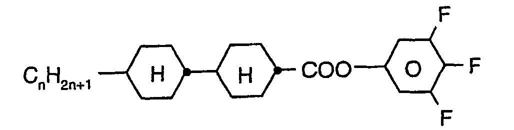 |
| **CCZU-n-F** |
| 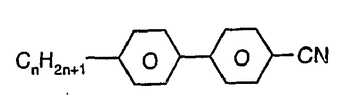 |
| **K3n** |
| 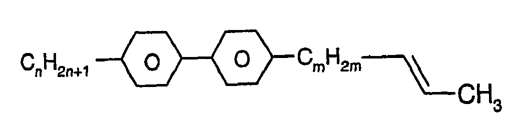 |
| **PP-n-mV1** |
| 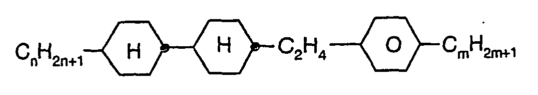 |
| **ECCP-nm** |
| 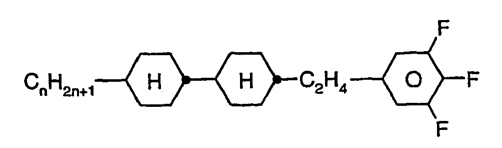 |
| **ECCP-nF.F.F** |
| 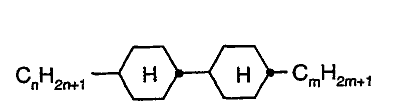 |
| **CCH-nm** |
| 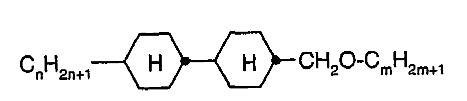 |
| **CCH-n1Em** |
| 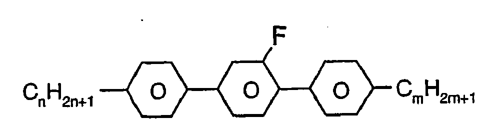 |
| **PGP-n-m** |
| 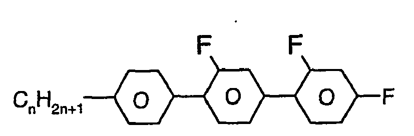 |
| **PGIGI-n-F** |
| 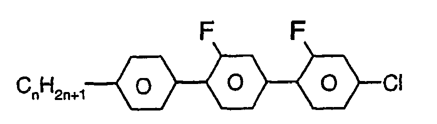 |
| **PGIGI-n-Cl** |
| 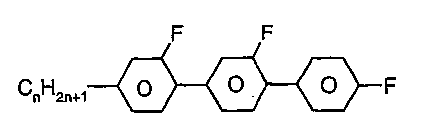 |
| **GGP-n-F** |
| 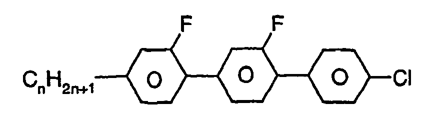 |
| **GGP-n-Cl** |
| 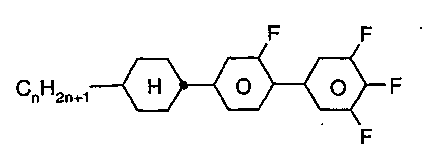 |
| **CGU-n-F** |
| 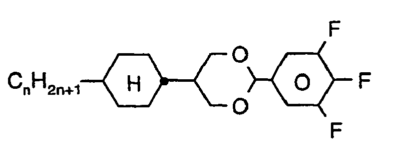 |
| **CDU-n-F** |
| 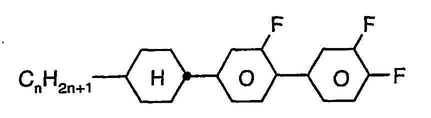 |
| **CGG-n-F** |
| 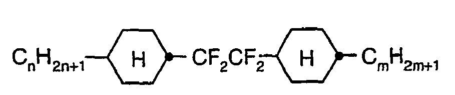 |
| **CWC-n-m** |
| 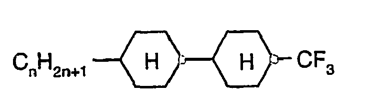 |
| **CCH-nCF₃** |
| 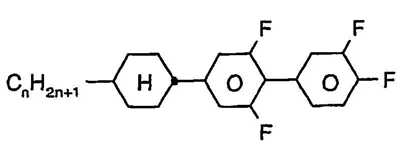 |
| **CUP-nF.F** |
| 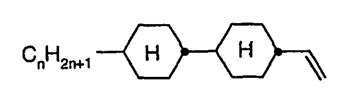 |
| **CC-n-V** |
| 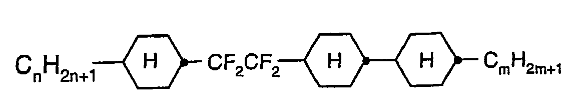 |
| **CWCC-n-m** |
| 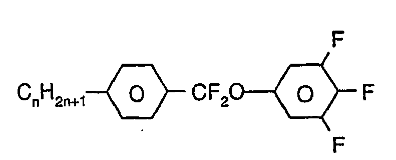 |
| **PQU-n-F** |
| 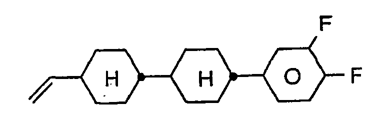 |
| **CCG-V-F** |
| 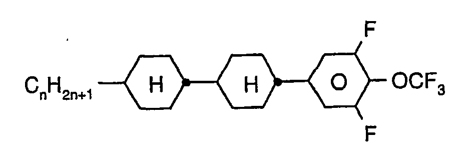 |
| **CCU-n-OT** |
| 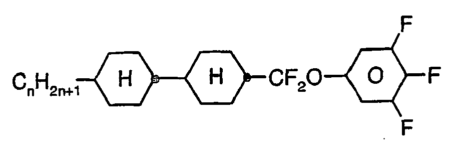 |
| **CCQU-n-F** |
| 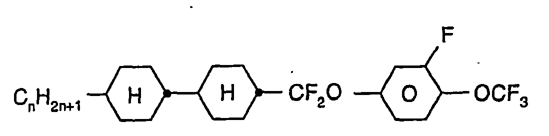 |
| **CCQG-n-OT** |
| 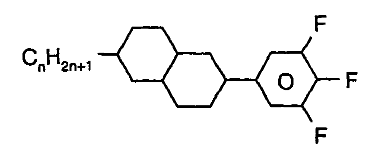 |
| **Dec-U-n-F** |
| 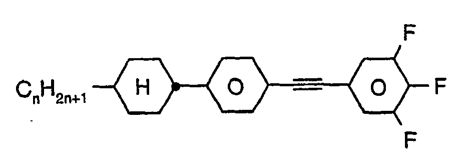 |
| **CPTU-n-F** |
| 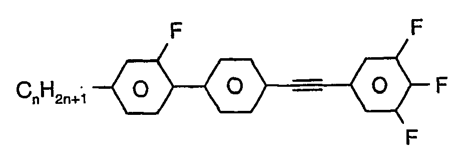 |
| **GPTU-n-F** |
| 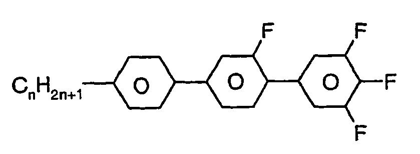 |
| **PGU-n-F** |
| 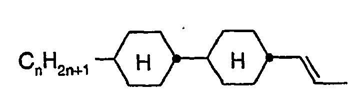 |
| **CC-n-V1** |
| 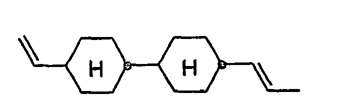 |
| **CC-V-V1** |
| 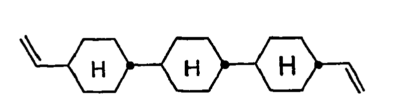 |
| **CCC-V-V** |
| 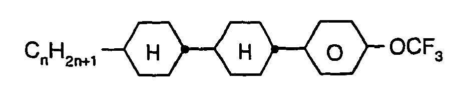 |
| **CCP-nOCF₃** |
| 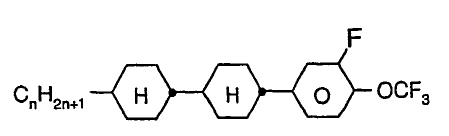 |
| **CCP-nOCF₃.F** |
| 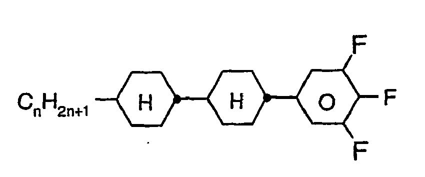 |
| **CCP-nF.F.F** |
| 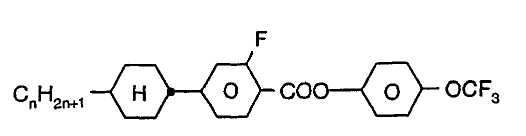 |
| **CGZP-n-OT** |
| 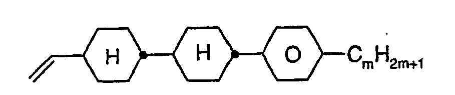 |
| **CCP-V-m** |
| 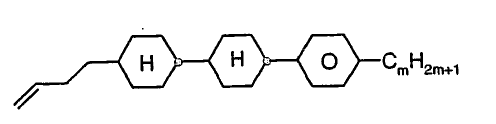 |
| **CCP-V2-m** |
| 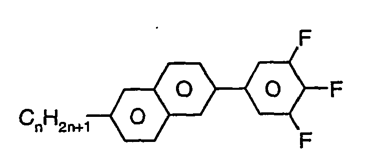 |
| **Nap-U-n-F** |
| 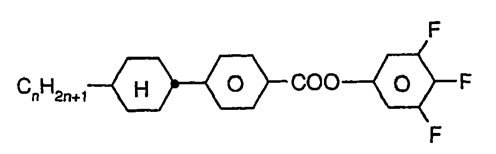 |
| **CPZU-n-F** |
| 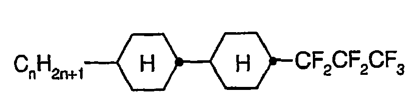 |
| **CC-n-DDT** |
| 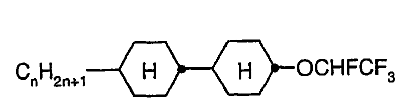 |
| **CC-n-OMT** |
| 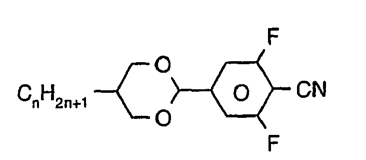 |
| **DU-n-N** |
| 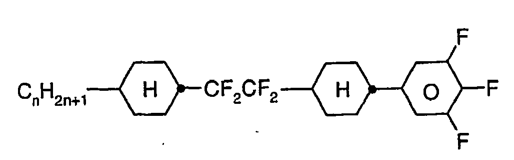 |
| **CWCU-n-F** |
| 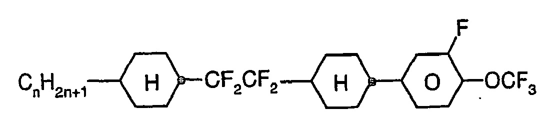 |
| **CWCG-n-OT** |
| 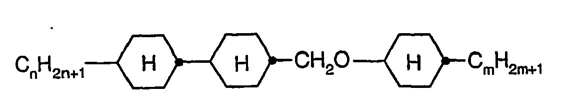 |
| **CCOC-n-m** |
| 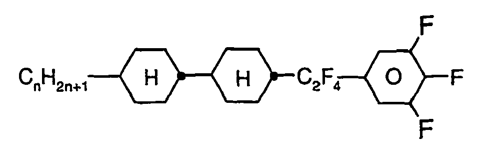 |
| **CCWU-n-F** |
| 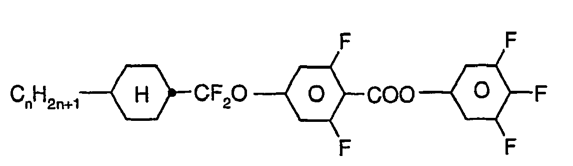 |
| **CQUZU-n-F** |
| 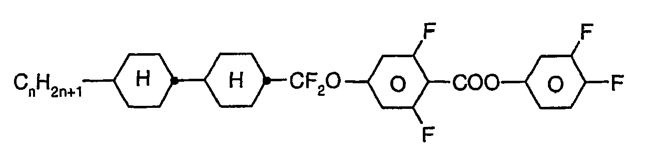 |
| **CCQUZG-n-F** |
| 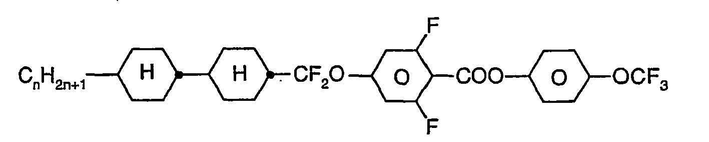 |
| **CCQUZP-n-OT** |
| 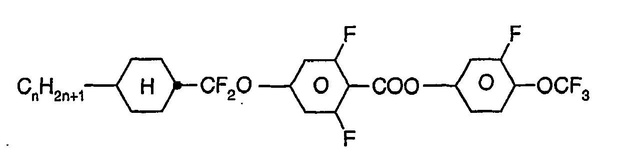 |
| **CQUZG-n-OT** |
| 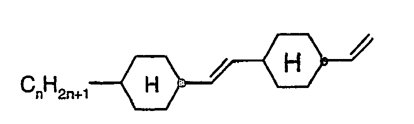 |
| **CVC-n-V** |
| 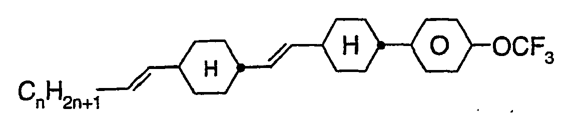 |
| **CVCP-nV-OT** |
| 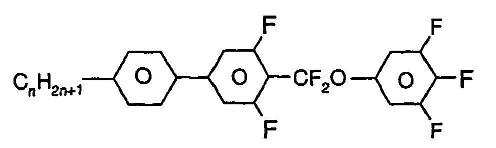 |
| **PUQU-n-F** |
| 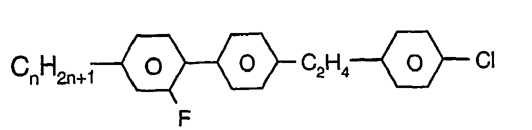 |
| **FET-nCl** |

**Tabelle C:**

| |
|---|
| In der Tabelle C werden mögliche Dotierstoffe angegeben, die vorzugsweise den erfindungsgemäßen Mischungen zugesetzt werden. |
| 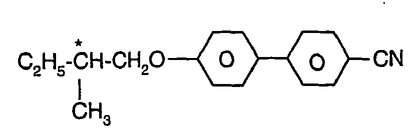 |
| **C15** |
| 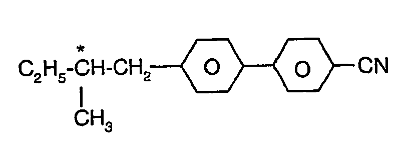 |
| **CB 15** |
| 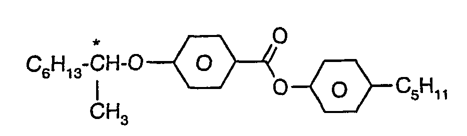 |
| **CM 21** |
| 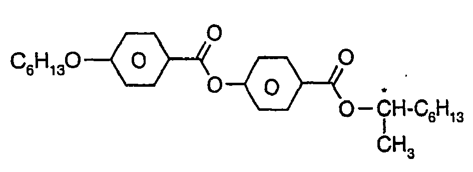 |
| **R/S-811** |
| 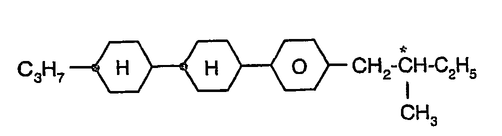 |
| **CM 44** |
| 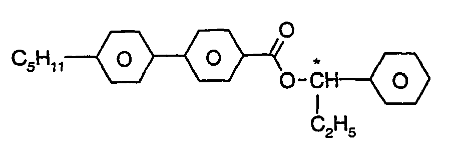 |
| **CM 45** |
| 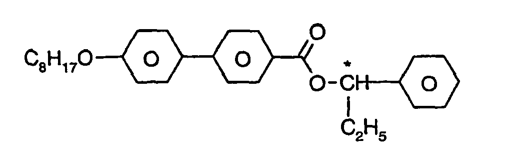 |
| **CM 47** |
| 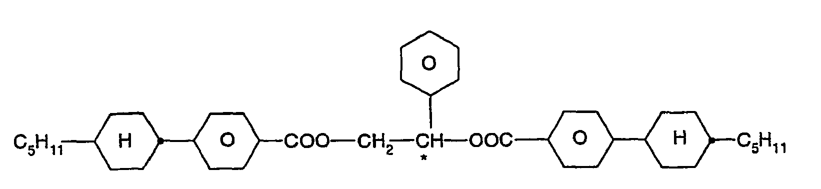 |
| **R/S-1011** |
| 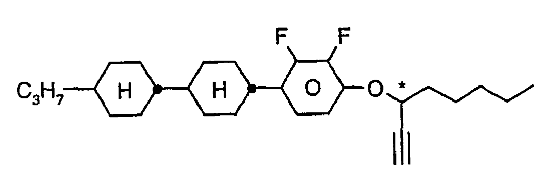 |
| **R/S-3011** |
| 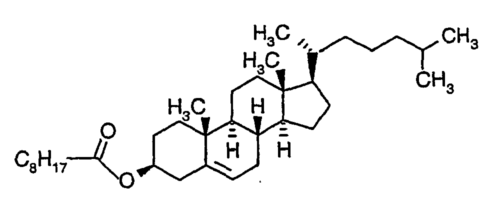 |
| **CN** |
| 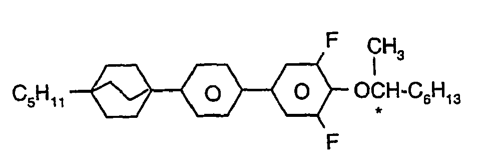 |
| **R/S-4011** |
| 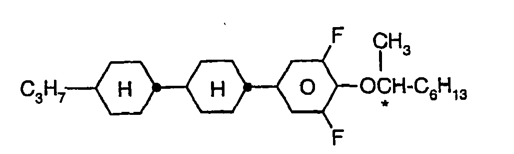 |
| **R/S-2011** |

**Tabelle D:**

| | |
|---|---|
| Stabilisatoren, die beispielsweise den erfindungsgemäßen Mischungen zugesetzt werden können, werden nachfolgend genannt. | |
| 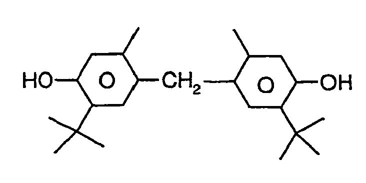 | 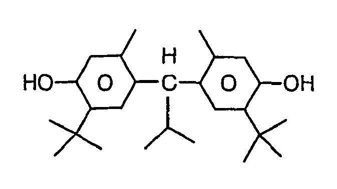 |
| 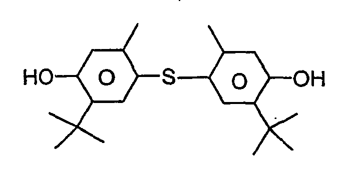 | 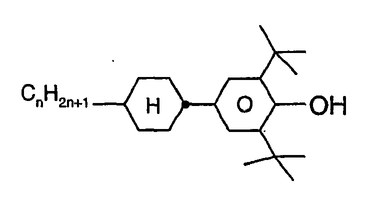 |
| 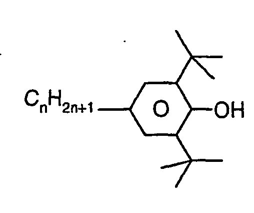 | 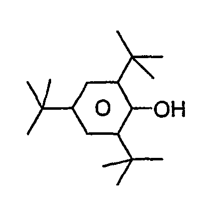 |
| 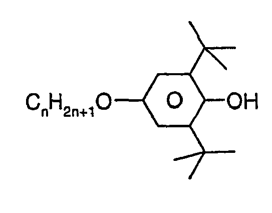 | 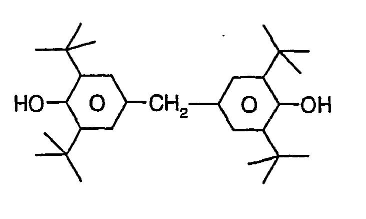 |
| 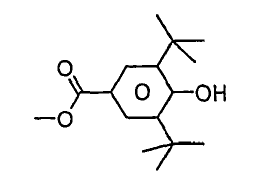 | 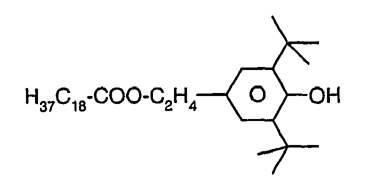 |
| 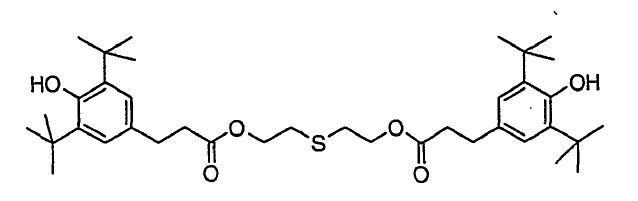 | |
| 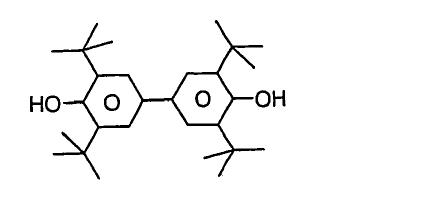 | 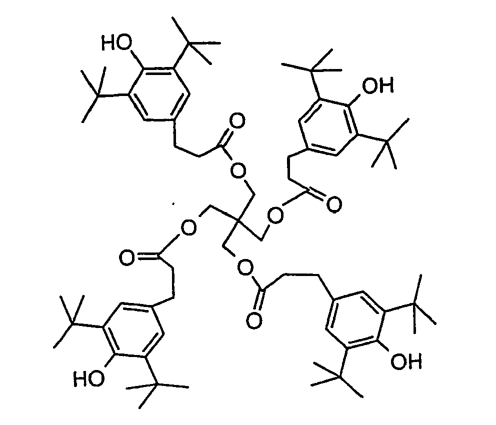 |
| 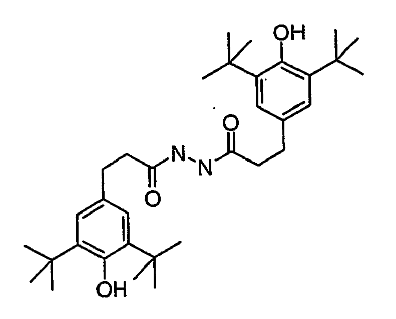 | 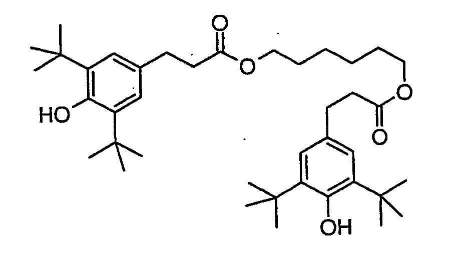 |
| 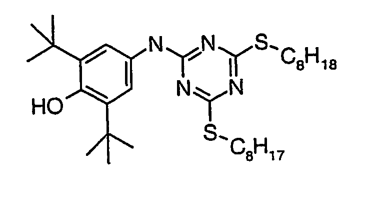 | 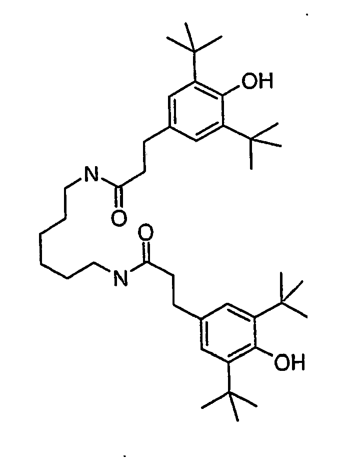 |
| 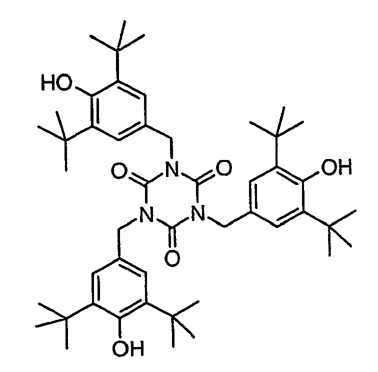 | 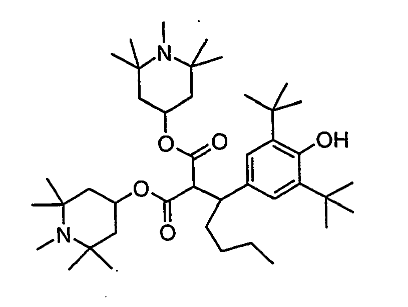 |
| 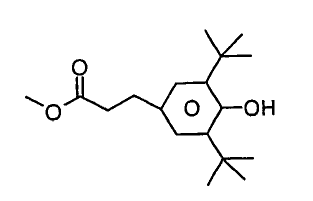 | 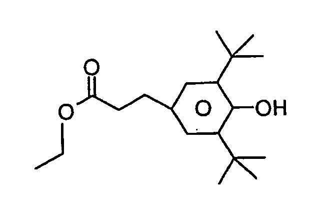 |
| 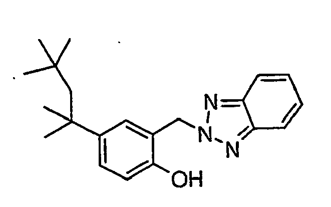 | 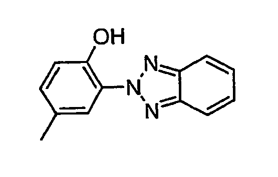 |
| 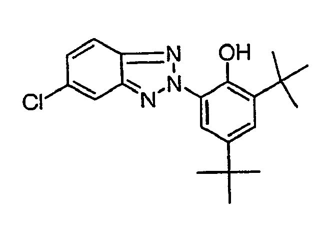 | 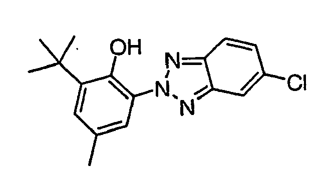 |
| 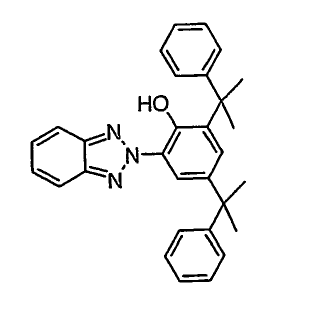 | 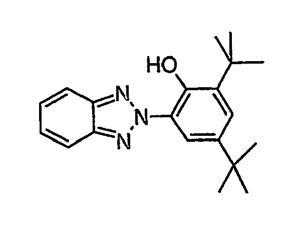 |
| 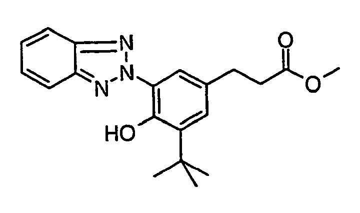 | 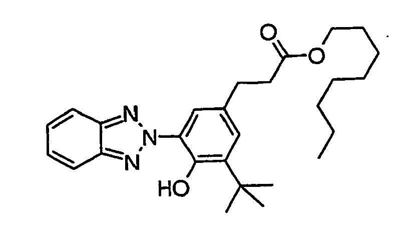 |
| 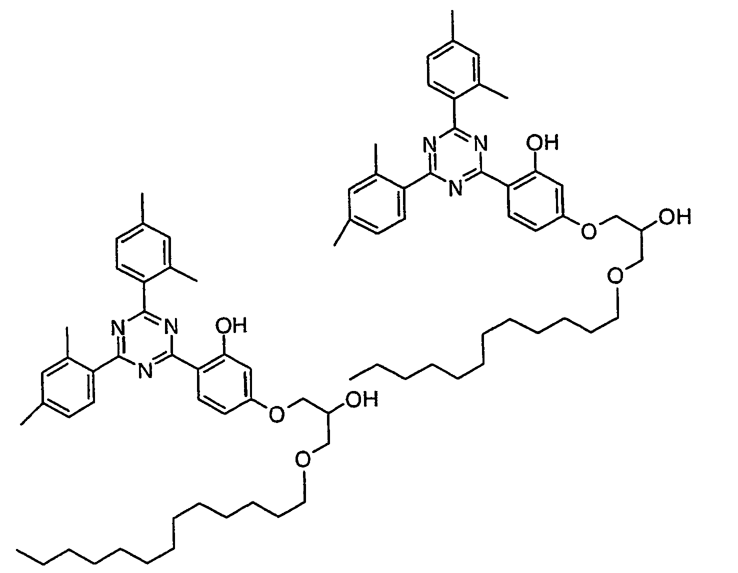 | |
| 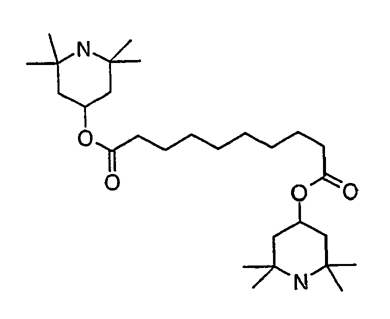 | 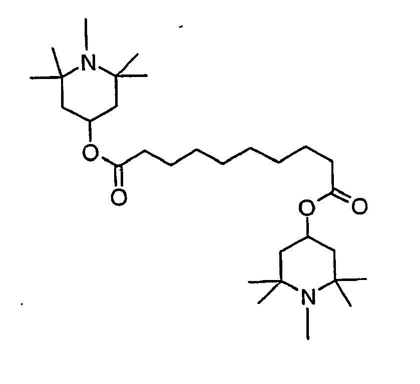 |

Besonders bevorzugte Mischungen enthalten neben einer oder mehreren Verbindungen der Formel I und einer oder mehrerer Verbindungen ausgewählt aus der Gruppe bestehend aus Verbindungen der allgemeinen Formeln XI bis XVII, eine, zwei, drei, vier, fünf oder mehr Verbindungen aus Tabelle B.

Die folgenden Beispiele sollen die Erfindung erläutern, ohne sie zu beschränken. Vor- und nachstehend bedeuten Prozentangaben Gewichtsprozent. Alle Temperaturen sind in Grad Celsius angegeben. Kp. bedeutet Klärpunkt.

Δn bezeichnet die optische Anisotropie (589 nm, 20°C). Die optischen Daten wurden bei 20°C gemessen, sofern nicht ausdrücklich etwas anderes angegeben wird. Δε bezeichnet die dielektrische Anisotropie (Δε = ε_{∥} - ε_{⊥}, wobei ε_{∥} die Dielektrizitätskonstante parallel zu den Moleküllängsachsen und ε_{⊥} die Dielektrizitätskonstante senkrecht dazu bedeutet). Die elektrooptischen Daten wurden in einer TN-Zelle im 1. Minimum (d.h. bei einem d · Δn-Wert von 0,5 µm) bei 20°C gemessen, sofern nicht ausdrücklich etwas anderes angegeben wird. Die Rotationsviskosität γ₁ (mPa·s) wurde bei 20°C bestimmt.

V₁₀ bezeichnet die Schwellenspannung, d.h. die charakteristische Spannung bei einem relativen Kontrast von 10%, V₅₀ die charakteristische Spannung bei einem relativen Kontrast von 50% und V₉₀ die charakteristische Spannung bei einem relativen Kontrast von 90%. V₀ bezeichnet die kapazitive Schwellenspannung. Die Verdrillung (twist) beträgt 90°, sofern nicht anders angegeben.

Die elastischen Konstanten K₁ und K₃ wurden bei 20°C bestimmt. K₃/K₁ ist das Verhältnis der elastischen Konstanten K₃ und K₁.

### Beispiele

### Beispiel 1

| | | | |
|---|---|---|---|
| CCP-20CF₃ | 2,0 % | Klärpunkt [°C]: | 80,0 |
| CCP-30CF₃ | 8,0 % | Δn [589 nm, 20°C]: | 0,0934 |
| CCZU-3-F | 14,0 % | Δε [1kHz, 20°C]: | 6,0 |
| CC-3-V1 | 10,0 % | γ₁ [mPa·s, 20°C]: | 70 |
| PCH-301 | 7,0 % | V₁₀ [V]: | 1,64 |
| CCP-V-1 | 12,0 % | V₅₀ [V]: | 1,99 |
| CCG-V-F | 10,0 % | V₉₀ [V]: | 2,48 |
| CC-4-V | 18,0 % | V₉₀V₁₀: | 1,509 |
| PUQU-2-F | 6,0 % | | |
| PUQU-3-F | 8,0 % | | |
| PGP-2-3 | 5,0 % | | |

### Beispiel 2

| | | | |
|---|---|---|---|
| CCP-20CF₃ | 4,0 % | Klärpunkt [°C]: | 79,0 |
| CCP-30CF₃ | 8,0 % | Δn [589 nm, 20°C]: | 0,0960 |
| CCZU-3-F | 14,0 % | | |
| CC-3-V1 | 10,0 % | | |
| PCH-301 | 9,0 % | | |
| CCP-V-1 | 16,0% | | |
| CC-4-V | 18,0% | | |
| PUQU-1-F | 8,0% | | |
| PUQU-2-F | 7,0% | | |
| PGP-3-2 | 6,0 % | | |

### Beispiel 3

| | | | |
|---|---|---|---|
| CCP-20CF₃ | 2,0 % | Klärpunkt [°C]: | 81,5 |
| CCP-30CF₃ | 8,0 % | Δn [589 nm, 20°C]: | 0,0940 |
| CCZU-3-F | 14,0 % | Δε [1kHz, 20°C]: | 6,2 |
| CC-3-V1 | 10,0 % | γ₁ [mPa·s, 20°C]: | 70 |
| PCH-301 | 6,0 % | V₁₀ [V]: | 1,67 |
| CCP-V-1 | 13,0 % | V₅₀ [V]: | 2,02 |
| CCG-V-F | 10,0 % | V₉₀ [V]: | 2,53 |
| CC-4-V | 18,0 % | V₉₀/V₁₀: | 1,512 |
| PUQU-1-F | 8,0 % | | |
| PUQU-2-F | 6,0 % | | |
| PGP-3-2 | 5,0 % | | |

### Beispiel 4

| | | | |
|---|---|---|---|
| CCP-30CF₃ | 8,0 % | Klärpunkt [°C]: | 82,0 |
| CCZU-3-F | 13,0 % | Δn [589 nm, 20°C]: | 0,0925 |
| CC-3-V1 | 10,0 % | Δε [1kHz, 20°C]: | 6,1 |
| CCP-V-1 | 13,0 % | | |
| CCG-V-F | 10,0 % | | |
| CC-4-V | 18,0 % | | |
| PUQU-1-F | 8,0 % | | |
| PUQU-2-F | 7,0 % | | |
| PGP-3-2 | 5,0 % | | |
| CVC-3-V | 8,0 % | | |

### Beispiel 5

| | | | |
|---|---|---|---|
| PGU-2-F | 2,0 % | Klärpunkt [°C]: | 80,5 |
| CCP-20CF₃ | 7,0 % | Δn [589 nm, 20°C]: | 0,0942 |
| CCP-30CF₃ | 7,0 % | V₁₀ [V]: | 1,65 |
| CCZU-3-F | 14,0 % | | |
| CC-3-V1 | 10,0 % | | |
| PCH-301 | 3,0 % | | |
| CCP-V-1 | 10,0 % | | |
| CCG-V-F | 10,0 % | | |
| CC-4-V | 18,0 % | | |
| PUQU-2-F | 6,0 % | | |
| PUQU-3-F | 8,0 % | | |
| PGP-2-4 | 5,0 % | | |

### Beispiel 6

| | | | |
|---|---|---|---|
| PGU-2-F | 7,0 % | Klärpunkt [°C]: | 79,0 |
| CC-3-V1 | 10,0% | Δn [589 nm, 20°C]: | 0,1036 |
| CCP-V-1 | 12,0 % | Δε [1kHz, 20°C]: | 5,0 |
| CCP-V2-1 | 3,0 % | γ₁ [mPa·s, 20°C]: | 67 |
| CCG-V-F | 10,0 % | V₁₀ [V]: | 1,78 |
| CCP-20CF₃ | 4,0 % | V₅₀ [V]: | 2,13 |
| CCP-30CF₃ | 4,0 % | V₉₀ [V]: | 2,65 |
| CCP-40CF₃ | 2,0 % | V₉₀/V₁₀: | 1,490 |
| CCZU-3-F | 5,0 % | | |
| PCH-301 | 8,0 % | | |
| CC-4-V | 18,0 % | | |
| PUQU-2-F | 4,0 % | | |
| PUQU-3-F | 5,0 % | | |
| PGP-2-4 | 8,0 % | | |

### Beispiel 7

| | | | |
|---|---|---|---|
| CC-4-V | 18,0 % | Klärpunkt [°C]: | 79,5 |
| CC-3-V1 | 11,0 % | Δn [589 nm, 20°C]: | 0,0939 |
| PCH-302 | 9,0 % | Δε [1kHz, 20°C]: | 6,0 |
| CCP-20CF₃ | 7,5 % | γ₁ [mPa·s, 20°C]: | 71 |
| CCP-30CF₃ | 8,0 % | V₁₀ [V]: | 1,80 |
| CCZU-3-F | 13,0 % | V₅₀ [V]: | 2,15 |
| PGP-2-3 | 5,5% | V₉₀ [V]: | 2,65 |
| PGP-2-4 | 5,0 % | V₉₀/V₁₀: | 1,474 |
| CCQU-2-F | 6,0 % | | |
| CCQU-3-F | 10,0 % | | |
| PUQU-2-F | 3,0 % | | |
| PUQU-3-F | 4,0 % | | |

### Beispiel 8

| | | | |
|---|---|---|---|
| CCP-20CF₃ | 4,0 % | Klärpunkt [°C]: | 79,0 |
| CCP-30CF₃ | 4,0 % | Δn [589 nm, 20°C]: | 0,0927 |
| CCP-40CF₃ | 4,0 % | Δε [1kHz, 20°C]: | 5,1 |
| CCZU-3-F | 9,0 % | γ₁ [mPa·s, 20°C]: | 65 |
| CC-3-V1 | 10,0 % | V₁₀ [V]: | 1,76 |
| PCH-301 | 9,0% | V₅₀ [V]: | 2,13 |
| CCP-V-1 | 14,0 % | V₉₀ [V]: | 2,66 |
| CCG-V-F | 10,0 % | V₉₀/V₁₀: | 1,513 |
| CC-4-V | 18,0 % | | |
| PUQU-2-F | 6,0 % | | |
| PUQU-3-F | 7,0 % | | |
| PGP-2-3 | 5,0 % | | |

### Beispiel 9

| | | | |
|---|---|---|---|
| CCP-30CF₃ | 7,0% | Klärpunkt [°C]: | 79,5 |
| CCZU-2-F | 2,0% | Δn [589nm, 20°C]: | 0,0947 |
| CCZU-3-F | 14,0 % | Δε [1kHz, 20°C]: | 6,0 |
| PUQU-2-F | 6,0% | γ₁ [mPa·s, 20°C]: | 68 |
| PUQU-3-F | 8,0 % | V₁₀ [V]: | 1,72 |
| CCP-V-1 | 8,0 % | | |
| CC-3-V1 | 12,0% | | |
| CC-4-V | 18,0 % | | |
| PCH-301 | 10,0 % | | |
| PGP-2-3 | 6,0 % | | |
| CVCP-1V-OT | 9,0 % | | |

### Beispiel 10

| | | | |
|---|---|---|---|
| CCZU-2-F | 3,0 % | Klärpunkt [°C]: | 79,0 |
| CCZU-3-F | 14,0 % | Δn [589 nm, 20°C]: | 0,0935 |
| PCH-302 | 10,0 % | Δε [1kHz, 20°C]: | 6,1 |
| CCP-V-1 | 9,0 % | γ₁ [mPa·s, 20°C]: | 70 |
| CCG-V-F | 5,0 % | V₁₀ [V]: | 1,67 |
| CC-3-V1 | 12,0 % | | |
| CC-4-V | 18,0 % | | |
| PUQU-2-F | 6,0 % | | |
| PUQU-3-F | 8,0 % | | |
| PGP-2-3 | 5,0 % | | |
| CVCP-1V-OT | 10,0 % | | |

### Beispiel 11

| | | | |
|---|---|---|---|
| PGU-2-F | 4,0 % | Klärpunkt [°C]: | 80,5 |
| CC-3-V1 | 10,0 % | γ₁ [mPa·s, 20°C]: | 67 |
| CCP-V-1 | 14,0 % | V₁₀ [V]: | 1,80 |
| CCG-V-F | 10,0 % | | |
| CCP-20CF₃ | 6,0 % | | |
| CCP-30CF₃ | 6,0 % | | |
| CCP-40CF₃ | 4,0 % | | |
| PCH-301 | 6,0 % | | |
| CC-4-V | 18,0 % | | |
| PUQU-2-F | 6,0 % | | |
| PUQU-3-F | 8,0 % | | |
| PGP-2-3 | 8,0 % | | |

### Beispiel 12

| | | | |
|---|---|---|---|
| PGU-2-F | 6,0 % | Klärpunkt [°C]: | 80,0 |
| PGU-3-F | 2,0 % | Δn [589 nm, 20°C]: | 0,1048 |
| CC-3-V1 | 11,0 % | Δε [1kHz, 20°C]: | 5,7 |
| CCP-V-1 | 12,0 % | γ₁ [mPa·s, 20°C]: | 69 |
| CCG-V-F | 10,0 % | V₁₀ [V]: | 1,68 |
| CCP-30CF₃ | 6,0 % | V₅₀[V]: | 2,02 |
| CCZU-3-F | 12,0 % | V₉₀ [V]: | 2,48 |
| PCH-301 | 7,0% | V₉₀/V₁₀: | 1,478 |
| CC-4-V | 18,0 % | | |
| PUQU-2-F | 4,0 % | | |
| PUQU-3-F | 4,0 % | | |
| PGP-2-3 | 8,0 % | | |

### Beispiel 13

| | | | |
|---|---|---|---|
| CCZU-2-F | 3,0 % | Klärpunkt [°C]: | 80,0 |
| CCZU-3-F | 14,0 % | Δn [589 nm, 20°C]: | 0,0934 |
| PUQU-2-F | 6,0 % | Δε [1kHz, 20°C]: | 6,1 |
| PUQU-3-F | 8,0 % | γ₁ [mPa·s, 20°C]: | 69 |
| CCG-V-F | 9,0 % | V₁₀ [V]: | 1,67 |
| CCP-V-1 | 12,0 % | V₅₀ [V]: | 2,01 |
| CC-3-V1 | 13,0 % | V₉₀ [V]: | 2,52 |
| CC-4-V | 18,0 % | V₉₀/V₁₀: | 1,511 |
| PCH-301 | 5,0 % | | |
| PGP-2-4 | 6,0 % | | |
| CVCP-2V-OT | 6,0 % | | |

### Beispiel 14

| | | | |
|---|---|---|---|
| PUQU-2-F | 10,0 % | Klärpunkt [°C]: | 79,0 |
| PUQU-3-F | 10,0 % | Δn [589 nm, 20°C]: | 0,0943 |
| CCP-V-1 | 16,0 % | Δε [1kHz, 20°C]: | 5,6 |
| CCP-V2-1 | 4,0 % | γ₁ [mPa·s, 20°C]: | 67 |
| CCG-V-F | 10,0 % | V₁₀ [V]: | 1,78 |
| CC-3-V1 | 13,0 % | V₅₀ [V]: | 2,15 |
| CC-4-V | 18,0 % | V₉₀ [V]: | 2,71 |
| PCH-301 | 6,0 % | V₉₀/V₁₀: | 1,522 |
| PCP-2-4 | 2,0 % | | |
| CVCP-1V-OT | 11,0 % | | |

### Beispiel 15

| | | | |
|---|---|---|---|
| CCZU-3-F | 6,0 % | Klärpunkt [°C]: | 79,0 |
| CCP-V-1 | 16,0 % | Δn [589 nm, 20°C]: | 0,0940 |
| CCG-V-F | 10,0% | Δε [1kHz, 20°C]: | 5,8 |
| CC-4-V | 18,0 % | γ₁ [mPa·s, 20°C]: | 65 |
| CC-3-V1 | 13,0 % | V₁₀ [V]: | 1,71 |
| PCH-301 | 6,0 % | V₅₀ [V]: | 2,06 |
| PUQU-1-F | 9,0 % | V₉₀ [V]: | 2,59 |
| PUQU-2-F | 9,0 % | V₉₀/V₁₀: | 1,519 |
| PGP-2-4 | 3,0 % | | |
| CVCP-1V-OT | 10,0 % | | |

### Beispiel 16

| | | | |
|---|---|---|---|
| CCZU-3-F | 12,0 % | Klärpunkt [°C]: | 79,0 |
| PUQU-2-F | 8,0 % | Δn [589 nm, 20°C]: | 0,0938 |
| PUQU-3-F | 9,0 % | Δε [1kHz, 20°C]: | 5,8 |
| CCP-V-1 | 12,0 % | γ₁ [mPa·s, 20°C]: | 68 |
| CC-3-V1 | 12,0 % | V₁₀ [V]: | 1,72 |
| CC-4-V | 18,0 % | V₅₀ [V]: | 2,08 |
| PCH-301 | 11,0 % | V₉₀ [V]: | 2,59 |
| PGP-2-3 | 4,0 % | V₉₀N₁₀: | 1,506 |
| CVCP-1V-OT | 10,0 % | | |
| CCC-V-V | 4,0 % | | |

### Beispiel 17

| | | | |
|---|---|---|---|
| CCZU-3-F | 7,0 % | Klärpunkt [°C]: | 80,0 |
| CCP-V-1 | 16,0 % | Δn [589 nm, 20°C]: | 0,0936 |
| CCG-V-F | 10,0 % | Δε [1kHz, 20°C]: | 5,9 |
| CC-4-V | 18,0 % | γ₁ [mPa·s, 20°C]: | 67 |
| CC-3-V1 | 13,0 % | V₁₀ [V]: | 1,71 |
| PCH-301 | 5,0 % | V₅₀ [V]: | 2,07 |
| PUQU-2-F | 9,0 % | V₉₀ [V]: | 2,60 |
| PUQU-3-F | 9,0 % | V₉₀/V₁₀: | 1,518 |
| PGP-2-4 | 3,0 % | | |
| CVCP-1V-OT | 10,0 % | | |

### Beispiel 18

| | | | |
|---|---|---|---|
| CCZU-2-F | 4,0 % | Klärpunkt [°C]: | 80,0 |
| CCZU-3-F | 14,0 % | Δn [589 nm, 20°C]: | 0,0941 |
| CCP-20CF3 | 4,0 % | Δε [1kHz, 20°C]: | 7,4 |
| CCP-30CF3 | 3,0 % | γ₁ [mPa·s, 20°C]: | 66 |
| CCP-V-1 | 14,0 % | V₁₀ [V]: | 1,55 |
| CCG-V-F | 5,0 % | V₅₀ [V]: | 1,87 |
| PUQU-1-F | 10,0 % | V₉₀ [V]_{:} | 2,33 |
| PUQU-2-F | 8,0 % | V₉₀/V₁₀: | 1,505 |
| PGP-2-4 | 5,0 % | | |
| CC-3-V1 | 13,0 % | | |
| CC-3-V | 20,0 % | | |

### Beispiel 19

| | | | |
|---|---|---|---|
| PGU-1-F | 5,0 % | Klärpunkt [°C]: | 79,0 |
| PGU-2-F | 4,0 % | Δn [589 nm, 20°C]: | 0,1047 |
| CC-3-V1 | 12,0 % | Δε [1kHz, 20°C]: | 5,3 |
| CCP-V-1 | 14,0 % | γ₁ [mPa·s,20°C]: | 65 |
| CCG-V-F | 5,0 % | V₁₀ [V]: | 1,72 |
| CCP-30CF3 | 6,0 % | V₅₀ [V]: | 2,07 |
| CCZU-3-F | 12,0 % | V₉₀ [V]: | 2,57 |
| PCH-301 | 9,0 % | V₉₀/V₁₀: | 1,496 |
| CC-4-V | 18,0 % | | |
| PUQU-2-F | 3,0 % | | |
| PUQU-3-F | 4,0 % | | |
| PGP-2-4 | 8,0 % | | |

### Beispiel 20

| | | | |
|---|---|---|---|
| CCZU-2-F | 4,0 % | Klärpunkt [°C]: | 78,0 |
| CCZU-3-F | 14,0 % | Δn [589 nm, 20°C]: | 0,0992 |
| PUQU-1-F | 8,0 % | Δε [1kHz,20°C]: | 5,8 |
| PUQU-2-F | 6,0 % | γ₁ [mPa·s, 20°C]: | 66 |
| CCP-V-1 | 13,0 % | V₁₀ [V]: | 1,67 |
| CCG-V-F | 7,0 % | V₅₀ [V]: | 2,00 |
| CC-3-V1 | 15,0 % | V₉₀[V]: | 2,47 |
| CC-4-V | 18,0 % | V₉₀/V₁₀: | 1,480 |
| PCH-301 | 5,0 % | | |
| PGP-2-3 | 4,0 % | | |
| PGP-2-4 | 6,0 % | | |

### Beispiel 21

| | | | |
|---|---|---|---|
| CCP-20CF3 | 4,0 % | Klärpunkt [°C]: | 76,0 |
| CCP-30CF3 | 4,0 % | Δε [1kHz, 20°C]: | 5,4 |
| CCZU-3-F | 4,0 % | γ₁ [mPa·s, 20°C]: | 58 |
| PUQU-1-F | 8,0 % | | |
| PUQU-2-F | 8,0 % | | |
| CC-3-V1 | 6,0 % | | |
| CVCP-1 V-OT | 14,0 % | | |
| CVCP-2V-OT | 4,0 % | | |
| PGP-2-4 | 8,0 % | | |
| CC-V-V1 | 40,0 % | | |

### Vergleichsbeispiel 1

| | | | |
|---|---|---|---|
| CCP-2F.F.F | 9,5 % | Klärpunkt [°C]: | 80,0 |
| CCP-3F.F.F | 1,5% | Δn [589 nm, 20°C]: | 0,0773 |
| CCZU-2-F | 3,5% | Δε [1kHz, 20°C]: | 6,0 |
| CCZU-3-F | 9,0 % | γ₁ [mPa·s, 20°C]: | 81 |
| CCP-20CF₃ | 6,0 % | V₁₀ [V]: | 1,60 |
| CCP-30CF₃ | 4,0 % | V₅₀[V]: | 1,97 |
| CC-5-V | 20,0 % | V₉₀ [V]: | 2,45 |
| CC-3-V1 | 5,0 % | V₉₀/V₁₀: | 1,526 |
| PCH-301 | 6,0 % | | |
| CGZP-2-OT | 9,0 % | | |
| CCP-V-1 | 4,0 % | | |
| CCG-V-F | 10,5% | | |
| CGU-2-F | 5,0 % | | |
| CCH-35 | 3,5 % | | |
| CCP-20CF₃.F | 3,5% | | |

### Beispiel 22

| | | | |
|---|---|---|---|
| PGP-2-3 | 6,0 % | Klärpunkt [°C]: | 75,0 |
| PGP-2-4 | 6,0 % | Δn [589 nm, 20°C]: | 0,1763 |
| PGP-3-3 | 6,0 % | Δε [1kHz, 20°C]: | 4,5 |
| PCH-301 | 11,0 % | γ₁ [mPa·s, 20°C]: | 150 |
| PCH-302 | 10,0 % | V₀ [V]: | 1,66 |
| PGIGI-3-F | 8,0 % | γ₁/(Δn)²: | 4826 |
| GGP-2-F | 10,0 % | K₁ [pN]: | 11,3 |
| GGP-3-F | 11,0 % | K₃ [pN]: | 14,4 |
| GGP-5-F | 10,0 % | K₃ / K₁ : | 1,27 |
| CCP-V-1 | 8,0 % | | |
| CGG-3-F | 14,0 % | | |

### Beispiel 23

| | | | |
|---|---|---|---|
| PGP-2-3 | 6,0 % | Klärpunkt [°C]: | 77,0 |
| PGP-2-4 | 8,0 % | Δn[589nm, 20°C]: | 0,1695 |
| PGP-3-3 | 6,0 % | Δε [1kHz, 20°C]: | 4,4 |
| PCH-301 | 15,0 % | γ₁ [mPa·s, 20°C]: | 156 |
| PCH-302 | 14,0 % | V₀ [V]: | 1,73 |
| GGP-2-F | 9,0 % | γ₁/(Δn)²: | 5430 |
| GGP-3-F | 9,0 % | K₁ [pN]: | 11,7 |
| GGP-5-F | 9,0 % | K₃ [pN]: | 14,2 |
| CGG-3-F | 18,0 % | K₃/K₁: | 1,21 |
| CBC-33F | 3,0 % | | |
| CBC-53F | 3,0 % | | |

### Beispiel 24

| | | | |
|---|---|---|---|
| PGP-2-3 | 10,0 % | Klärpunkt [°C]: | 79,0 |
| PGP-2-4 | 10,0 % | Δn [589 nm, 20°C]: | 0,1780 |
| PGP-3-3 | 6,0 % | Δε [1kHz, 20°C]: | 4,6 |
| PCH-301 | 13,0 % | γ₁ [mPa·s, 20°C]: | 153 |
| PCH-302 | 12,0 % | V₀ [V]: | 1,69 |
| GGP-2-F | 9,0 % | γ₁/(Δn)²: | 4829 |
| GGP-3-F | 10,0 % | K₁ [pN]: | 11,8 |
| GGP-5-F | 7,0 % | K₃ [pN]: | 14,0 |
| CGG-3-F | 19,0 % | K₃/K₁: | 1,19 |
| CBC-33F | 4,0 % | | |

### Beispiel 25

| | | | |
|---|---|---|---|
| PGP-2-3 | 11,0 % | Klärpunkt [°C]: | 80,5 |
| PGP-2-4 | 11,0 % | Δn [589 nm, 20°C]: | 0,1813 |
| PGP-3-2 | 6,0 % | Δε [1kHz, 20°C]: | 4,6 |
| PCH-301 | 12,0 % | γ₁ [mPa·s, 20°C]: | 157 |
| PCH-302 | 11,0 % | V₀ [V]: | 1,69 |
| GGP-2-F | 9,0 % | γ₁/(Δn)²: | 4776 |
| GGP-3-F | 10,0 % | K₁ [pN]: | 11,9 |
| GGP-5-F | 7,0 % | K₃ [pN]: | 13,7 |
| CGG-3-F | 19,0 % | K₃/K₁: | 1,16 |
| CBC-33F | 4,0 % | | |

### Beispiel 26

| | | | |
|---|---|---|---|
| PGP-2-3 | 12,0 % | Klärpunkt [°C]: | 81,5 |
| PGP-2-4 | 12,0 % | Δn [589 nm, 20°C]: | 0,1885 |
| PGP-3-2 | 9,0 % | Δε [1kHz, 20°C]: | 4,7 |
| PCH-301 | 11,0 % | γ₁ [mPa·s, 20°C]: | 157 |
| PCH-302 | 9,0 % | V₀ [V]: | 1,70 |
| GGP-2-F | 9,0 % | γ₁/(Δn)²: | 4419 |
| GGP-3-F | 10,0 % | K₁ [pN]: | 12,3 |
| GGP-5-F | 6,0 % | | |
| CGG-3-F | 20,0 % | | |
| CBC-33F | 2,0 % | | |

### Beispiel 27

| | | | |
|---|---|---|---|
| PGP-2-3 | 13,0 % | Klärpunkt [°C]: | 80,0 |
| PGP-2-4 | 14,0 % | Δn [589 nm, 20°C]: | 0,1931 |
| PGP-3-2 | 9,0 % | Δε [1kHz, 20°C]: | 4,8 |
| PCH-301 | 12,0 % | γ₁ [mPa·s, 20°C]: | 152 |
| PCH-302 | 6,0 % | V₀ [V]: | 1,66 |
| GGP-2-F | 9,0 % | γ₁/(Δn)²: | 4076 |
| GGP-3-F | 11,0% | K₁[pN]: | 12,3 |
| GGP-5-F | 6,0 % | K₃ [pN]: | 12,7 |
| CGG-3-F | 20,0 % | K₃/K₁: | 1,04 |

### Beispiel 28

| | | | |
|---|---|---|---|
| PGP-2-3 | 14,0 % | Klärpunkt [°C]: | 80,5 |
| PGP-2-4 | 15,0% | Δn [589 nm, 20°C]: | 0,1939 |
| PGP-3-2 | 9,0 % | Δε [1kHz, 20°C]: | 4,8 |
| PCH-301 | 17,0 % | γ₁ [mPa·s, 20°C]: | 157 |
| GGP-2-F | 9,0 % | V₀ [V]: | 1,66 |
| GGP-3-F | 10,0 % | γ₁/(Δn)²: | 4176 |
| GGP-5-F | 6,0 % | K₁ [pN]: | 11,8 |
| CGG-3-F | 20,0 % | K₃ [pN]: | 12,5 |
| | | K₃/K₁: | 1,06 |

### Beispiel 29

| | | | |
|---|---|---|---|
| PGP-2-3 | 15,0 % | Klärpunkt [°C]: | 84,5 |
| PGP-2-4 | 15,0 % | Δn [589nm, 20°C]: | 0,2001 |
| PGP-3-2 | 9,0 % | Δε [1kHz, 20°C]: | 5,3 |
| PCH-301 | 13,0 % | γ₁ [mPa·s, 20°C]: | 172 |
| GGP-2-F | 10,0 % | V₀ [V]: | 1,64 |
| GGP-3-F | 10,0 % | γ₁/(Δn)²: | 4296 |
| GGP-5-F | 7,0 % | K₁ [pN]: | 12,4 |
| CGG-3-F | 21,0 % | K₃ [pN]: | 12,2 |
| | | K₃/K₁: | 0,98 |

### Beispiel 30

| | | | |
|---|---|---|---|
| PGP-2-3 | 15,0 % | Klärpunkt [°C]: | 83,0 |
| PGP-2-4 | 15,0 % | Δn [589 nm, 20°C]: | 0,2015 |
| PGP-3-2 | 9,0 % | Δε [1kHz, 20°C]: | 5,0 |
| PCH-301 | 12,0 % | γ₁ [mPa·s, 20°C]: | 159 |
| GGP-2-F | 9,0 % | V₀ [V]: | 1,72 |
| GGP-3-F | 10,0 % | γ₁/(Δn)²: | 3916 |
| GGP-5-F | 6,0 % | K₁ [pN]: | 13,1 |
| CGG-3-F | 20,0 % | K₃ [pN]: | 13,0 |
| PP-1-2V1 | 4,0 % | K₃/ K₁ : | 0,99 |

### Beispiel 31

| | | | |
|---|---|---|---|
| PGP-2-3 | 16,0 % | Klärpunkt [°C]: | 87,5 |
| PGP-2-4 | 16,0 % | Δn [589nm, 20°C]: | 0,2113 |
| PGP-3-2 | 11,0 % | Δε [1kHz, 20°C]: | 4,8 |
| PCH-301 | 9,0 % | γ₁ [mPa·s, 20°C]: | 174 |
| GGP-2-F | 9,0 % | V₀ [V]: | 1,83 |
| GGP-3-F | 10,0 % | γ₁/(Δn)²: | 3897 |
| GGP-5-F | 6,0 % | K₁ [pN]: | 14,5 |
| CGG-3-F | 18,0 % | K₃ [pN]: | 13,6 |
| PP-1-2V1 | 5,0 % | K₃/ K₁: | 0,94 |

### Vergleichsbeispiel 2

| | | | |
|---|---|---|---|
| FET-2Cl | 15,0% | Klärpunkt [°C]: | 80,3 |
| FET-3Cl | 6,0 % | Δn [589 nm, 20°C]: | 0,2106 |
| FET-5Cl | 19,0 % | Δε [1kHz, 20°C]: | 5,5 |
| PGIGI-3-Cl | 10,0 % | γ₁ [mPa·s, 20°C]: | 299 |
| PGIGI-5-Cl | 13,0 % | V₀ [V]: | 1,76 |
| PCH-301 | 10,0 % | γ₁/(Δn)²: | 6741 |
| GGP-5-Cl | 16,0 % | K₁ [pN]: | 14,4 |
| BCH-3F.F | 11,0 % | K₃ [pN]: | 19,6 |
| | | K₃/K₁: | 1,36 |

### Beispiel 32

| | | | |
|---|---|---|---|
| PGU-1-F | 5,00 % | Klärpunkt [°C]: | 79,0 |
| PGU-2-F | 4,00 % | Δn [589 nm, 20°C]: | 0,1047 |
| CC-3-V1 | 12,00 % | Δε [1kHz, 20°C]: | 5,3 |
| CCP-V-1 | 14,00 % | γ₁ [mPa·s, 20°C]: | 64 |
| CCG-V-F | 5,00 % | V₁₀ [V]: | 1,75 |
| CCP-30CF₃ | 6,00 % | V₅₀ [V]: | 2,11 |
| CCZU-3-F | 12,00 % | V₉₀ [V]: | 2,62 |
| PCH-301 | 9,00 % | V₉₀/V₁₀: | 1,499 |
| CC-4-V | 18,00 % | | |
| PUQU-2-F | 7,00 % | | |
| PGP-2-4 | 8,00 % | | |

### Beispiel 33

| | | | |
|---|---|---|---|
| CCP-20CF₃ | 2,00 % | Klärpunkt [°C]: | 79,0 |
| CCP-30CF₃ | 8,00 % | Δn [589 nm, 20°C]: | 0,0930 |
| CCZU-3-F | 13,00 % | Δε [1kHz,20°C]: | 5,9 |
| CC-3-V1 | 10,00 % | γ₁ [mPa·s, 20°C]: | 67 |
| PCH-301 | 8,00 % | V₁₀ [V]: | 1,50 |
| CCP-V-1 | 12,00 % | V₅₀[V]: | 1,65 |
| CCG-V-F | 10,00 % | V₉₀[V]: | 2,00 |
| CC-4-V | 18,00 % | V₉₀/V₁₀: | 1,511 |
| PUQU-1-F | 8,00 % | K₁ [pN]: | 11,8 |
| PUQU-2-F | 6,00 % | K₃ [pN]: | 13,5 |
| PGP-2-3 | 5,00 % | K₃/K₁: | 1,15 |

### Beispiel 34

| | | | |
|---|---|---|---|
| PGU-1-F | 3,00 % | Klärpunkt [°C]: | 81,0 |
| PGU-2-F | 5,00 % | Δn [589 nm, 20.°C]: | 0,1044 |
| CC-3-V1 | 11,00 % | Δε [1kHz, 20°C]: | 5,5 |
| CCP-V-1 | 14,00 % | γ₁ [mPa·s, 20°C]: | 65 |
| CCG-V-F | 8,00 % | V₁₀ [V]: | 1,70 |
| CCP-30CF₃ | 6,00 % | V₅₀[V]: | 2,06 |
| CCZU-3-F | 12,00 % | V₉₀ [V]: | 2,55 |
| PCH-301 | 7,00 % | V₉₀/V₁₀: | 1,500 |
| CC-4-V | 18,00 % | | |
| PUQU-2-F | 4,00 % | | |
| PUQU-3-F | 4,00 % | | |
| PGP-2-4 | 8,00 % | | |

### Beispiel 35

| | | | |
|---|---|---|---|
| CCP-20CF₃ | 4,00 % | Klärpunkt [°C]: | 79,0 |
| CCP-30CF₃ | 4,00 % | Δn [589 nm, 20°C]: | 0,1024 |
| CCCZU-3-F | 4,00 % | Δε [1kHz, 20°C]: | 6,1 |
| PUQU-1-F | 9,00 % | γ₁ [mPa·s, 20°C]: | 75 |
| PUQU-2-F | 7,00 % | V₁₀ [V]: | 1,76 |
| CC-3-V1 | 12,00 % | V₅₀ [V]: | 2,14 |
| CVCP-1V-OT | 14,00 % | V₉₀ [V]: | 2,66 |
| CVCP-2V-OT | 6,00 % | V₉₀/V₁₀: | 1,511 |
| PGP-2-3 | 4,00 % | | |
| PGP-2-4 | 6,00 % | | |
| CC-V2-V | 30,00 % | | |

### Beispiel 36

| | | | |
|---|---|---|---|
| CC-4-V | 18,00 % | Klärpunkt [°C]: | 74,5 |
| CCP-1 F.F.F | 2,50 % | Δn [589 nm, 20°C]: | 0,0893 |
| CCQU-2-F | 14,00 % | Δε [1kHz, 20°C]: | 12,8 |
| CCQU-3-F | 13,00 % | γ₁ [mPa·s, 20°C]: | 103 |
| CCQU-5-F | 11,00% | V₁₀ [V]: | 1,10 |
| CCQG-3-F | 8,00 % | V₅₀ [V]: | 1,35 |
| CCP-30CF₃ | 3,00 % | V₉₀ [V]: | 1,69 |
| PUQU-1-F | 8,00 % | V₉₀/V₁₀: | 1,539 |
| PUQU-2-F | 5,00 % | | |
| PUQU-3-F | 9,00 % | | |
| PGP-2-4 | 3,00 % | | |
| CCGU-3-F | 3,50 % | | |
| CBC-33 | 2,00 % | | |

### Beispiel 37

| | | | |
|---|---|---|---|
| CC-4-V | 14,00 % | Klärpunkt [°C]: | 82,0 |
| CC-3-V1 | 8,00 % | Δn [589 nm, 20°C]: | 0,0918 |
| CCQU-2-F | 14,00 % | Δε [1kHz, 20°C]: | 12,0 |
| CCQU-3-F | 12,00 % | γ₁ [mPa·s, 20°C]: | 106 |
| CCQU-5-F | 10,00 % | V₁₀ [V]: | 1,22 |
| CCP-2F.F.F | 4,00 % | V₅₀ [V]: | 1,50 |
| CCP-30CF₃ | 8,00 % | V₉₀ [V]: | 1,87 |
| PUQU-1-F | 8,00 % | V₉₀/V₁₀: | 1,535 |
| PUQU-2-F | 4,00 % | | |
| PUQU-3-F | 7,00 % | | |
| PGP-2-4 | 3,00 % | | |
| CCGU-3-F | 6,00 % | | |
| CBC-33 | 2,00 % | | |

### Beispiel 38

| | | | |
|---|---|---|---|
| CC-4-V | 18,00 % | Klärpunkt [°C]: | 74,5 |
| CCP-1 F.F.F | 6,00 % | Δn [589 nm, 20°C]: | 0,0890 |
| CCQU-2-F | 14,00 % | Δε [1kHz, 20°C]: | 12,6 |
| CCQU-3-F | 13,00 % | γ₁ [mPa·s, 20°C]: | 107 |
| CCQU-5-F | 12,00 % | V₁₀ [V]: | 1,10 |
| CCQG-3-F | 8,00 % | V₅₀ [V]: | 1,36 |
| PUQU-1-F | 7,00 % | V₉₀ [V]: | 1,71 |
| PUQU-2-F | 4,00 % | V₉₀/V₁₀: | 1,550 |
| PUQU-3-F | 7,00 % | | |
| PGP-2-3 | 4,00 % | | |
| CCGU-3-F | 7,00 % | | |

### Beispiel 39

| | | | |
|---|---|---|---|
| CC-4-V | 14,00 % | Klärpunkt [°C]: | 81,0 |
| CC-3-V1 | 8,00 % | Δn [589 nm, 20°C]: | 0,0911 |
| CCQU-2-F | 13,00 % | Δε [1kHz, 20°C]: | 11,5 |
| CCQU-3-F | 13,00 % | γ₁ [mPa·s, 20°C]: | 108 |
| CCQU-5-F | 10,00 % | V₁₀ [V]: | 1,24 |
| CCP-1F.F.F | 5,00 % | V₅₀ [V]: | 1,53 |
| CCQG-3-F | 2,00 % | V₉₀ [V]: | 1,91 |
| CCP-30CF₃ | 8,00 % | V₉₀/V₁₀: | 1,536 |
| PUQU-1-F | 7,00 % | | |
| PUQU-2-F | 3,00 % | | |
| PUQU-3-F | 6,00 % | | |
| PGP-2-3 | 4,00 % | | |
| CCGU-3-F | 7,00 % | | |

### Beispiel 40

| | | | |
|---|---|---|---|
| PGU-1-F | 8,00 % | Klärpunkt [°C]: | 80,0 |
| CC-3-V1 | 12,00 % | Δn [589 nm, 20°C]: | 0,1043 |
| CCP-V-1 | 14,00 % | Δε [1kHz, 20°C]: | 5,4 |
| CCG-V-F | 5,00 % | V₁₀ [V]: | 1,77 |
| CCP-30CF₃ | 6,00 % | V₅₀ [V]: | 2,13 |
| CCZU-3-F | 13,00 % | V₉₀ [V]: | 2,65 |
| PCH-301 | 10,00 % | V₉₀/V₁₀: | 1,494 |
| CC-4-V | 17,00 % | K₁[pN]: | 12,3 |
| PUQU-2-F | 3,00 % | K₃ [pN]: | 12,9 |
| PUQU-3-F | 4,00 % | K₃/K₁: | 1,05 |
| PGP-2-4 | 8,00 % | | |

### Beispiel 41

| | | | |
|---|---|---|---|
| CC-4-V | 14,00 % | Klärpunkt [°C): | 81,0 |
| CC-3-V1 | 8,00 % | Δn [589 nm, 20°C]: | 0,0921 |
| CCQU-2-F | 13,00 % | Δε [1kHz, 20°C]: | 11,4 |
| CCQU-3-F | 12,00 % | γ₁ [mPa·s, 20°C]: | 100 |
| CCQU-5-F | 11,00 % | V₁₀ [V]: | 1,25 |
| CCP-1F.F.F | 4,00 % | V₅₀ [V]: | 1,53 |
| BCH-3F.F.F | 3,00 % | V₉₀ [V]: | 1,90 |
| CCP-30CF₃ | 8,00 % | V₉₀/V₁₀: | 1,522 |
| PUQU-1-F | 9,00 % | | |
| PUQU-2-F | 7,00 % | | |
| PGP-2-3 | 4,00 % | | |
| CCGU-3-F | 6,00 % | | |
| CBC-33 | 1,00 % | | |

### Beispiel 42

| | | | |
|---|---|---|---|
| CC-4-V | 14,00 % | Klärpunkt [°C]: | 76,0 |
| CCQU-2-F | 13,00 % | Δn [589 nm, 20°C]: | 0,0878 |
| CCQU-3-F | 13,00 % | Δε [1kHz, 20°C]: | 12,5 |
| CCQU-5-F | 11,00 % | γ₁ [mPa·s, 20°C]: | 111 |
| CCP-1F.F.F | 8,00 % | V₁₀[V]: | 1,10 |
| CCQG-3-F | 8,00 % | V₅₀ [V]: | 1,36 |
| CCP-20CF₃ | 6,00 % | V₉₀ [V]: | 1,69 |
| PUQU-2-F | 7,00 % | V₉₀/V₁₀: | 1,537 |
| PUQU-3-F | 10,00 % | | |
| PGP-2-3 | 3,00 % | | |
| CCGU-3-F | 7,00 % | | |

### Beispiel 43

| | | | |
|---|---|---|---|
| CC-4-V | 18,00 % | Klärpunkt [°C]: | 74,0 |
| CCP-1 F.F.F | 7,00 % | Δn [589 nm, 20°C]: | 0,0887 |
| CCP-2F.F.F | 2,00 % | Δε [1kHz, 20°C]: | 11,9 |
| CCQU-2-F | 14,00 % | γ₁ [mPa·s, 20°C]: | 103 |
| CCQU-3-F | 13,00 % | V₁₀[V]: | 1,11 |
| CCQU-5-F | 11,00 % | V₅₀ [V]: | 1,37 |
| CCQG-3-F | 8,00 % | V₉₀ [V]: | 1,72 |
| PUQU-1-F | 9,00 % | V₉₀/V₁₀: | 1,545 |
| PUQU-2-F | 7,00 % | | |
| PGP-2-3 | 5,00 % | | |
| CCGU-3-F | 6,00 % | | |

### Beispiel 44

| | | | |
|---|---|---|---|
| CC-4-V | 12,00 % | Klärpunkt [°C]: | 81,5 |
| CC-3-V1 | 7,00 % | Δn [589 nm, 20°C]: | 0,0938 |
| CCQU-2-F | 13,00 % | Δε [1kHz, 20°C]: | 11,8 |
| CCQU-3-F | 12,00 % | γ₁ [mPa·s, 20°C]: | 111 |
| CCQU-5-F | 11,00 % | V₁₀ [V]: | 1,22 |
| CCP-1F.F.F | 5,00 % | V₅₀ [V]: | 1,50 |
| CCP-2F.F.F | 4,00 % | V₉₀ [V]: | 1,87 |
| CCP-30CF₃ | 8,00 % | V₉₀/V₁₀: | 1,533 |
| PUQU-1-F | 9,00 % | | |
| PUQU-3-F | 7,00 % | | |
| PGP-2-3 | 5,00 % | | |
| CCGU-3-F | 6,00 % | | |
| CBC-33 | 1,00 % | | |

### Beispiel 45

| | | | |
|---|---|---|---|
| CCP-20CF₃ | 2,00 % | Klärpunkt [°C]: | 79,5 |
| CCP-30CF₃ | 8,00 % | Δn [589 nm, 20°C]: | 0,0948 |
| CCZU-3-F | 13,00 % | Δε [1kHz, 20°C]: | 5,9 |
| CC-3-V1 | 10,00 % | γ₁ [mPa·s, 20°C]: | 64 |
| PCH-301 | 7,00 % | V₁₀ [V]: | 1,64 |
| CCP-V-1 | 12,00 % | V₅₀ [V]: | 1,99 |
| CCG-V-F | 10,00 % | V₉₀ [V]: | 2,48 |
| CC-4-V | 18,00 % | V₉₀/V₁₀: | 1,513 |
| PUCU-1-F | 8,00 % | K₁ [pN]: | 11,7 |
| PUQU-2-F | 6,00 % | K₃ [pN]: | 13,4 |
| PGP-2-2 | 6,00 % | K₃/K₁: | 1,15 |

### Beispiel 46

| | | | |
|---|---|---|---|
| CCP-20CF₃ | 2,00 % | Klärpunkt [°C]: | 79,5 |
| CCP-30CF₃ | 8,00 % | Δn [589 nm, 20°C]: | 0,0939 |
| CCZU-3-F | 13,00 % | Δε [1kHz,20°C]: | 6,0 |
| CC-3-V1 | 10,00 % | γ₁ [mPa·s, 20°C]: | 69 |
| PCH-301 | 7,00 % | V₁₀ [V]: | 1,66 |
| CCP-V-1 | 12,00 % | V₅₀ [V]: | 2,01 |
| CCG-V-F | 10,00 % | V₉₀ [V]: | 2,49 |
| CC-4-V | 18,00 % | V₉₀/V₁₀: | 1,497 |
| PUQU-1-F | 8,00 % | K₁ [pN]: | 11,8 |
| PUQU-2-F | 6,00 % | K₃ [pN]: | 13,3 |
| PGP-2-4 | 6,00 % | K₃/K₁: | 1,13 |

### Beispiel 47

| | | | |
|---|---|---|---|
| CCP-20CF₃ | 3,00 % | Klärpunkt [°C]: | 78,0 |
| CCP-30CF₃ | 7,00 % | Δn [589 nm, 20°C]: | 0,0996 |
| CCZU-3-F | 13,00 % | Δε [1kHz, 20°C]: | 5,7 |
| CC-3-V1 | 12,00 % | γ₁ [mPa·s, 20°C]: | 63 |
| PCH-301 | 7,00 % | V₁₀ [V]: | 1,68 |
| CCP-V-1 | 10,00 % | V₅₀ [V]: | 2,02 |
| CCG-V-F | 6,00 % | V₉₀ [V]: | 2,49 |
| CC-4-V | 18,00 % | V₉₀/N₁₀: | 1,479 |
| PUQU-1-F | 8,00 % | K₁ [pN]: | 12,1 |
| PUQU-2-F | 6,00 % | K₃ [pN]: | 12,5 |
| PGP-2-4 | 6,00 % | K₃ K₁: | 1,03 |
| PGP-2-2 | 4,00 % | | |

### Beispiel 48

| | | | |
|---|---|---|---|
| CCP-30CF₃ | 4,00 % | Klärpunkt [°C]: | 76,5 |
| CCZU-3-F | 10,00 % | Δn [589 nm, 20°C]: | 0,1090 |
| CCP-V-1 | 11,00 % | Δε [1kHz, 20°C]: | 6,3 |
| CCG-V-F | 8,00 % | γ₁ [mPa·s, 20°C]: | 66 |
| CC-4-V | 18,00 % | V₁₀ [V]: | 1,65 |
| CC-3-V1 | 13,00 % | V₅₀ [V]: | 1,96 |
| PCH-301 | 4,00 % | V₉₀ [V]: | 2,41 |
| PUQU-1-F | 8,00 % | V₉₀/V₁₀: | 1,458 |
| PUQU-2-F | 4,00 % | K₁ [pN]: | 12,3 |
| PUQU-3-F | 6,00 % | K₃ [pN]: | 12,1 |
| PGP-2-3 | 7,00 % | K₃/K₁ : | 0,99 |
| PGP-2-4 | 7,00 % | | |

### Beispiel 49

| | | | |
|---|---|---|---|
| CCZU-3-F | 12,00 % | Klärpunkt [°C]: | 80,0 |
| CCP-V-1 | 8,00 % | Δn [589 nm, 20°C]: | 0,1011 |
| CCG-V-F | 10,00 % | Δε [1kHz, 20°C]: | 6,2 |
| CC-3-V1 | 13,00 % | γ₁ [mPa·s, 20°C]: | 67 |
| CC-4-V | 18,00 % | V₁₀ [V]: | 1,64 |
| PCH-301 | 5,00 % | V₅₀ [V]. | 1,97 |
| PUQU-1-F | 8,00 % | V₉₀ [V]: | 2,45 |
| PUQU-2-F | 4,00 % | V₉₀/V₁₀: | 1,491 |
| PUQU-3-F | 6,00 % | K₁ [pN]: | 11,9 |
| PGP-2-3 | 4,00 % | K₃ [pN]: | 12,6 |
| PGP-2-4 | 6,00 % | K₃/K₁: | 1,06 |
| CVCC-V-2 | 3,00 % | | |
| CVCC-V-3 | 3,00 % | | |

### Beispiel 50

| | | | |
|---|---|---|---|
| CCZU-3-F | 12,00 % | Klärpunkt [°C]: | 77,0 |
| CCP-V-1 | 10,00 % | Δn [589 nm, 20°C]: | 0,1092 |
| CCG-V-F | 9,00 % | Δε [1kHz, 20°C]: | 6,3 |
| CC-4-V | 10,00 % | γ₁ [mPa·s, 20°C]: | 66 |
| CC-3-V1 | 13,00 % | V₁₀ [V]: | 1,65 |
| PCH-301 | 4,00 % | V₅₀ [V]: | 1,97 |
| PUQU-1-F | 8,00 % | V₉₀ [V]: | 2,42 |
| PUQU-2-F | 4,00 % | V₉₀/V₁₀: | 1,458 |
| PUQU-3-F | 6,00 % | K₁ [pN]: | 12,8 |
| PGP-2-3 | 7,00 % | K₃ [pN]: | 12,5 |
| PGP-2-4 | 7,00 % | K₃/ K₁: | 0,98 |
| CC-3-2V | 10,00 % | | |

### Beispiel 51

| | | | |
|---|---|---|---|
| PGP-2-3 | 14,00 % | Klärpunkt [°C]: | 78,5 |
| PGP-2-4 | 15,00 % | Δn [589 nm, 20°C]: | 0,1911 |
| PGP-3-2 | 9,00 % | Δε [1kHz, 20°C]: | 4,5 |
| PCH-301 | 19,00 % | γ₁ [mPa·s, 20°C]: | 149 |
| GGP-2-F | 10,00% | | |
| GGP-3-F | 10,00 % | | |
| GGP-5-F | 4,00 % | | |
| CGG-3-F | 19,00 % | | |

### Beispiel 52

| | | | |
|---|---|---|---|
| PGP-2-3 | 15,00 % | Klärpunkt [°C]: | 76,0 |
| PGP-2-4 | 15,00 % | Δn [589 nm, 20°C]: | 0,1888 |
| PGP-3-2 | 9,00 % | Δε [1kHz, 20°C]: | 5,2 |
| PCH-301 | 19,00 % | γ₁ [mPa·s, 20°C]: | 149 |
| CGG-3-F | 18,00 % | | |
| GGG-3-F | 8,00 % | | |
| GGG-5-F | 8,00 % | | |
| GGP-3-F | 8,00 % | | |

### Beispiel 53

| | | | |
|---|---|---|---|
| CCP-1F.F.F | 8,00 % | Klärpunkt [°C]: | 76,5 |
| CCP-3F.F.F | 5,00 % | Δn [589 nm, 20°C]: | 0,1045 |
| CCP-20CF₃ | 6,00 % | Δε [1kHz, 20°C]: | 8,1 |
| CCP-30CF₃ | 7,00 % | γ₁ [mPa·s, 20°C]: | 69 |
| PGU-2-F | 6,00 % | K₁ [pN]: | 12,4 |
| PUQU-2-F | 9,00 % | K₃ [pN]: | 12,5 |
| PUQU-3-F | 9,00 % | K₃/K₁: | 1,00 |
| CCP-V-1 | 9,00 % | | |
| CCP-V2-1 | 7,00 % | | |
| CC-3-V1 | 13,00 % | | |
| CC-4-V | 15,00 % | | |
| PGP-2-3 | 6,00 % | | |

### Beispiel 54

| | | | |
|---|---|---|---|
| CCP-1 F.F.F | 8,00 % | Klärpunkt [°C]: | 74,5 |
| CCP-3F.F.F | 10,00 % | Δn [589 nm, 20°C]: | 0,1046 |
| CCP-20CF₃ | 6,00 % | Δε [1kHz, 20°C]: | 7,9 |
| CCP-30CF₃ | 7,00 % | γ₁ [mPa·s, 20°C]: | 72 |
| PUQU-2-F | 10,00 % | K₁ [pN]: | 14,9 |
| PUQU-3-F | 10,00 % | K₃ [pN]: | 13,7 |
| CCP-V-1 | 10,00 % | K₃/K₁ : | 0,92 |
| CCP-V2-1 | 3,00 % | | |
| CC-3-V1 | 12,00 % | | |
| CC-5-V | 13,00 % | | |
| PGP-2-3 | 5,50 % | | |
| PP-1-2V1 | 5,50 % | | |

### Beispiel 55

| | | | |
|---|---|---|---|
| PGU-1-F | 9,00 % | Klärpunkt [°C]: | 80,0 |
| CC-3-V1 | 12,00 % | Δn [589nm, 20°C]: | 0,1029 |
| CCP-V-1 | 14,00 % | Δε [1kHz, 20°C]: | 5,0 |
| CCG-V-F | 5,00 % | K₁ [pN]: | 12,4 |
| CCP-30CF₃ | 6,00 % | K₃ [pN]: | 13,1 |
| CCZU-3-F | 12,00 % | K₃/K₁: | 1,05 |
| PCH-301 | 9,00 % | | |
| CC-4-V | 18,00 % | | |
| PUQU-2-F | 7,00 % | | |
| PGP-2-4 | 8,00 % | | |

### Beispiel 56

| | | | |
|---|---|---|---|
| PGIGI-3-F | 10,00 % | Klärpunkt[°C]: | 80,0 |
| PP-1-2V1 | 10,00 % | Δn [589 nm, 20°C]: | 0,2024 |
| PCH-301 | 19,00 % | Δε [1kHz, 20°C]: | 6,1 |
| PGP-2-3 | 14,00 % | γ₁ [mPa·s, 20°C]: | 178 |
| PGP-2-4 | 14,00 % | K₁ [pN]: | 18,6 |
| PGU-2-F | 9,00 % | K₃ [pN]: | 25,1 |
| PGU-3-F | 9,00 % | K₃/K₁ : | 1,35 |
| PGU-5-F | 8,00 % | | |
| CBC-33F | 4,00 % | | |
| CBC-53F | 3,00 % | | |

### Beispiel 57

| | | | |
|---|---|---|---|
| CC-4-V | 18,00 % | Klärpunkt [°C]: | 82,5 |
| CC-3-V1 | 7,00 % | Δn [589 nm, 20°C]: | 0,0944 |
| CCP-20CF₃ | 8,00 % | Δε [1kHz, 20°C]: | 11,3 |
| BCH-3F.F.F | 5,00 % | γ₁ [mPa·s, 20°C]: | 102 |
| CCZU-3-F | 14,00 % | V₁₀ [V]: | 1,22 |
| PUQU-2-F | 7,00 % | V₅₀ [V]: | 1,51 |
| PUQU-3-F | 10,00 % | V₉₀ [V]: | 1,86 |
| CCQU-2-F | 6,00 % | V₉₀/C₁₀: | 1,531 |
| CCQU-3-F | 13,00 % | | |
| PGP-2-3 | 3,00 % | | |
| CCGU-3-F | 7,00 % | | |
| CBC-33 | 2,00 % | | |

### Beispiel58

| | | | |
|---|---|---|---|
| CC-4-V | 12,00 % | Klärpunkt [°C]: | 76,0 |
| CCQU-2-F | 13,00 % | Δn [589 nm, 20°C]: | 0,0889 |
| CCQU-3-F | 14,00 % | Δε [1kHz, 20°C]: | 11,6 |
| CCQU-5-F | 11,00 % | γ₁ [mPa·s, 20°C]: | 119 |
| CCP-1F.F.F | 6,00 % | V₁₀ [V]: | 1,14 |
| CCP-2F.F.F | 5,00 % | V₅₀ [V]: | 1,40 |
| CCQG-2-F | 7,00 % | V₉₀ [V]: | 1,76 |
| CCP-20CF₃ | 5,00 % | V₉₀/V₁₀: | 1,540 |
| PUQG-2-F | 9,00 % | | |
| PUQG-3-F | 8,00 % | | |
| PGP-2-3 | 3,00 % | | |
| CCGU-3-F | 7,00 % | | |

### Beispiel 59

| | | | |
|---|---|---|---|
| CCP-2F.F.F | 8,00 % | Klärpunkt [°C]: | 73,0 |
| CCP-3F.F.F | 5,00 % | Δn [589 nm, 20°C]: | 0,1099 |
| PGU-1-F | 5,00 % | Δε [1kHz, 20°C]: | 4,5 |
| PUQU-1-F | 6,00 % | γ₁ [mPa·s, 20°C]: | 61 |
| PUQU-3-F | 4,00 % | V₁₀[V]: | 1,86 |
| CC-3-V1 | 13,00 % | V₅₀ [V]: | 2,22 |
| CC-4-V | 18,00 % | V₉₀ [V]: | 2,74 |
| CCP-V-1 | 14,00 % | V₉₀/V₁₀: | 1,474 |
| CCP-V2-1 | 3,00 % | K₁[pN]: | 11,8 |
| PCH-301 | 10,00 % | K₃ [pN]: | 11,8 |
| PGP-2-3 | 6,00 % | K₃/K₁: | 1,00 |
| PGP-2-4 | 8,00 % | | |

### Beispiel 60

| | | | |
|---|---|---|---|
| CCP-20CF₃ | 4,00 % | Klärpunkt [°C]: | 78,0 |
| CCP-30CF₃ | 4,00 % | Δn [589 nm, 20°C]: | 0,0987 |
| CCZU-3-F | 12,00 % | Δε [1kHz, 20°C]: | 5,6 |
| CCP-V-1 | 13,00 % | γ₁ [mPa·s, 20°C]: | 64 |
| CCP-V2-1 | 4,00 % | V₁₀ [V]: | 1,74 |
| CC-4-V | 18,00 % | V₅₀ [V]: | 2,09 |
| CC-3-V1 | 13,00 % | V₉₀ [V]: | 2,57 |
| PCH-301 | 8,00 % | V₉₀/V₁₀: | 1,477 |
| PUQU-1-F | 6,00 % | K₁ [pN]: | 12,5 |
| PUQU-2-F | 4,00 % | K₃ [pN]: | 12,9 |
| PUQU-3-F | 6,00 % | K₃/K₁: | 1,03 |
| PGP-2-2 | 4,00 % | | |
| PGP-2-4 | 4,00 % | | |

### Beispiel 61

| | | | |
|---|---|---|---|
| CCP-20CF₃ | 4,00 % | Klärpunkt [°C]: | 82,0 |
| CCP-30CF₃ | 4,00 % | Δn [589 nm, 20°C]: | 0,1045 |
| CCQU-2-F | 5,00 % | Δε [1kHz, 20°C]: | 5,6 |
| CCQU-3-F | 12,00 % | γ₁ [mPa·s, 20°C]: | 76 |
| CCQU-5-F | 5,00 % | V₁₀ [V]: | 1,79 |
| CC-3-V1 | 16,00 % | V₅₀ [V]: | 2,14 |
| CC-4-V | 12,00 % | V₉₀ [V]: | 2,64 |
| CVCP-1V-OT | 16,00 % | V₉₀/V₁₀: | 1,479 |
| PGP-2-2V | 7,00 % | K₁[pN]: | 12,9 |
| PGP-2-4 | 7,00 % | K₃ [pN]: | 13,5 |
| GU-1V2-F | 12,00% | K₃/K₁: | 1,05 |

### Beispiel 62

| | | | |
|---|---|---|---|
| CCP-20CF₃ | 4,00 % | Klärpunkt [°C]: | 78,5 |
| CCP-30CF₃ | 4,00 % | Δn [589 nm, 20°C]: | 0,0990 |
| CCZU-3-F | 12,00 % | Δε [1kHz, 20°C]: | 5,6 |
| CCP-V-1 | 13,00 % | γ₁ [mPa·s, 20°C]: | 65 |
| CCP-V2-1 | 4,00 % | V₁₀ [V]: | 1,74 |
| CC-4-V | 18,00 % | V₅₀ [V]: | 2,09 |
| CC-3-V1 | 13,00 % | V₉₀[V]: | 2,60 |
| PCH-301 | 8,00 % | V₉₀/V₁₀: | 1,491 |
| PUQU-1-F | 6,00 % | K₁[pN]: | 12,5 |
| PUQU-2-F | 4,00 % | K₃ [pN]: | 13,1 |
| PUQU-3-F | 6,00 % | K₃/K₁: | 1,05 |
| PGP-2-3 | 4,00 % | | |
| PGP-2-4 | 4,00 % | | |

### Beispiel 63 (Vergleichsbeispiel)

| | | | |
|---|---|---|---|
| CCP-20CF₃ | 4,00 % | Klärpunkt [°C]: | 81,0 |
| CCP-30CF₃ | 4,00 % | Δn [589 nm, 20°C]: | 0,0982 |
| CCZU-3-F | 12,00 % | Δε [1kHz, 20°C]: | 6,3 |
| CCP-V-1 | 16,00 % | γ₁ [mPa·s, 20°C]: | 67 |
| CCP-V2-1 | 4,00 % | V₁₀[V]: | 1,70 |
| CC-4-V | 18,00 % | V₅₀ [V]: | 2,04 |
| CC-3-V1 | 13,00 % | V₉₀[V]: | 2,52 |
| PCH-301 | 5,00 % | V₉₀/V₁₀: | 1,487 |
| PUQU-2-F | 8,00 % | K₁ [pN]: | 12,6 |
| PUQU-3-F | 8,00 % | K₃ [pN]: | 13,7 |
| PGP-2-F | 4,00 % | K₃/K₁: | 1,09 |
| PGP-4-F | 4,00 % | | |

### Beispiel 64

| | | | |
|---|---|---|---|
| CCQG-2-F | 5,00 % | Klärpunkt [°C]: | 79,5 |
| CCQG-3-F | 6,00 % | Δn [589 nm, 20°C]: | 0,1034 |
| CCQU-2-F | 10,00 % | Δε [1kHz, 20°C]: | 6,0 |
| CCQU-3-F | 12,00 % | γ₁ [mPa·s, 20°C]: | 78 |
| CC-3-V1 | 16,00 % | V₁₀[V]: | 1,69 |
| CC-4-V | 9,00 % | V₅₀ [V]: | 2,03 |
| CVCP-1 V-OT | 16,00 % | V₉₀ [V]: | 2,52 |
| PGP-2-3 | 7,00 % | V₉₀/V₁₀: | 1,488 |
| PGP-2-4 | 7,00 % | K₁ [pN]: | 12,4 |
| GU-1V2-F | 12,00 % | K₃ [pN]: | 12,9 |
| | | K₃/K₁: | 1,04 |

### Beispiel 65

| | | | |
|---|---|---|---|
| CVCP-1V-OT | 12,00 % | Klärpunkt [°C]: | 81,5 |
| CCQU-2-F | 12,00 % | Δn [589 nm, 20°C]: | 0,1004 |
| CCQU-3-F | 10,00 % | Δε [1kHz, 20°C]: | 5,6 |
| CCP-2F.F.F | 11,00 % | γ₁ [mPa·s, 20°C]: | 82 |
| CCP-3F.F.F | 12,00 % | V₁₀ [V]: | 1,91 |
| CC-3-V1, | 14,00 % | V₅₀ [V]: | 2,29 |
| CC-5-V | 10,00 % | V₉₀ [V]: | 2,83 |
| PGP-2-4 | 6,00 % | V₉₀/V₁₀: | 1,483 |
| PP-1-2V1 | 13,00 % | K₁ [pN]: | 14,2 |
| | | K₃ [pN]: | 15,0 |
| | | K₃/K₁: | 1,06 |

### Beispiel 66

| | | | |
|---|---|---|---|
| CCP-20CF₃ | 3,50 % | Klärpunkt [°C]: | 79,5 |
| CCP-30CF₃ | 4,50 % | Δn [589 nm, 20°C]: | 0,0991 |
| CCZU-3-F | 12,00 % | Δε [1kHz, 20°C]: | 5,6 |
| CC-3-V1 | 13,00 % | γ₁ [mPa·s, 20°C]: | 65 |
| PCH-301 | 7,00 % | V₁₀ [V]: | 1,73 |
| CCP-V-1 | 13,00 % | V₅₀ [V]: | 2,08 |
| CCP-V2-1 | 5,00 % | V₉₀ [V]: | 2,58 |
| CC-4-V | 18,00 % | V₉₀/V₁₀: | 1,491 |
| PUQU-2-F | 8,00 % | K₁[pN]: | 12,7 |
| PUQU-3-F | 8,00 % | K₃ [pN]: | 13,1 |
| PGP-2-4 | 8,00 % | K₃/K₁ : | 1,03 |

### Beispiel 67

| | | | |
|---|---|---|---|
| CCZU-3-F | 12,00 % | Klärpunkt [°C]: | 79,5 |
| CC-3-V1 | 13,00 % | Δn[589nm,20°C]: | 0,1029 |
| CC-4-V | 18,00 % | Δε [1kHz, 20°C]: | 7,8 |
| PCH-301 | 8,00 % | γ₁ [mPa·s, 20°C]: | 77 |
| CCP-V-1 | 14,00 % | V₁₀ [V]: | 1,53 |
| PUQU-2-F | 6,00 % | V₅₀ [V]: | 1,84 |
| PUQU-3-F | 6,00 % | V₉₀ [V]: | 2,28 |
| CDUQU-2-F | 6,00 % | V₉₀/V₁₀: | 1,490 |
| CDUQU-4-F | 6,00 % | K₁[pN]: | 12,6 |
| PGP-2-3 | 6,00 % | K₃[pN]: | 12,7 |
| PGP-2-4 | 5,00 % | K₃/K₁ : | 1,00 |

### Beispiel 68

| | | | |
|---|---|---|---|
| BCH-3F.F.F | 9,00 % | Klärpunkt [°C]: | 71,5 |
| BCH-5F.F.F | 6,00 % | Δn [589 nm, 20°C]: | 0,1134 |
| PUQU-1-F | 7,00 % | Δε [1kHz, 20°C]: | 8,4 |
| PUQU-2-F | 8,00 % | γ₁ [mPa·s, 20°C]: | 74 |
| PUQU-3-F | 5,00 % | V₁₀ [V]: | 1,40 |
| CC-3-V1 | 12,00 % | V₅₀ [V]: | 1,69 |
| CC-5-V | 10,00 % | V₉₀ [V]: | 2,09 |
| CCP-V-1 | 14,00 % | V₉₀/V₁₀: | 1,493 |
| PCH-301 | 7,00 % | K₁ [pN]: | 11,7 |
| PGP-2-4 | 10,00 % | K₃ [pN]: | 11,4 |
| CCQU-3-F | 7,00 % | K₃/K₁: | 0,97 |
| CCQU-5-F | 5,00 % | | |

### Beispiel 69

| | | | |
|---|---|---|---|
| CCP-20CF₃ | 2,00 % | Klärpunkt [°C]: | 80,0 |
| CCP-30CFₛ | 8,00 % | Δn[589nm,20°C]: | 0,0950 |
| CCZU-3-F | 13,00 % | Δε [1kHz, 20°C]: | 6,0 |
| CC-3-V1 | 10,00 % | γ₁ [mPa·s, 20°C]: | 67 |
| PCH-301 | 7,00 % | V₁₀ [V]: | 1,67 |
| CCP-V-1 | 12,00% | V₅₀ [V]: | 2,03 |
| CCG-V-F | 10,00 % | V₉₀ [V]: | 2,56 |
| CC-4-V | 18,00 % | V₉₀/V₁₀: | 1,533 |
| PUQU-1-F | 8,00 % | K₁ [pN]: | 11,8 |
| PUQU-2-F | 6,00 % | K₃ [pN]: | 13,5 |
| PGP-2-3 | 6,00 % | K₃/K₁: | 1,14 |

### Beispiel 70

| | | | |
|---|---|---|---|
| CCP-20CF₃ | 2,00 % | Klärpunkt [°C]: | 79,5 |
| CCP-30CF₃ | 8,00 % | Δn [589 nm, 20°C]: | 0,0946 |
| CCZU-3-F | 13,00 % | Δε [1kHz, 20°C]: | 5,9 |
| CC-3-V1 | 10,00 % | V₁₀[V]: | 1,64 |
| PCH-301 | 7,00 % | V₅₀ [V]: | 2,00 |
| CCP-V-1 | 12,00 % | V₉₀ [V]: | 2,53 |
| CCG-V-F | 10,00% | V₉₀/V₁₀: | 1,543 |
| CC-4-V | 18,00% | K₁ [pN]: | 11,7 |
| PUQU-1-F | 8,00 % | K₃ [pN]: | 13,4 |
| PUQU-2-F | 6,00 % | K₃/K₁ : | 1,15 |
| PGP-2-4 | 6,00 % | | |

### Beispiel 71

| | | | |
|---|---|---|---|
| CCP-20CF₃ | 2,00 % | Klärpunkt [°C]: | 81,0 |
| CCP-30CF₃ | 8,00 % | Δn [589 nm, 20°C]: | 0,0951 |
| CCZU-3-F | 13,00 % | Δε [1kHz, 20°C]: | 6,0 |
| CC-3-V1 | 10,00 % | γ₁ [mPa·s, 20°C]: | 67 |
| PCH-301 | 7,00 % | V₁₀ [V]: | 1,67 |
| CCP-V-1 | 12,00 % | V₅₀[V]: | 2,03 |
| CCG-V-F | 10,00 % | V₉₀ [V]: | 2,56 |
| CC-4-V | 18,00 % | V₉₀/V₁₀: | 1,533 |
| PUCU-1-F | 8,00 % | K₁ [pN]: | 11,8 |
| PUQU-2-F | 6,00 % | K₃ [pN]: | 13,9 |
| PGP-2-2V | 6,00 % | K₃/K₁: | 1,18 |

### Beispiel 72

| | | | |
|---|---|---|---|
| CCP-20CF₃ | 3,50 % | Klärpunkt [°C]: | 82,0 |
| CCP-30CF₃ | 4,50 % | Δn [589 nm, 20°C]: | 0,1000 |
| CCZU-3-F | 12,00 % | Δε [1kHz, 20°C]: | 5,7 |
| CCP-V-1 | 13,00 % | γ₁ [mPa·s, 20°C]: | 66 |
| CCP-V2-1 | 5,00 % | V₁₀ [V]: | 1,76 |
| CC-4-V | 18,00 % | V₅₀ [V]: | 2,11 |
| CC-3-V1 | 13,00 % | V₉₀[V]: | 2,62 |
| PCH-301 | 7,00 % | V₉₀/V₁₀: | 1,489 |
| PUQU-2-F | 8,00 % | K₁ [pN]: | 12,9 |
| PUQU-3-F | 8,00 % | K₃ [pN]: | 13,8 |
| PGP-2-2V | 8,00 % | K₃/K₁ : | 1,07 |

### Beispiel 73 (Vergleichsbeispiel)

| | | | |
|---|---|---|---|
| CCP-20CF₃ | 0,00 % | Klärpunkt [°C]: | 80,0 |
| CCP-30CF₃, | 4,00 % | Δn [589 nm, 20°C]: | 0,0996 |
| CCZU-3-F | 12,00 % | Δε [1kHz, 20°C]: | 6,5 |
| CCP-V-1 | 13,00 % | K₁ [pN]: | 11,9 |
| CCP-V2-1 | 5,00 % | K₃ [pN]: | 13,7 |
| CC-4-V | 15,00 % | K₃/K₁: | 1,15 |
| CC-3-V1 | 13,00 % | | |
| PCH-301 | 6,00 % | | |
| PUQU-2-F | 8,00 % | | |
| PUQU-3-F | 8,00 % | | |
| PGP-2-F | 5,00 % | | |
| PGP-4-F | 3,00 % | | |
| CCG-V-F | 8,00 % | | |

### Beispiel 74 (Vergleichsbeispiel)

| | | | |
|---|---|---|---|
| CCP-20CF₃ | 2,00 % | Klärpunkt [°C]: | 79,0 |
| CCP-30CF₃ | 4,00 % | Δn [589 nm, 20°C]: | 0,0992 |
| CCZU-3-F | 10,00 % | Δε [1kHz, 20°C]: | 6,4 |
| CCP-V-1 | 13,00 % | K₁ [pN]: | 11,8 |
| CCP-V2-1 | 0,00 % | K₃ [pN]: | 14,0 |
| CC-4-V | 15,00 % | K₃/K₁ : | 1,19 |
| CC-3-V1 | 13,00 % | | |
| PCH-301 | 9,00 % | | |
| PUQU-2-F | 8,00 % | | |
| PUQU-3-F | 8,00 % | | |
| PGP-2-F | 5,00 % | | |
| PGP-4-F | 3,00 % | | |
| CVCP-1 V-OT | 10,00 % | | |

### Beispiel 75

| | | | |
|---|---|---|---|
| CCP-2F.F.F | 5,00 % | Klärpunkt [°C]: | 75,5 |
| CCP-3F.F.F | 11,00 % | Δn [589 nm, 20°C]: | 0,1086 |
| PUQU-2-F | 6,00 % | Δε [1kHz, 20°C]: | 4,9 |
| PUQU-3-F | 8,00 % | γ₁ [mPa·s, 20°C]: | 67 |
| CC-3-V1 | 12,00 % | V₁₀ [V]: | 1,83 |
| CC-4-V | 14,00 % | V₅₀ [V]: | 2,19 |
| CCP-V-1 | 11,00 % | V₉₀ [V]: | 2,71 |
| CCP-V2-1 | 8,00 % | V₉₀/V₁₀: | 1,485 |
| PCH-301 | 11,00 % | K₁ [pN]: | 12,0 |
| PGP-2-3 | 7,00 % | K₃ [pN]: | 12,4 |
| PGP-2-4 | 7,00 % | K₃/K₁: | 1,03 |

### Beispiel 76

| | | | |
|---|---|---|---|
| CCP-20CF₃ | 4,00 % | Klärpunkt [°C]: | 75,5 |
| CCP-30CF₃ | 4,00 % | Δn [589 nm, 20°C]: | 0,1076 |
| PGU-2-F | 2,00 % | Δε [1kHz, 20°C]: | 4,5 |
| PGU-3-F | 4,00 % | γ₁ [mPa·s, 20°C]: | 61 |
| PUQU-2-F | 5,00 % | V₁₀ [V]: | 1,86 |
| PUQU-3-F | 6,00 % | V₅₀ M: | 2,23 |
| CC-3-V1 | 12,00 % | V₉₀ M: | 2,77 |
| CC-4-V | 16,00 % | V₉₀/V₁₀: | 1,493 |
| CCP-V-1 | 15,00 % | K₁ [pN]: | 11,6 |
| CCG-V-F | 12,00 % | K₃ [pN]: | 12,5 |
| PCH-301 | 10,00 % | K₃/K₁: | 1,08 |
| PGP-2-3 | 5,00 % | | |
| PGP-2-4 | 5,00 % | | |

### Beispiel 77

| | | | |
|---|---|---|---|
| CCP-30CF₃ | 4,00 % | Klärpunkt [°C]: | 79,0 |
| CCZU-2-F | 3,00 % | Δn [589 nm, 20°C]: | 0,1007 |
| CCZU-3-F | 14,00 % | Δε [1kHz, 20°C]: | 5,5 |
| CC-3-V1 | 13,00 % | γ₁ [mPa·s, 20°C]: | 66 |
| CC-4-V | 18,00 % | V₁₀ [V]: | 1,75 |
| PCH-301 | 8,00 % | V₅₀ [V]: | 2,09 |
| CCP-V-1 | 16,00 % | V₉₀ [V]: | 2,59 |
| PUQU-2-F | 6,00 % | V₉₀/V₁₀: | 1,477 |
| PUQU-3-F | 8,00 % | K₁ [pN]: | 12,4 |
| PGP-2-3 | 5,00 % | K₃ [pN]: | 12,7 |
| PGP-2-4 | 5,00 % | K₃/K₁: | 1,02 |

### Beispiel 78

| | | | |
|---|---|---|---|
| CVCP-1V-OT | 8,00 % | Klärpunkt [°C]: | 79,0 |
| CCZU-2-F | 3,00 % | Δn [589 nm, 20°C]: | 0,1011 |
| CCZU-3-F | 14,00 % | Δε [1kHz, 20°C]: | 5,7 |
| CC-3-V1 | 13,00 % | γ₁ [mPa·s, 20°C]: | 69 |
| CC-4-V | 18,00 % | V₁₀ [V]: | 1,69 |
| PCH-301 | 8,50 % | V₅₀ [V]: | 2,03 |
| CCP-V-1 | 11,50 % | V₉₀ [V]: | 2,50 |
| PUQU-2-F | 6,00 % | V₉₀/V₁₀: | 1,481 |
| PUQU-3-F | 8,00 % | K₁ [pN]: | 12,0 |
| PGP-2-3 | 5,00 % | K₃ [pN]: | 13,0 |
| PGP-2-4 | 5,00 % | K₃/K₁ : | 1,08 |

### Beispiel 79

| | | | |
|---|---|---|---|
| CCP-20CF₃ | 4,00 % | Klärpunkt [°C]: | 75,0 |
| CCP-30CF₃ | 4,00 % | Δn [589 nm, 20°C]: | 0,1013 |
| PUQU-2-F | 7,00 % | Δε [1kHz, 20°C]: | 4,5 |
| PUQU-3-F | 9,00 % | γ₁ [mPa·s, 20°C]: | 65 |
| CCP-3F.F.F | 5,00 % | V₁₀ [V]: | 1,93 |
| CCP-V-1 | 11,00 % | V₅₀ [V]: | 2,30 |
| CCP-V2-1 | 9,00 % | V₉₀ [V]: | 2,85 |
| CC-5-V | 15,00 % | V₉₀/V₁₀: | 1,478 |
| CC-3-V1 | 13,00 % | K₁ [pN]: | 12,3 |
| PCH-301 | 15,00 % | K₃ [pN]: | 13,6 |
| PGP-2-3 | 4,00 % | K₃/K₁: | 1,10 |
| PGP-2-4 | 4,00 % | | |

### Beispiel 80

| | | | |
|---|---|---|---|
| CCP-20CF₃ | 4,00 % | Klärpunkt [°C]: | 75,0 |
| CCP-30CF₃ | 4,00 % | Δn [589 nm, 20°C]: | 0,1071 |
| PGU-2-F | 2,00 % | Δε [1kHz, 20°C]: | 4,1 |
| PGU-3-F | 4,00 % | γ₁ [mPa·s, 20°C]: | 59 |
| PUQU-2-F | 4,00 % | V₁₀ [V]: | 1,96 |
| PUQU-3-F | 6,00 % | V₅₀ [V]: | 2,34 |
| CC-3-V1 | 13,00 % | V₉₀ [V]: | 2,90 |
| CC-4-V | 16,00 % | V₉₀/V₁₀: | 1,477 |
| CCP-V-1 | 16,00 % | K₁ [pN]: | 11,7 |
| CCG-V-F | 9,00 % | K₃ [pN]: | 12,6 |
| PCH-301 | 12,00 % | K₃/K₁ : | 1,08 |
| PGP-2-3 | 5,00 % | | |
| PGP-2-4 | 5,00 % | | |

### Beispiel 81

| | | | |
|---|---|---|---|
| CCP-1 F.F.F | 8,00 % | Klärpunkt [°C]: | 76,0 |
| CCP-3F.F.F | 10,00 % | Δn [589 nm, 20°C]: | 0,1041 |
| CCP-20CF₃ | 10,00 % | Δε [1kHz, 20°C]: | 7,9 |
| CCP-30CF₃ | 4,00 % | γ₁ [mPa·s, 20°C]: | 78 |
| PUQU-2-F | 10,00 % | V₁₀ [V]: | 1,50 |
| PUQU-3-F | 10,00 % | V₅₀ [V]: | 1,83 |
| PCH-301 | 5,00 % | V₉₀ [V]: | 2,30 |
| CCP-V-1 | 10,00 % | V₉₀/V₁₀: | 1,530 |
| CCP-V2-1 | 8,00 % | K₁ [pN]: | 12,1 |
| CC-3-V1 | 12,00 % | K₃ [pN]: | 13,5 |
| CC-5-V | 5,00 % | K₃/K₁: | 1,12 |
| PGP-2-3 | 4,00 % | | |
| PP-1-2V1 | 4,00 % | | |

### Beispiel 82

| | | | |
|---|---|---|---|
| CCP-20CF₃ | 4,00 % | Klärpunkt [°C]: | 80,0 |
| CCP-30CF₃ | 4,00 % | Δn [589 nm, 20°C]: | 0,1038 |
| PGU-3-F | 5,00 % | Δε [1kHz, 20°C]: | 6,0 |
| PUQU-2-F | 6,00 % | γ₁ [mPa·s, 20°C]: | 69 |
| PUQU-3-F | 10,00 % | V₁₀ [V]: | 1,67 |
| CC-3-V1 | 13,00 % | V₅₀ [V]: | 2,01 |
| CC-4-V | 18,00 % | V₉₀ [V]: | 2,51 |
| CCP-V-1 | 12,00 % | V₉₀/V₁₀: | 1,503 |
| CCP-V2-1 | 5,00 % | K₁ [pN]: | 12,1 |
| CCG-V-F | 8,00 % | K₃ [pN]: | 13,5 |
| PCH-301 | 6,00 % | K₃/K₁: | 1,11 |
| PGP-2-3 | 5,00 % | | |
| CCGU-3-F | 4,00 % | | |

### Beispiel 83

| | | | |
|---|---|---|---|
| CCP-20CF₃ | 4,00 % | Klärpunkt [°C]: | 78,0 |
| CCP-30CF₃ | 4,00 % | Δn [589 nm, 20°C]: | 0,1143 |
| PGU-3-F | 3,00 % | Δε [1kHz, 20°C]: | 4,9 |
| PUQU-2-F | 7,00 % | γ₁ [mPa·s, 20°C]: | 68 |
| PUQU-3-F | 10,00 % | V₁₀ [V]: | 1,91 |
| CC-3-V1 | 16,00 % | V₅₀ [V]: | 2,27 |
| CC-4-V | 10,00 % | V₉₀ [V]: | 2,80 |
| PCH-301 | 12,00 % | V₉₀/V₁₀: | 1,466 |
| CCP-V-1 | 12,00 % | K₁ [pN]: | 12,9 |
| CCP-V2-1 | 10,00 % | K₃ [pN]: | 13,5 |
| PGP-2-3 | 6,00 % | K₃/K₁ : | 1,04 |
| PGP-2-4 | 6,00 % | | |

### Beispiel 84

| | | | |
|---|---|---|---|
| CCP-20CF₃ | 4,00 % | Klärpunkt [°C]: | 77,5 |
| CCP-30CF₃ | 4,00 % | Δn [589 nm, 20°C]: | 0,1147 |
| PUQU-2-F | 6,00 % | Δε [1kHz, 20°C]: | 5,0 |
| PUQU-3-F | 10,00 % | γ₁ [mPa·s, 20°C]: | 70 |
| CC-3-V1 | 14,00 % | V₁₀ [V]: | 1,94 |
| CC-4-V | 10,00 % | V₅₀ [V]: | 2,31 |
| PCH-301 | 10,00 % | V₉₀ [V]: | 2,84 |
| CCP-V-1 | 10,00 % | V₉₀/V₁₀: | 1,464 |
| CCP-V2-1 | 10,00 % | K₁ [pN]: | 13,6 |
| CCGU-3-F | 6,00 % | K₃ [pN]: | 14,4 |
| PP-1-2V1 | 10,00 % | K₃/K₁: | 1,06 |
| PGP-2-4 | 6,00 % | | |

### Beispiel 85

| | | | |
|---|---|---|---|
| CCP-20CF₃ | 4,00 % | Klärpunkt [°C]: | 79,0 |
| CCP-30CF₃ | 4,00 % | Δn [589 nm, 20°C]: | 0,1049 |
| PGU-3-F | 5,00 % | Δε [1kHz, 20°C]: | 6,0 |
| PUQU-2-F | 8,00 % | γ₁ [mPa·s, 20°C]: | 68 |
| PUQU-3-F | 10,00 % | V₁₀ [V]: | 1,69 |
| CC-3-V1 | 13,00 % | V₅₀ [V]: | 2,03 |
| CC-4-V | 15,00 % | V₉₀ [V]: | 2,53 |
| CCP-V-1 | 12,00 % | V₉₀/V₁₀: | 1,497 |
| CCP-V2-1 | 10,00 % | K₁ [pN]: | 12,3 |
| CCG-V-F | 8,00% | K₃ [pN]: | 13,6 |
| PCH-301 | 6,00 % | K₃/K₁ : | 1,10 |
| PGP-2-3 | 5,00 % | | |

### Beispiel86

| | | | |
|---|---|---|---|
| GGP-3-CL | 9,00 % | Klärpunkt [°C]: | 87,5 |
| GGP-5-CL | 23,00 % | Δn [589 nm, 20°C]: | 0,2040 |
| FET-2CL | 7,00 % | Δε [1kHz, 20°C]: | 6,9 |
| FET-3CL | 4,00 % | γ₁ [mPa·s, 20°C]: | 179 |
| FET-5CL | 7,00 % | | |
| PP-1-2V1 | 13,00 % | | |
| CCP-V-1 | 12,00 % | | |
| CC-3-V1 | 8,00 % | | |
| BCH-2F.F | 6,00 % | | |
| PGP-2-3 | 2,00 % | | |
| PGP-2-4 | 3,00 % | | |
| PGU-3-F | 6,00 % | | |

### Beispiel 87

| | | | |
|---|---|---|---|
| CCZU-3-F | 12,00 % | Klärpunkt [°C]: | 81,0 |
| PGU-2-F | 3,00 % | Δn[589nm,20°C]: | 0,1043 |
| PGU-3-F | 4,00 % | Δε [1kHz, 20°C]: | 6,6 |
| PUQU-2-F | 6,00 % | γ₁ [mPa·s, 20°C]: | 72 |
| PUQU-3-F | 8,00 % | V₁₀ [V]: | 1,60 |
| CC-3-V1 | 13,00 % | V₅₀ [V]: | 1,94 |
| CC-4-V | 15,00 % | V₉₀ [V]: | 2,41 |
| CCP-V-1 | 12,00 % | V₉₀/V₁₀: | 1,506 |
| CCP-V2-1 | 8,00 % | K₁ [pN]: | 12,2 |
| CCG-V-F | 8,00 % | K₃ [pN]: | 13,5 |
| PCH-301 | 6,00 % | K₃/K₁ : | 1,10 |
| PGP-2-3 | 5,00 % | | |

### Beispiel 88

| | | | |
|---|---|---|---|
| GGP-3-CL | 9,00 % | Klärpunkt [°C]: | 87,5 |
| GGP-5-CL | 20,00 % | Δn [589 nm, 20°C]: | 0,2017 |
| FET-2CL | 9,00 % | Δε [1kHz, 20°C]: | 6,5 |
| FET-3CL | 4,00 % | γ₁ [mPa·s, 20°C]: | 172 |
| FET-5CL | 7,00 % | | |
| PP-1-2V1 | 13,00 % | | |
| CCP-V-1 | 14,00 % | | |
| CC-3-V1 | 10,00 % | | |
| PGP-2-3 | 3,00 % | | |
| PGP-2-4 | 3,00 % | | |
| PGU-3-F | 8,00 % | | |

### Beispiel 89

| | | | |
|---|---|---|---|
| CCQU-2-F | 6,00 % | Klärpunkt [°C]: | 80,0 |
| CCQU-3-F | 7,00 % | Δn [589 nm, 20°C]: | 0,0975 |
| CCP-20CF₃ | 4,00 % | Δε [1kHz, 20°C]: | 6,7 |
| CCP-30CF₃ | 4,00 % | γ₁ [mPa·s, 20°C]: | 76 |
| CC-3-V1 | 14,00 % | V₁₀ [V]: | 1,65 |
| CC-5-V | 10,00 % | V₅₀[ V]: | 1,99 |
| PCH-301 | 7,00 % | V₉₀ [V]: | 2,47 |
| CCP-V-1 | 10,00 % | V₉₀/V₁₀: | 1,498 |
| CCP-V2-1 | 7,00 % | K₁ [pN]: | 12,3 |
| CCG-V-F | 8,00 % | K₃ [pN]: | 14,0 |
| PUQU-2-F | 8,00 % | K₃/K₁: | 1,13 |
| PUQU-3-F | 10,00 % | | |
| PGP-2-4 | 5,00 % | | |

### Beispiel 90

| | | | |
|---|---|---|---|
| GGP-3-CL | 9,00 % | Klärpunkt [°C]: | 90,0 |
| GGP-5-CL | 20,00 % | Δn [589 nm, 20°C]: | 0,1989 |
| FET-2CL | 7,00 % | Δε [1kHz, 20°C]: | 7,4 |
| FET-3CL | 3,00 % | | |
| FET-5CL | 6,00 % | | |
| PP-1-2V1 | 14,00 % | | |
| PGP-2-3 | 3,00 % | | |
| PGP-2-4 | 3,00 % | | |
| PGU-3-F | 7,00 % | | |
| CCG-V-F | 9,00 % | | |
| CCGU-3-F | 4,00 % | | |
| CC-3-V1 | 7,00 % | | |
| CCP-V-1 | 8,00 % | | |

### Beispiel 91

| | | | |
|---|---|---|---|
| CCP-1 F.F.F | 6,00 % | Klärpunkt [°C]: | 72,0 |
| CCP-3F.F.F | 10,00 % | Δn [589 nm, 20°C]: | 0,1119 |
| CCP-20CF₃ | 4,00 % | Δε [1kHz, 20°C]: | 7,9 |
| CCP-30CF₃ | 4,00 % | γ₁ [mPa·s, 20°C]: | 76 |
| CCP-40CF₃ | 4,00 % | K₁ [pN]: | 12,4 |
| CCP-50CF₃ | 4,00 % | K₃ [pN]: | 12,8 |
| PUQU-2-F | 10,00 % | K₃/K₁: | 1,03 |
| PUQU-3-F | 10,00 % | | |
| CCP-V-1 | 13,00 % | | |
| CC-3-V1 | 14,00 % | | |
| PCH-301 | 8,00 % | | |
| PGP-2-3 | 6,50 % | | |
| . PP-1-2V1 | 6,50 % | | |

### Beispiel 92

| | | | |
|---|---|---|---|
| CCGU-3-F | 3,00 % | Klärpunkt [°C]: | 75,5 |
| CC-3-V1 | 18,00 % | Δn [589 nm, 20°C]: | 0,1133 |
| CC-4-V | 8,00 % | Δε [1kHz, 20°C]: | 5,0 |
| PCH-301 | 15,00 % | γ₁ [mPa·s, 20°C]: | 73 |
| CCP-V-1 | 12,00 % | V₁₀ [V]: | 1,85 |
| CCP-V2-1 | 12,00 % | V₅₀ [V]: | 2,22 |
| PUQU-2-F | 10,00 % | V₅₀ [V]: | 2,78 |
| PUQU-3-F | 10,00 % | V₉₀/V₁₀: | 1,504 |
| PGP-2-3 | 6,00 % | K₁ [pN]: | 13,5 |
| PGP-2-4 | 6,00 % | K₃ [pN]: | 15,5 |
| | | K₃/K₁ : | 1,15 |

### Beispiel 93

| | | | |
|---|---|---|---|
| PGU-2-F | 5,00 % | Klärpunkt [°C]: | 73,5 |
| PGU-3-F | 4,00 % | Δn [589 nm, 20°C]: | 0,1167 |
| CCQU-3-F | 7,00 % | Δε [1kHz, 20°C]: | 8,7 |
| PUQU-2-F | 9,00 % | γ₁ [mPa·s, 20°C]: | 76 |
| PUQU-3-F | 9,00 % | V₁₀ [V]: | 1,34 |
| CC-3-V1 | 10,00 % | V₉₀ [V]: | 1,63 |
| CC-5-V | 10,00 % | V₉₀ [V]: | 2,02 |
| CCP-V-1 | 12,00 % | V₉₀/V₁₀: | 1,507 |
| PCH-301 | 9,00 % | K₁ [pN]: | 10,9 |
| PGP-2-3 | 3,00 % | K₃ [pN]: | 12,5 |
| PGP-2-4 | 5,00 % | K₃/K₁: | 1,15 |
| CCGU-3-F | 5,00 % | | |
| CCG-V-F | 12,00 % | | |

### Beispiel 94

| | | | |
|---|---|---|---|
| PGU-2-F | 5,00 % | Klärpunkt [°C]: | 74,0 |
| PGU-3-F | 4,00 % | Δn [589 nm, 20°C]: | 0,1154 |
| CCQU-3-F | 7,00 % | Δε [1 kHz, 20°C]: | 8,9 |
| PUQU-2-F | 8,00 % | γ₁ [mPa·s, 20°C]: | 76 |
| PUQU-3-F | 9,00 % | V₁₀ [V]: | 1,34 |
| CC-3-V1 | 11,00 % | V₅₀ [V]: | 1,63 |
| CC-5-V | 10,00 % | V₉₀ [V]: | 2,02 |
| CCP-V-1 | 11,00 % | V₉₀/V₁₀: | 1,507 |
| PCH-301 | 10,00 % | K₁ [pN]: | 11,5 |
| PGP-2-3 | 3,00 % | K₃ [pN]: | 11,9 |
| PGP-2-4 | 5,00 % | K₃/K₁ : | 1,03 |
| CCGU-3-F | 5,00 % | | |
| CCG-V-F | 7,00 % | | |
| CCZU-3-F | 5,00 % | | |

### Beispiel 95

| | | | |
|---|---|---|---|
| CCP-20CF₃ | 4,00 % | Klärpunkt [°C]: | 75,0 |
| CCP-30CF₃ | 4,00 % | Δn [589 nm, 20°C]: | 0,1085 |
| PGU-2-F | 2,00 % | Δε [1kHz, 20°C]: | 4,4 |
| PGU-3-F | 4,00 % | γ₁ [mPa·s, 20°C]: | 59 |
| PUQU-2-F | 5,00 % | V₁₀ [V]: | 1,88 |
| PUQU-3-F | 6,00 % | V₅₀ [V]: | 2,26 |
| CC-3-V1 | 13,00 % | V₉₀ [V]: | 2,81 |
| CC-4-V | 16,00 % | V₉₀/V₁₀: | 1,495 |
| CCP-V-1 | 16,00 % | K₁ [pN]: | 11,7 |
| CCG-V-F | 8,00 % | K₃ [pN]: | 12,8 |
| PCH-301 | 12,00 % | K₃/K₁ : | 1,10 |
| PGP-2-3 | 5,00 % | | |
| PGP-2-2V | 5,00 % | | |

### Beispiel 96

| | | | |
|---|---|---|---|
| CCP-20CF₃ | 4,00 % | Klärpunkt [°C]: | 80,5 |
| CCP-30CF₃ | 4,00 % | Δn [589 nm, 20°C]: | 0,1057 |
| PGU-3-F | 5,00% | Δε [1kHz, 20°C]: | 6,1 |
| PUQU-2-F | 6,00 % | γ₁ [mPa·s, 20°C]: | 68 |
| PUQU-3-F | 10,00 % | V₁₀ [V]: | 1,69 |
| CC-3-V1 | 13,00 % | V₅₀ [V]: | 2,04 |
| CC-4-V | 18,00 % | V₉₀ [V]:- | 2,55 |
| CCP-V-1 | 12,00 % | V₉₀/V₁₀: | 1,509 |
| CCP-V2-1 | 5,00 % | K₁ [pN]: | 12,1 |
| CCG-V-F | 8,00 % | K₃ [pN]: | 13,6 |
| PCH-301 | 6,00 % | K₃/K₁ : | 1,12 |
| PGP-2-2V | 5,00 % | | |
| CCGU-3-F | 4,00 % | | |

### Beispiel 97

| | | | |
|---|---|---|---|
| CCP-20CF₃ | 4,00 % | Klärpunkt [°C]: | 79,0 |
| CCP-30CF₃ | 4,00 % | Δn [589 nm, 20°C]: | 0,1049 |
| PGU-3-F | 3,00 % | Δε [1kHz, 20°C]: | 5,5 |
| PUQU-2-F | 6,00 % | γ₁ [mPa·s, 20°C]: | 66 |
| PUQU-3-F | 10,00 % | V₁₀ [V]: | 1,75 |
| CC-3-V1 | 13,00% | V₅₀ [V]: | 2,11 |
| CC-4-V | 18,00 % | V₉₀ [V]: | 2,63 |
| CCP-V-1 | 12,00 % | V₉₀/V₁₀: | 1,503 |
| CCP-V2-1 | 5,00 % | K₁ [pN]: | 12,1 |
| CCG-V-F | 8,00 % | K₃ [pN]: | 13,3 |
| PCH-301 | 7,00 % | K₃/K₁ : | 1,09 |
| PGP-2-3 | 5,00 % | | |
| PGP-2-4 | 2,00 % | | |
| CCGU-3-F | 3,00 % | | |

### Beispiel 98

| | | | |
|---|---|---|---|
| CCZU-3-F | 12,00 % | Klärpunkt [°C]: | 79,0 |
| PGU-3-F | 4,00 % | Δn [589 nm, 20°C]: | 0,0999 |
| PUQU-2-F | 6,00 % | Δε [1kHz, 20°C]: | 5,9 |
| PUQU-3-F | 8,00 % | γ₁ [mPa·s, 20°C]: | 69 |
| CC-3-V1 | 13,00 % | V₁₀ [V]: | 1,66 |
| CC-4-V | 16,00 % | V₅₀ [V]: | 2,00 |
| CCP-V-1 | 12,00 % | V₉₀ [V]: | 2,48 |
| CCP-V2-1 | 8,00 % | V₉₀/V₁₀: | 1,494 |
| CCG-V-F | 8,00 % | K₁ [pN]: | 12,0 |
| PCH-301 | 8,00 % | K₃ [pN]: | 13,6 |
| PGP-2-3 | 5,00 % | K₃/K₁ : = | 1,13 |

### Beispiel 99

| | | | |
|---|---|---|---|
| CCP-20CF₃ | 4,00 % | Klärpunkt [°C]: | 79,0 |
| CCP-30CF₃ | 4,00 % | Δn [589 nm, 20°C]: | 0,0980 |
| PUQU-2-F | 7,00 % | Δε [1kHz, 20°C]: | 5,3 |
| PUQU-3-F | 10,00 % | γ₁ [mPa·s, 20°C]: | 66 |
| CC-3-V1 | 13,00 % | V₁₀ [V]: | 1,79 |
| CC-4-V | 18,00 % | V₅₀ [V]: | 2,15 |
| CCP-V-1 | 12,00 % | V₉₀ [V]: | 2,68 |
| CCP-V2-1 | 5,00 % | V₉₀/V₁₀: | 1,497 |
| CCG-V-F | 10,00 % | K₁ [pN]: | 11,8 |
| PCH-301 | 8,00 % | K₃ [pN]: | 13,8 |
| PGP-2-3 | 5,00% | K₃/K₁ : | 1,17 |
| CCGU-3-F | 4,00 % | | |

### Beispiel 100

| | | | |
|---|---|---|---|
| CCP-20CF₃ | 4,50 % | Klärpunkt [°C]: | 79,5 |
| CCP-30CF₃ | 4,50 % | Δn [589 nm, 20°C]: | 0,1033 |
| CCZU-3-F | 5,00 % | Δε [1kHz, 20°C]: | 5,2 |
| PUQU-2-F | 6,00 % | γ₁ [mPa·s, 20°C]: | 66 |
| PUQU-3-F | 10,00 % | V₁₀ [V]: | 1,76 |
| CC-3-V1 | 13,00 % | V₅₀ [V]: | 2,12 |
| CC-4-V | 15,00 % | V₅₀ [V]: | 2,62 |
| CCP-V-1 | 12,00 % | V₉₀/V₁₀: | 1,489 |
| CCP-V2-1 | 5,00 % | K₁ [pN]: | 12,3 |
| CCG-V-F | 8,00 % | K₃ [pN]: | 13,4 |
| PCH-301 | 8,00 % | K₃/K₁: | 1,08 |
| PGP-2-3 | 5,00 % | | |
| PGP-2-4 | 4,00 % | | |

### Beispiel 101

| | | | |
|---|---|---|---|
| CC-3-V1 | 10,00 % | Klärpunkt [°C]: | 77,5 |
| CC-4-V | 14,00 % | Δn [589 nm, 20°C]: | 0,0934 |
| PGP-2-3 | 4,00 % | Δε [1kHz, 20°C]: | 8,7 |
| PGP-2-4 | 4,00 % | γ₁ [mPa·s, 20°C]: | 83 |
| CCG-V-F | 10,00 % | V₁₀ [V]: | 1,38 |
| PUQU-2-F | 8,00 % | V₅₀ [V]: | 1,68 |
| PUQU-3-F | 7,00 % | V₉₀ [V]: | 2,09 |
| CCQU-2-F | 7,00 % | V₉₀/V₁₀: | 1,516 |
| CCQU-3-F | 12,00 % | | |
| CCQU-5-F | 10,00 % | | |
| CCP-3F.F.F | 3,00 % | | |
| CCP-20CF₃ | 5,00 % | | |
| CCP-30CF₃ | 6,00 % | | |

### Beispiel 102

| | | | |
|---|---|---|---|
| CCP-2F.F.F | 8,00 % | Klärpunkt [°C]: | 81,0 |
| CCP-3F.F.F | 6,00 % | Δn [589 nm, 20°C]: | 0,0808 |
| CCQU-2-F | 11,00 % | Δε [1kHz, 20°C]: | 16,5 |
| CCQU-3-F | 12,00 % | γ₁ [mPa·s, 20°C]: | 164 |
| CCQU-5-F | 10,00 % | V₁₀ [V]: | 0,95 |
| ACQU-2-F | 8,00 % | V₅₀ [V]: | 1,20 |
| ACQU-3-F | 10,00 % | V₉₀ [V]: | 1,50 |
| ACQU-4-F | 10,00 % | V₉₀/V₁₀: | 1,587 |
| AUUQGU-3-F | 9,00 % | | |
| CC-4-V | 12,00 % | | |
| PGP-2-4 | 4,00 % | | |

### Beispiel 103

| | | | |
|---|---|---|---|
| PCH-301 | 6,00 % | Klärpunkt [°C]: | 76,0 |
| CC-4-V | 14,00 % | Δn [589 nm, 20°C]: | 0,0927 |
| CCP-V-1 | 10,00 % | Δε [1kHz, 20°C]: | 8,7 |
| CCG-V-F | 13,00 % | γ₁ [mPa·s, 20°C]: | 90 |
| PUQU-2-F | 8,00 % | V₁₀ [V]: | 1,32 |
| PUQU-3-F | 7,00 % | V₅₀ [V]: | 1,62 |
| CCQU-3-F | 8,00 % | V₉₀ [V]: | 2,02 |
| CCQU-5-F | 7,00 % | V₉₀/V₁₀: | 1,527 |
| ACQU-2-F | 6,00 % | | |
| ACQU-3-F | 6,00 % | | |
| CCP-30CF₃ | 6,00 % | | |
| CCP-40CF₃ | 4,00 % | | |
| PGP-2-4 | 3,00 % | | |
| PGP-2-3 | 2,00 % | | |

### Beispiel 104

| | | | |
|---|---|---|---|
| CC-4-V | 15,00 % | Klärpunkt [°C]: | 86,0 |
| CC-3-V1 | 2,00 % | Δn [589nm, 20°C]: | 0,0900 |
| CCQU-2-F | 13,00 % | Δε [1kHz, 20°C]: | 11,2 |
| CCQU-3-F | 13,00 % | γ₁ [mPa·s, 20°C]: | 109 |
| CCQU-5-F | 12,00 % | V₁₀ [V]: | 1,28 |
| CCP-20CF₃ | 8,00 % | V₅₀ [V]: | 1,58 |
| CCP-30CF₃ | 8,00 % | V₉₀ [V]: | 1,98 |
| CCP-50CF₃ | 5,00 % | V₉₀/V₁₀: | 1,549 |
| PUQU-2-F | 7,00 % | | |
| PUQU-3-F | 9,00 % | | |
| PGP-2-3 | 3,00 % | | |
| CCGU-3-F | 5,00 % | | |

### Beispiel 105

| | | | |
|---|---|---|---|
| CC-3-V1 | 11,00 % | Klärpunkt [°C]: | 80,0 |
| CC-4-V | 14,00 % | Δn [589 nm, 20°C]: | 0,0938 |
| PGP-2-3 | 4,00 % | Δε [1kHz, 20°C]: | 8,7 |
| PGP-2-4 | 4,00 % | γ₁ [mPa·s, 20°C]: | 86 |
| CCG-V-F | 9,00 % | V₁₀ [V]: | 1,41 |
| PUQU-2-F | 8,00 % | V₅₀ [V]: | 1,72 |
| PUQU-3-F | 7,00 % | V₉₀ [V]: | 2,14 |
| CCQU-2-F | 7,00 % | V₉₀/V₁₀: | 1,514 |
| CCQU-3-F | 13,00 % | | |
| CCQU-5-F | 12,00 % | | |
| CCP-30CF₃ | 5,00 % | | |
| CCP-40CF₃ | 6,00 % | | |

### Beispiel 106

| | | | |
|---|---|---|---|
| ECCP-3F.F | 7,00 % | Klärpunkt [°C]: | 78,5 |
| CCP-20CF₃ | 4,50 % | Δn [589 nm, 20°C]: | 0,1008 |
| CCP-30CF₃ | 4,50 % | Δε [1kHz, 20°C]: | 4,5 |
| PUQU-2-F | 6,00 % | γ₁ [mPa·s, 20°C]: | 70 |
| PUQU-3-F | 10,00 % | V₁₀ [V]: | 2,00 |
| CC-4-V | 10,00 % | V₅₀ [V]: | 2,40 |
| CC-3-V1 | 14,00 % | V₉₀ [V]: | 3,01 |
| CCP-V-1 | 15,00 % | V₉₀/V₁₀: | 1,503 |
| CCP-V2-1 | 8,00 % | K₁ [pN]: | 12,6 |
| PCH-301 | 15,00 % | K₃ [pN]: | 14,7 |
| PGP-2-3 | 6,00 % | K₃/K₁ : | 1,16 |

### Beispiel 107

| | | | |
|---|---|---|---|
| CCZU-3-F | 13,00 % | Klärpunkt [°C]: | 81,5 |
| PGU-2-F | 2,00 % | Δn [589 nm, 20°C]: | 0,1039 |
| PGU-3-F | 4,00 % | Δε [1kHz, 20°C]: | 6,7 |
| PUQU-2-F | 6,00 % | γ₁ [mPa·s, 20°C]: | 73 |
| PUQU-3-F | 10,00 % | V₁₀ [V]: | 1,62 |
| CC-3-V1 | 13,00 % | V₅₀ [V]: | 1,97 |
| CC-4-V | 15,00 % | V₉₀ [V]: | 2,45 |
| CCP-V-1 | 12,00 % | V₉₀/V₁₀: | 1,512 |
| CCP-V2-1 | 8,00 % | K₁ [pN]: | 12,6 |
| CCG-V-F | 7,00 % | K₃ [pN]: | 13,7 |
| PCH-301 | 5,00 % | K₃/ K₁ : | 1,09 |
| PGP-2-3 | 5,00 % | | |

### Beispiel 108

| | | | |
|---|---|---|---|
| CC-4-V | 18,00 % | Klärpunkt [°C]: | 79,0 |
| CCP-V-1 | 10,00 % | Δn [589 nm, 20°C]: | 0,0931 |
| CCG-V-F | 14,00% | Δε [1kHz, 20°C]: | 8,9 |
| PUQU-2-F | 8,00 % | γ₁ [mPa·s, 20°C]: | 88 |
| PUQU-3-F | 7,00 % | V₁₀ [V]: | 1,33 |
| CCQU-2-F | 3,00 % | V₅₀ [V]: | 1,63 |
| CCQU-3-F | 5,00 % | V₉₀ [V]: | 2,03 |
| CCQU-5-F | 6,00 % | V₉₀/V₁₀: | 1,532 |
| ACQU-2-F | 7,00 % | | |
| ACQU-3-F | 6,00 % | | |
| CCP-30CF₃ | 6,00 % | | |
| CCP-40CF₃ | 4,00 % | | |
| PGP-2-4 | 3,00 % | | |
| PGP-2-3 | 3,00 % | | |

### Beispiel 109

| | | | |
|---|---|---|---|
| CCP-20CF₃ | 4,00 % | Klärpunkt [°C]: | 77,0 |
| CCP-30CF₃ | 4,00 % | Δn [589nm, 20°C]: | 0,1131 |
| PGU-2-F | 2,00 % | Δε [1kHz, 20°C]: | 4,7 |
| PGU-3-F | 4,00 % | K₁ [pN]: | 12,3 |
| PUQU-2-F | 6,00 % | K₃ [pN]: | 13,3 |
| PUQU-3-F | 8,00 % | K₃ / K1 : | 1,08 |
| CC-3-V1 | 14,00 % | | |
| CC-4-V | 10,00 % | | |
| PCH-301 | 15,00 % | | |
| CCP-V-1 | 14,00 % | | |
| CCP-V2-1 | 9,00 % | | |
| PGP-2-3 | 5,00 % | | |
| PGP-2-4 | 5,00 % | | |

### Beispiel 110

| | | | |
|---|---|---|---|
| PGU-2-F | 3,00 % | Klärpunkt [°C]. | 79,5 |
| CC-5-V | 15,00 % | Δn [589 nm, 20°C]: | 0,1206 |
| CC-3-V1 | 11,00 % | Δε [1kHz, 20°C]: | 6,6 |
| PCH-301 | 11,00 % | γ₁ [mPa·s, 20°C]: | 80 |
| CCP-V-1 | 11,00 % | V₁₀ [V]: | 1,60 |
| CCP-V2-1 | 9,00 % | V₅₀ [V]: | 1,95 |
| GGP-3-CL | 5,00 % | V₉₀ [V]: | 2,43 |
| PUQU-2-F | 9,00 % | V₉₀/V₁₀: | 1,519 |
| PUQU-3-F | 9,00 % | K₁ [pN]: | 12,6 |
| PGP-2-3 | 3,00 % | K₃ [pN]: | 13,7 |
| PGP-2-4 | 6,00 % | K₃/K₁: | 1,09 |
| CCGU-3-F | 6,00 % | | |
| CCQU-2-F | 2,00 % | | |

### Beispiel 111

| | | | |
|---|---|---|---|
| CCZU-3-F | 14,00 % | Klärpunkt [°C]: | 80,0 |
| PGU-2-F | 2,00 % | Δn [589 nm, 20°C]: | 0,1050 |
| PGU-3-F | 5,00 % | Δε [1kHz, 20°C]: | 7,6 |
| PUQU-2-F | 6,00 % | γ₁ [mPa·s, 20°C]: | 74 |
| PUQU-3-F | 10,00 % | V₁₀ [V]: | 1,51 |
| CC-3-V1 | 13,00 % | V₅₀ [V]: | 1,82 |
| CC-4-V | 15,00 % | V₉₀ [V]: | 2,26 |
| CCP-V-1 | 10,00 % | V₉₀/V₁₀: | 1,502 |
| CCP-V2-1 | 8,00 % | K₁ [pN]: | 12,1 |
| CCG-V-F | 8,00 % | K₃ [pN]: | 13,2 |
| PCH-301 | 4,00 % | K₃/K₁: | 1,09 |
| PGP-2-3 | 5,00 % | | |

### Beispiel 112

| | | | |
|---|---|---|---|
| PGU-3-F | 2,00 % | Klärpunkt [°C]: | 80,5 |
| CCP-2F.F.F | 6,00 % | Δn [589 nm, 20°C]: | 0,0974 |
| CCP-3F.F.F | 12,00 % | Δε [1kHz, 20°C]: | 7,0 |
| CCP-20CF₃ | 4,00 % | γ₁ [mPa·s, 20°C]: | 73 |
| CCP-30CF₃ | 4,00 % | V₁₀ [V]: | 1,61 |
| CC-3-V1 | 16,00 % | V₅₀ [V]: | 1,95 |
| CC-4-V | 14,00 % | V₉₀ [V]: | 2,43 |
| PCH-301 | 2,00 % | V₉₀/V1₀: | 1,511 |
| CCP-V-1 | 8,00 % | K₁ [pN]: | 12,5 |
| CCP-V2-1 | 10,00 % | K₃ [pN]: | 13,8 |
| PUQU-2-F | 7,00 % | K₃/K₁ : | 1,10 |
| PUQU-3-F | 10,00 % | | |
| PGP-2-4 | 5,00 % | | |

### Beispiel 113

| | | | |
|---|---|---|---|
| CCP-20CF₃ | 4,00 % | Klärpunkt [°C]: | 79,5 |
| CCP-30CF₃ | 4,00 % | Δn [589 nm, 20°C]: | 0,1130 |
| PGU-3-F | 3,00 % | Δε [1kHz, 20°C]: | 5,3 |
| PUQU-2-F | 6,00 % | γ₁ [mPa·s, 20°C]: | 72 |
| PUQU-3-F | 10,00 % | V₁₀ [V]: | 1,82 |
| CC-3-V1 | 15,00 % | V₅₀ [V]: | 2,18 |
| CC-4-V | 9,00 % | V₉₀ [V]: | 2,69 |
| PCH-301 | 15,00 % | V₉₀/V₁₀: | 1,482 |
| CCP-V-1 | 11,00 % | K₁ [pN]: | 12,5 |
| CCP-V2-1 | 9,00 % | K₃ [pN]: | 13,7 |
| CCGU-3-F | 4,00 % | K₃/K₁ : | 1,09 |
| PGP-2-3 | 5,00 % | , | |
| PGP-2-4 | 5,00 % | | |

### Beispiel 114

| | | | |
|---|---|---|---|
| CCQU-2-F | 4,00 % | Klärpunkt [°C]: | 78,5 |
| CCQU-3-F | 9,00 % | Δn[589nm, 20°C]: | 0,0970 |
| CCP-20CF₃ | 4,00 % | Δε [1kHz, 20°C]: | 6,6 |
| CCP-30CF₃ | 4,00 % | γ₁ [mPa·s, 20°C]: | 70 |
| CC-3-V1 | 12,00 % | V₁₀ [V]: | 1,59 |
| CC-4-V | 12,00 % | V₅₀ [V]: | 1,94 |
| PCH-301 | 7,00 % | V₉₀ [V]: | 2,42 |
| CCP-V-1 | 11,00 % | V₉₀/V₁₀: | 1,527 |
| CCP-V2-1 | 6,00 % | K₁ [pN]: | 11,9 |
| CCG-V-F | 8,00 % | K₃ [pN]: | 13,5 |
| PUQU-2-F | 8,00 % | K₃/K₁ : | 1,13 |
| PUQU-3-F | 10,00 % | | |
| PGP-2-3 | 5,00 % | | |

### Beispiel 115

| | | | |
|---|---|---|---|
| CCQU-2-F | 6,00 % | Klärpunkt [°C]: | 80,0 |
| CCQU-3-F | 10,00 % | Δn[589nm,20°C]: | 0,0981 |
| CCP-20CF₃ | 4,00 % | Δε [1kHz, 20°C]: | 7,1 |
| CCP-30CF₃ | 4,00 % | γ₁ [mPa·s, 20°C]: | 75 |
| CC-3-V1 | 12,00 % | V₁₀ [V]: | 1,58 |
| CC-4-V | 9,00 % | V₅₀ [V]: | 1,91 |
| PCH-301 | 7,00 % | V₉₀ [V]: | 2,36 |
| CCP-V-1 | 11,00 % | V₉₀/V₁₀: | 1,495 |
| CCP-V2-1 | 6,00 % | K₁ [pN]: | 11,9 |
| CCG-V-F | 8,00 % | K₃ [pN]: | 13,7 |
| PUQU-2-F | 8,00 % | K₃/K₁: | 1,16 |
| PUQU-3-F | 10,00 % | | |
| PGP-2-3 | 5,00 % | | |

### Beispiel 116

| | | | |
|---|---|---|---|
| CCP-1 F.F.F | 8,00 % | Klärpunkt [°C]: | 73,5 |
| CCP-3F.F.F | 10,00 % | Δn [589 nm, 20°C]: | 0,1038 |
| CCP-20CF₃ | 9,00 % | Δε [1kHz, 20°C]: | 7,9 |
| CCP-30CF₃ | 5,00 % | γ₁ [mPa·s, 20°C]: | 76 |
| PUQU-2-F | 10,00 % | V₁₀ [V]: | 1,49 |
| PUQU-3-F | 10,00 % | V₅₀ [V]: | 1,80 |
| PCH-301 | 5,00 % | V₉₀ [V]: | 2,23 |
| CCP-V-1 | 10,00 % | V₉₀/V₁₀: | 1,502 |
| CCP-V2-1 | 6,00 % | K₁ [pN]: | 12,2 |
| CC-3-V1 | 12,00 % | K₃ [pN]: | 13,0 |
| CC-5-V | 6,00 % | K₃/K₁ : | 1,07 |
| PGP-2-3 | 4,50 % | | |
| PP-1-2V1 | 4,50 % | | |

### Beispiel 117

| | | | |
|---|---|---|---|
| CCP-1 F.F.F | 9,00 % | Klärpunkt [°C]: | 74,5 |
| CCP-3F.F.F | 9,00 % | Δn [589 nm, 20°C]: | 0,1040 |
| CCP-20CF₃ | 9,00 % | Δε [1kHz, 20°C]: | 7,9 |
| CCP-30CF₃ | 4,00 % | γ₁ [mPa·s, 20°C]: | 73 |
| 0PUQU-2-F | 10,00 % | V₁₀ [V]: | 1,50 |
| PUQU-3-F | 10,00 % | V₅₀ [V]: | 2,33 |
| CCP-V-1 | 10,00% | V₉₀ [V]: | 2,26 |
| CCP-V2-1 | 5,00 % | V₉₀/V₁₀: | 1,506 |
| CC-3-V1 | 13,00 % | K₁ [pN]: | 12,8 |
| CC-5-V | 11,00 % | K₃ [pN]: | 13,1 |
| PGP-2-3 | 5,00 % | K₃/K₁ : | 1,02 |
| PP-1-2V1 | 5,00 % | | |

### Beispiel 118

| | | | |
|---|---|---|---|
| CCP-1 F.F.F | 8,00 % | Klärpunkt [°C]: | 74,0 |
| CCP-3F.F.F | 10,00 % | Δn[589nm,20°C]: | 0,1055 |
| CCP-20CF₃ | 9,00 % | Δε [1kHz, 20°C]: | 7,9 |
| CCP-30CF₃ | 8,00 % | γ₁ [mPa·s, 20°C]: | 72 |
| PUQU-2-F | 10,00 % | V₁₀ [V]: | 1,52 |
| PUQU-3-F | 9,00 % | V₅₀ [V]: | 1,84 |
| CCP-V-1 | 5,00 % | V₉₀ [V]: | 2,27 |
| CCP-V2-1 | 5,00 % | V₉₀/V₁₀: | 1,490 |
| CC-3-V1 | 13,00 % | K₁ [pN]: | 13,2 |
| CC-5-V | 11,00 % | K₃ [pN]: | 12,9 |
| PGP-2-3 | 6,00 % | K₃/K₁ | 0,98 |
| PP-1-2V1 | 6,00 % | | |

### Beispiel 119

| | | | |
|---|---|---|---|
| CCP-1 F.F.F | 8,00 % | Klärpunkt [°C]: | 73,5 |
| CCP-3F.F.F | 10,00 % | Δn [589 nm, 20°C]: | 0,1056 |
| CCP-20CF₃ | 10,00 % | Δε [1kHz, 20°C]: | 7,8 |
| CCP-30CF₃ | 10,00 % | γ₁ [mPa·s, 20°C]: | 72 |
| PUQU-2-F | 10,00 % | V₁₀ [V]: | 1,50 |
| PUQU-3-F | 8,00 % | V₅₀ [V]: | 1,83 |
| CCP-V-1 | 4,00 % | V₉₀ [V]: | 2,25 |
| CCP-V2-1 | 3,00 % | V₉₀/V₁₀: | 1,497 |
| CC-3-V1 | 12,00 % | K₁ [pN]: | 13,4 |
| CC-5-V | 12,00 % | K₃ [pN]: | 12,7 |
| PGP-2-3 | 6,50 % | K₃/K₁: | 0,95 |
| PP-1-2V1 | 6,50 | | |

## Patentansprüche

1. Flüssigkristallines Medium auf der Basis eines Gemisches von polaren Verbindungen mit positiver oder negativer dielektrischer Anisotropie, **dadurch gekennzeichnet, dass** es eine oder mehrere Verbindungen der allgemeinen Formel I 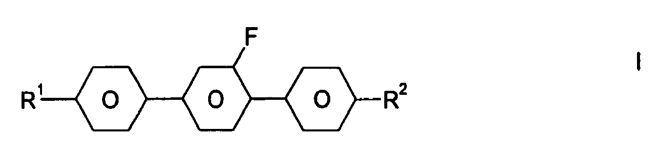 enthält,
worin
R¹ und R² jeweils unabhängig voneinander, gleich oder verschieden, H oder einen unsubstituierten Alkylrest mit 1 bis 12 C-Atomen bedeuten, wobei in diesen Resten auch eine oder mehrere CH₂-Gruppen jeweils unabhängig voneinander durch -CH=CH- oder -C≡C- ersetzt sein können,
und
dass es eine oder mehrere Verbindungen ausgewählt aus der Gruppe bestehend aus Verbindungen der allgemeinen Formeln XI bis XVII enthält: 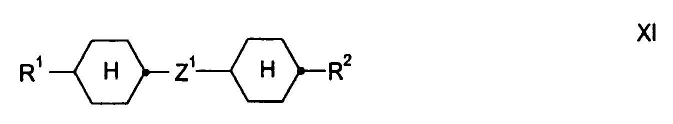 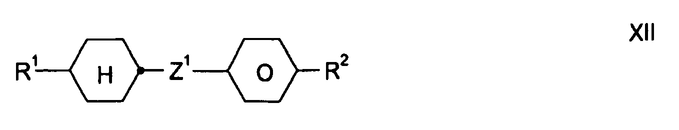 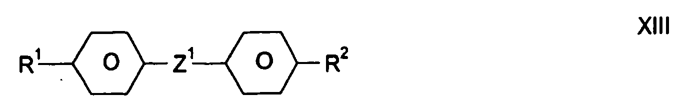 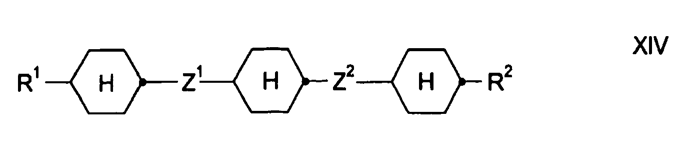 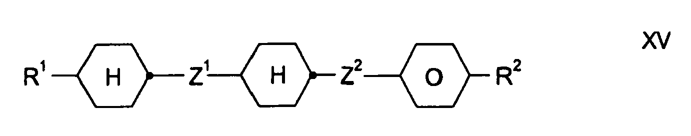 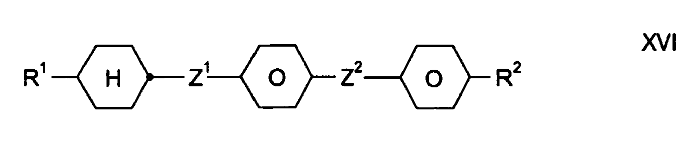 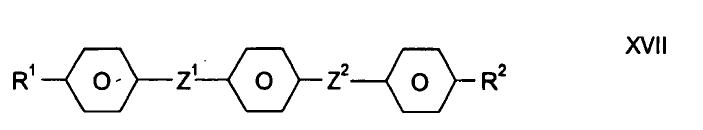 worin die einzelnen Reste die folgenden Bedeutungen haben:
R¹, R²: unabhängig voneinander, gleich oder verschieden n-Alkyl, n-Alkoxy oder Alkenyl mit jeweils bis zu 9 C-Atomen; und
Z¹, Z²: unabhängig voneinander, gleich oder verschieden eine Einfachbindung, -CF₂O-, -OCF₂-, -CH₂O-, -OCH₂-, -CH=CH-, -C₂H₄-, -C₂F₄-, -CH₂CF₂-, -CF₂CH₂- oder -C₄H₈-.

2. Medium gemäß Anspruch 1, **dadurch gekennzeichnet, dass** in der Verbindung der Formel I R¹ und/oder R² unabhängig voneinander, gleich oder verschieden, H, einen geradkettigen Alkylrest mit 1 bis 9 C-Atomen oder einen geradkettigen Alkenylrest mit 2 bis 9 C-Atomen bedeuten.

3. Medium gemäß Anspruch 1 oder 2, **dadurch gekennzeichnet, dass** es eine oder mehrere Verbindungen ausgewählt aus der Gruppe der Verbindungen der Unterformeln Ia bis Id enthält: 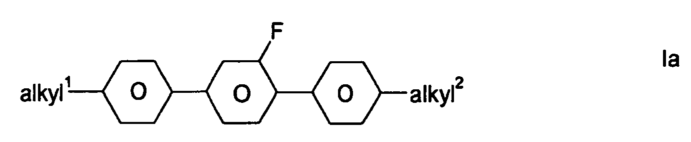 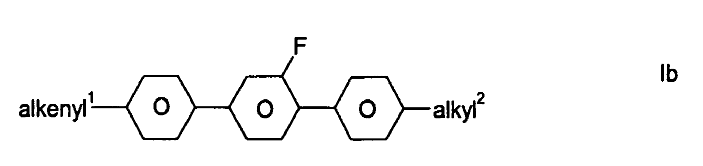 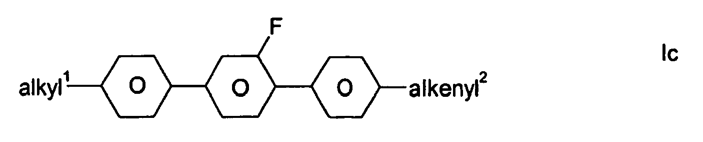 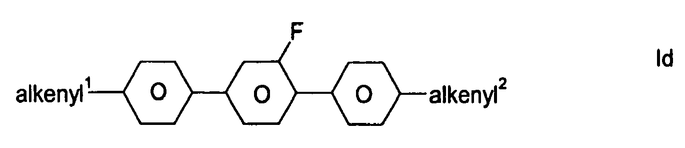 wobei der Ausdruck "alkyl¹" und "alkyl²" jeweils unabhängig voneinander, gleich oder verschieden, ein Wasserstoffatom oder einen Alkylrest mit 1 bis 9 C-Atomen, vorzugsweise einen geradkettigen Alkylrest mit 1 bis 5 C-Atomen, und der Ausdruck "alkenyl¹" und "alkenyl²" jeweils unabhängig voneinander, gleich oder verschieden, einen Alkenylrest mit 2 bis 9 C-Atomen, vorzugsweise einen geradkettigen Alkenylrest mit 2 bis 5 C-Atomen, bedeuten.

4. Medium gemäß mindestens einem der vorhergehenden Ansprüche, **dadurch gekennzeichnet, dass** es eine oder mehrere Verbindungen ausgewählt aus der Gruppe der Verbindungen der Unterformeln I1 bis I125 enthält:

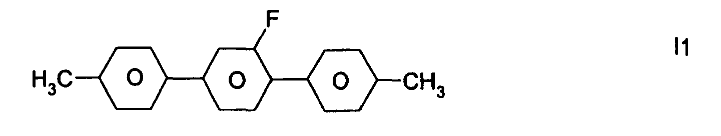

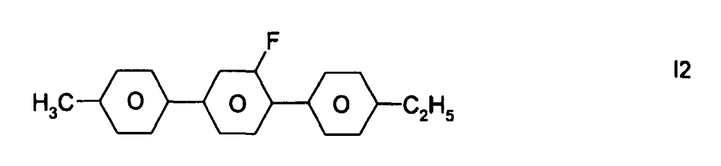

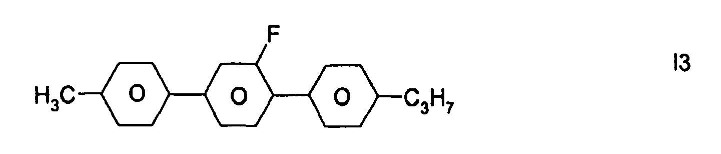

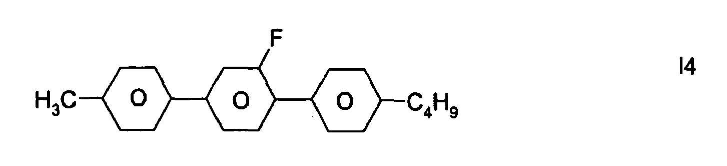

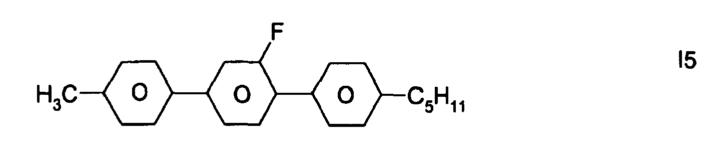

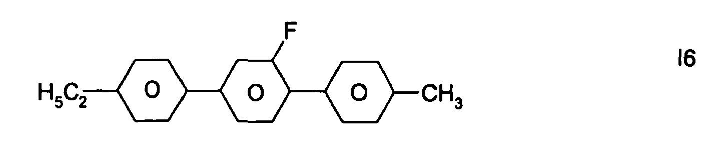

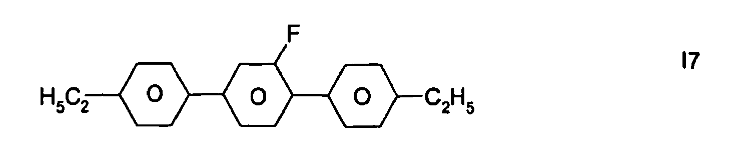

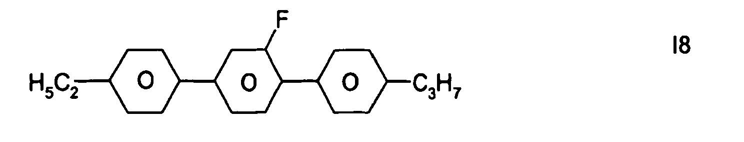

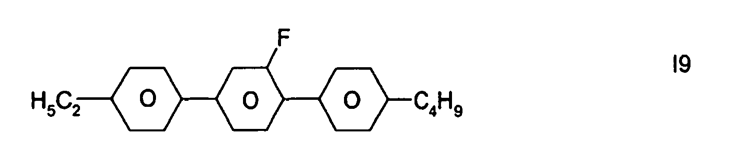

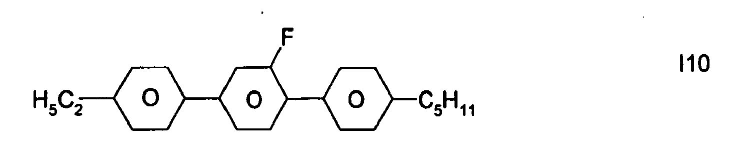

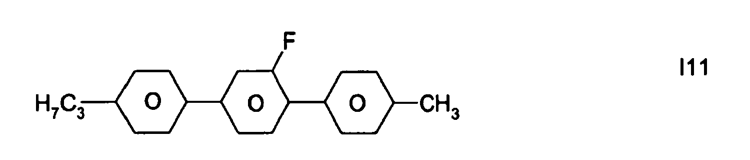

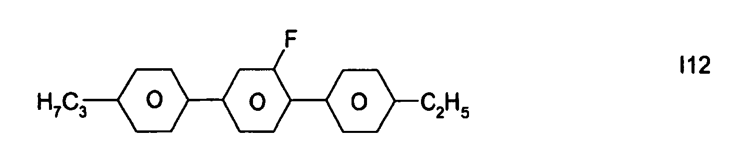

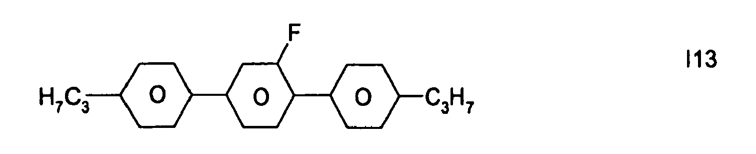

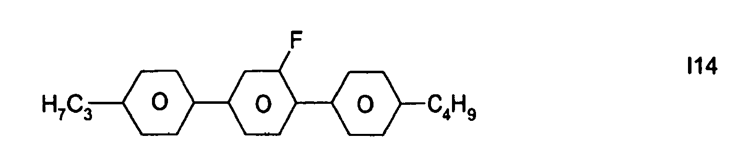

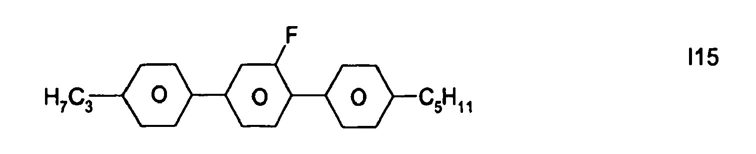

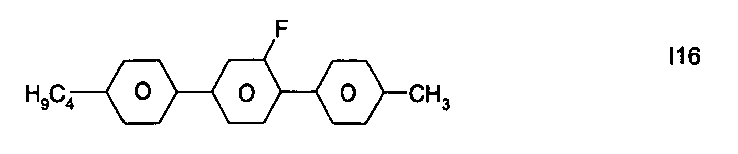

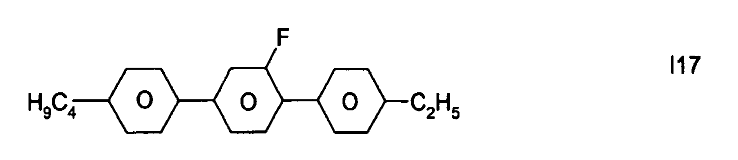

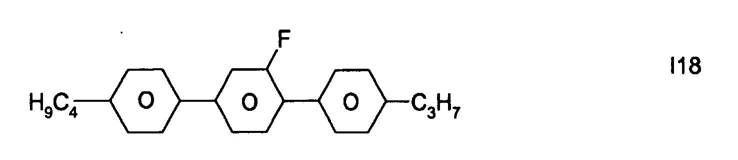

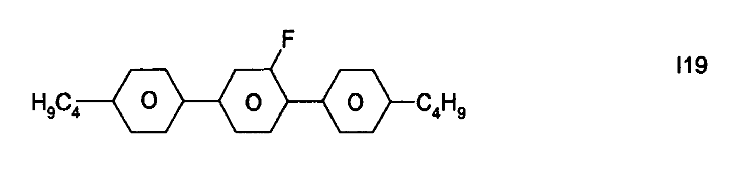

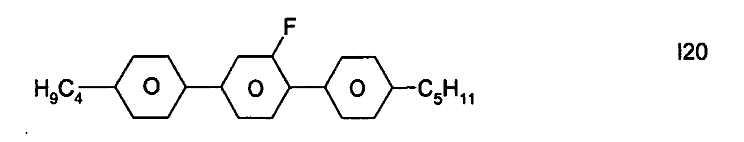

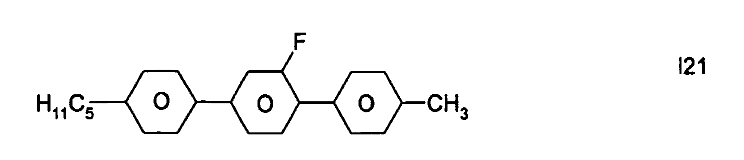

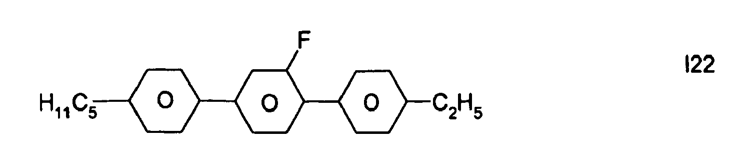

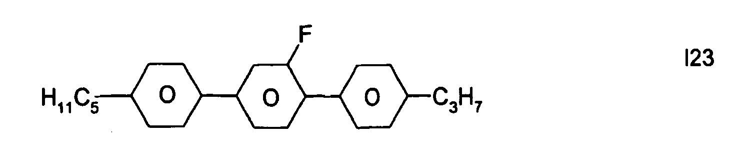

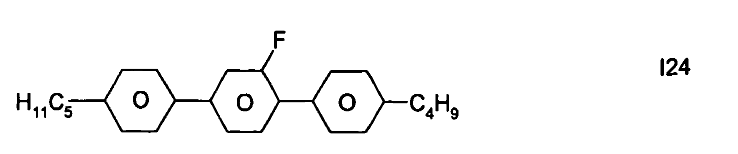

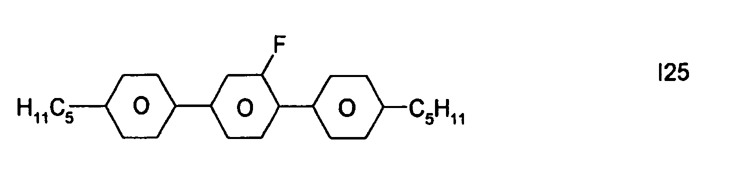

5. Medium gemäß mindestens einem der vorhergehenden Ansprüche, **dadurch gekennzeichnet, dass** der Anteil an Verbindungen der Formel I im Gesamtgemisch 1 bis 60 Gew.-% beträgt.

6. Medium gemäß mindestens einem der vorhergehenden Ansprüche, **dadurch gekennzeichnet, dass** es zusätzlich eine oder mehrere Verbindungen ausgewählt aus der Gruppe bestehend aus Verbindungen der allgemeinen Formeln II bis X enthält: 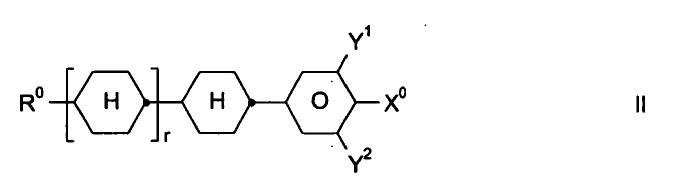 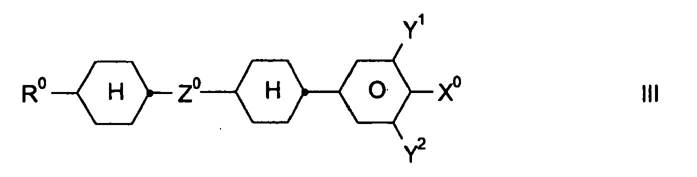 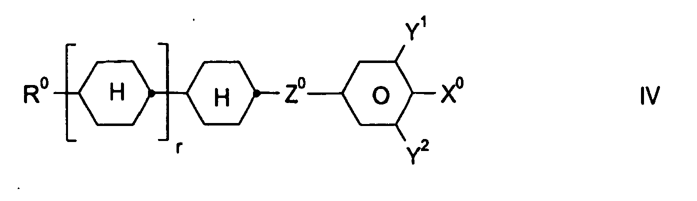 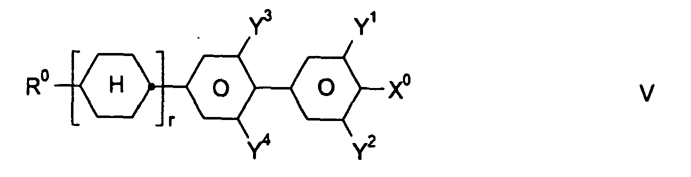 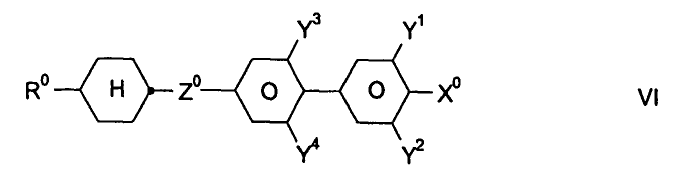 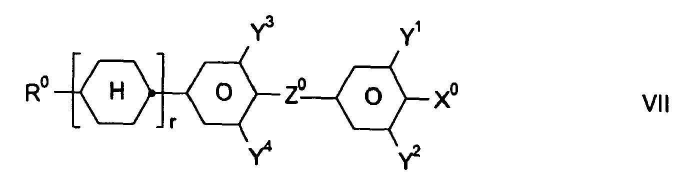 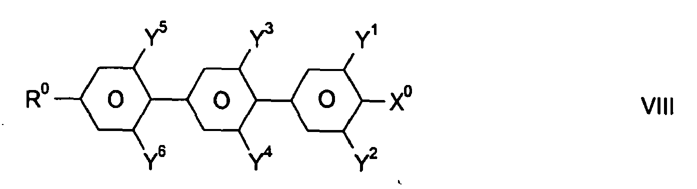 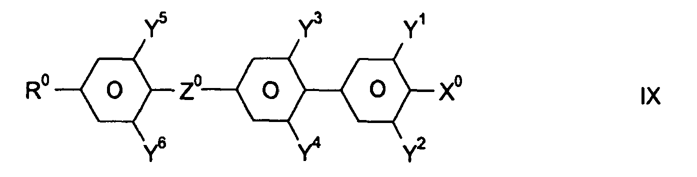 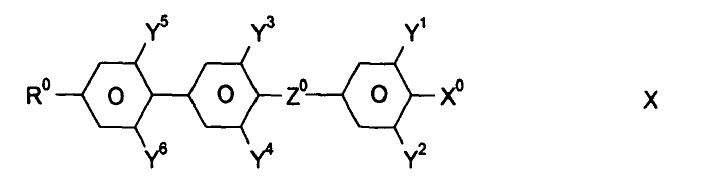 worin die einzelnen Reste die folgenden Bedeutungen haben:
R⁰: n-Alkyl, Oxaalkyl, Fluoralkyl oder Alkenyl mit jeweils bis zu 9 C-Atomen;
X⁰: F, Cl, halogeniertes Alkyl oder halogeniertes Alkoxy mit 1 bis 6 C-Atomen, bzw. halogeniertes Alkenyl mit 2 bis 6 C- Atomen;
Z°: -CF₂O-, -OCF₂-, -CH₂O-, -OCHr, -CO-O-, -O-CO-, -CH=CH-, -C₂H₄-, -C₂F₄-, -CH₂CF₂-, -CF₂CH₂- oder -C₄H₈-;
Y¹, Y², Y³, Y⁴, Y⁵ und Y⁶: jeweils unabhängig voneinander H oder F;
r: 0 oder 1.

7. Medium gemäß Anspruch 6, **dadurch gekennzeichnet, dass** der Anteil an Verbindungen der Formeln II bis X im Gesamtgemisch 20 bis 70 Gew.-% beträgt.

8. Medium gemäß Anspruch 1, **dadurch gekennzeichnet, dass** der Anteil an Verbindungen der Formeln XI bis XVII im Gesamtgemisch 5 bis 70 Gew.-% beträgt.

9. Verwendung eines flüssigkristallinen Mediums gemäß mindestens einem der vorhergehenden Ansprüche für elektrooptische Zwecke.

10. Elektrooptische Anzeigevorrichtungen enthaltend ein flüssigkristallines Medium gemäß mindestens einem der Ansprüche 1 bis 8.

## Claims

1. Liquid-crystalline medium based on a mixture of polar compounds of positive or negative dielectric anisotropy, **characterised in that** it comprises one or more compounds of the general formula I 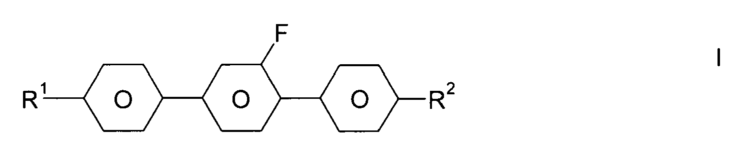 in which
R¹ and R² each, independently of one another, identically or differ- ently, denote H or an unsubstituted alkyl radical having 1 to 12 C atoms where, in addition, one or more CH₂ groups in these radicals may each be replaced, inde- pendently of one another, by -CH=CH- or -C≡C-,
and
**in that** it comprises one or more compounds selected from the group consisting of compounds of the general formulae XI to XVII: 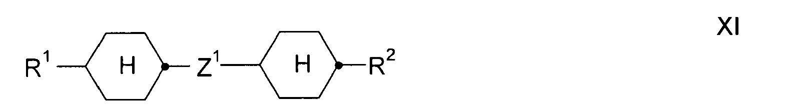 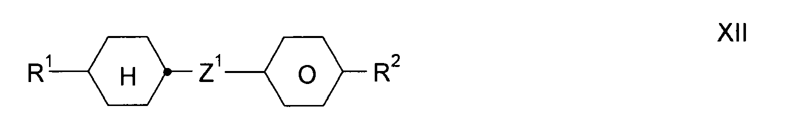 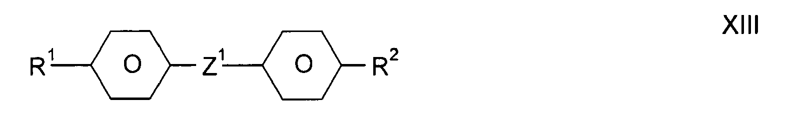 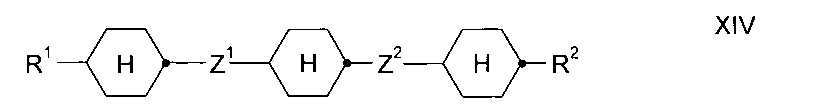 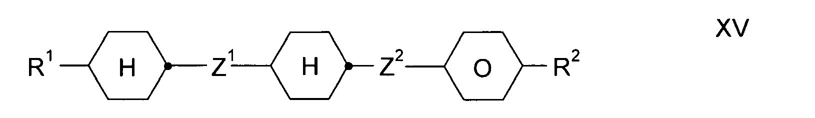 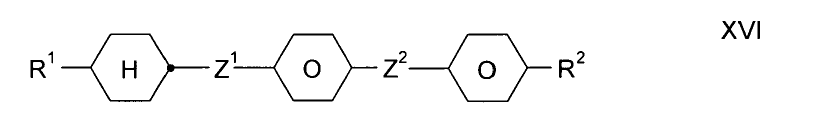 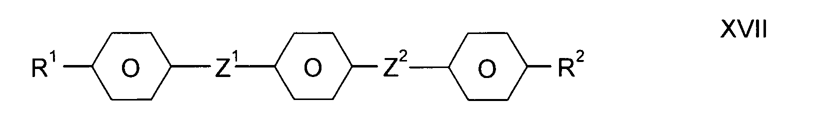 in which the individual radicals have the following meanings:
R¹, R²: independently of one another, identically or differently, n-alkyl, n-alkoxy or alkenyl, each having up to 9 C atoms; and
Z¹, Z²: independently of one another, identically or differently, a single bond, -CF₂O-, -OCF₂-, -CH₂O- -OCH₂-, -CH=CH-, -C₂H₄-, -C₂F₄-, -CH₂CF₂-, -CF₂CH₂- or -C₄H₈-.

2. Medium according to Claim 1, **characterised in that**, in the compound of the formula I, R¹ and/or R², independently of one another, identically or differently, denote H, a straight-chain alkyl radical having 1 to 9 C atoms or a straight-chain alkenyl radical having 2 to 9 C atoms.

3. Medium according to Claim 1 or 2, **characterised in that** it comprises one or more compounds selected from the group of the compounds of the sub-formulae la to Id: 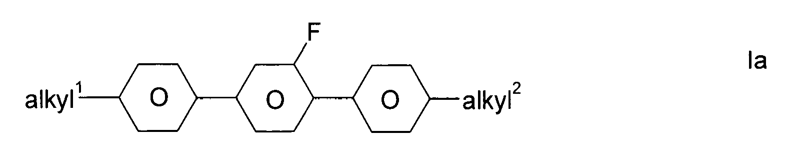 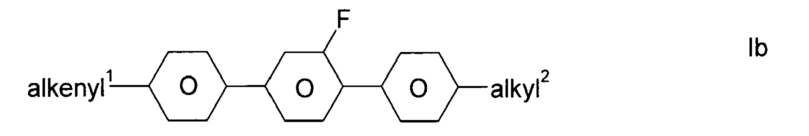 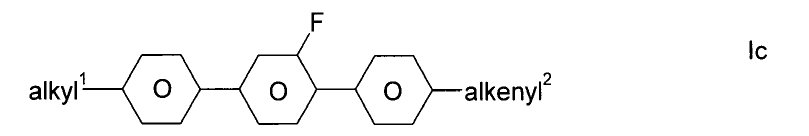 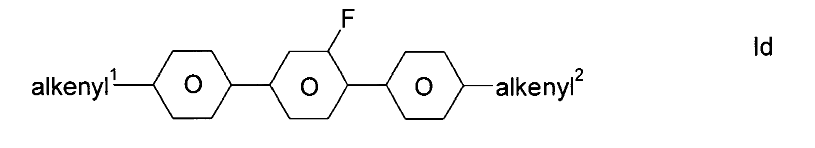 where the term "alkyl¹" and "alkyl²" in each case, independently of one another, identically or differently, denotes a hydrogen atom or an alkyl radical having 1 to 9 C atoms, preferably a straight-chain alkyl radical having 1 to 5 C atoms, and the term "alkenyl¹" and "alkenyl²" in each case, independently of one another, identically or differently, denotes an alkenyl radical having 2 to 9 C atoms, preferably a straight-chain alkenyl radical having 2 to 5 C atoms.

4. Medium according to at least one of the preceding claims, **characterised in that** it comprises one or more compounds selected from the group of the compounds of the sub-formulae I1 to I25:

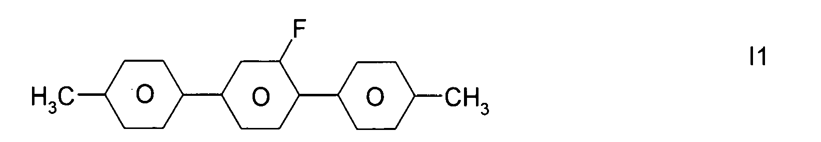

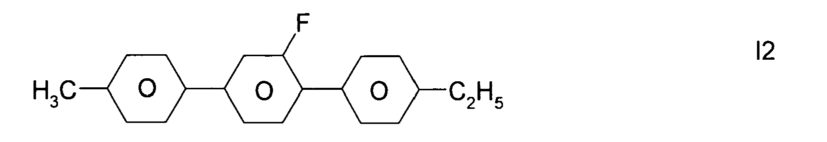

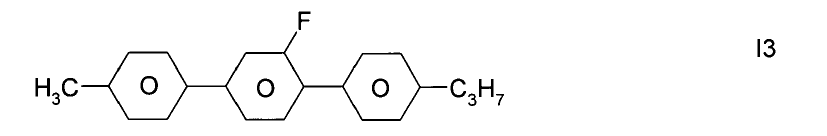

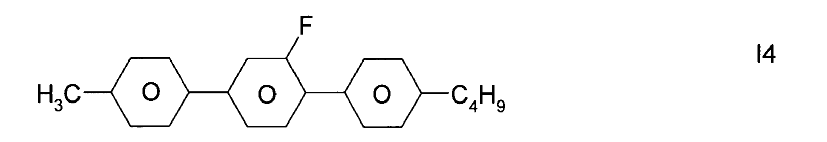

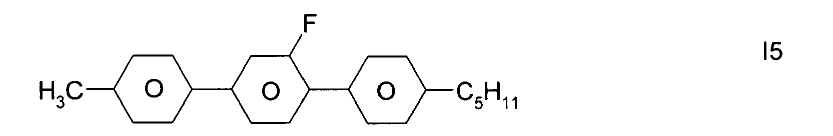

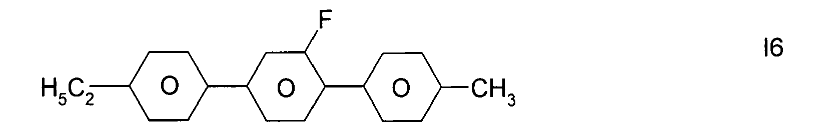

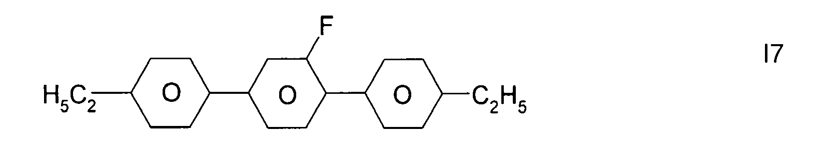

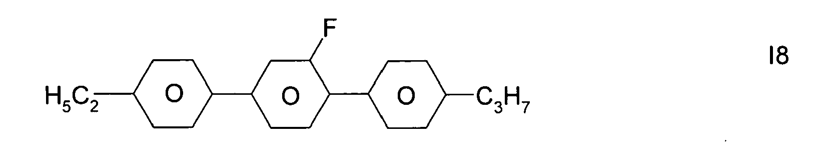

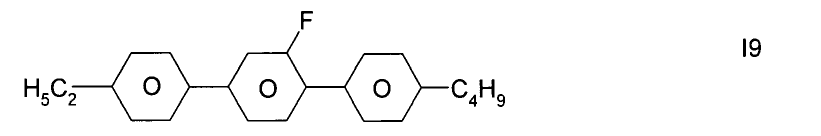

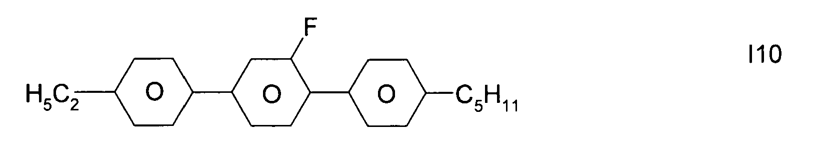

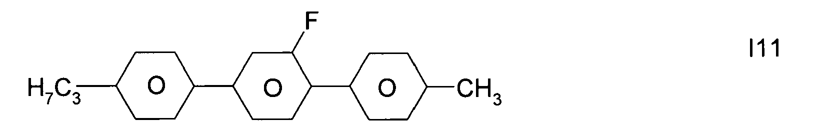

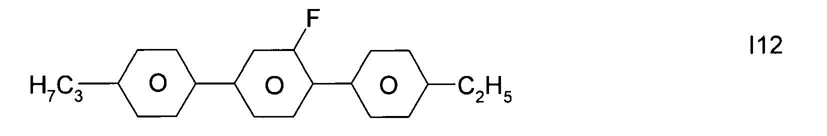

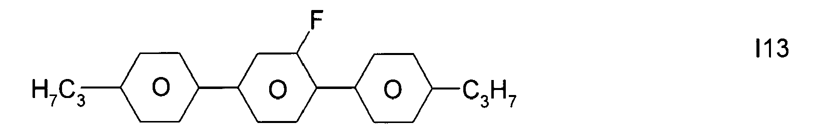

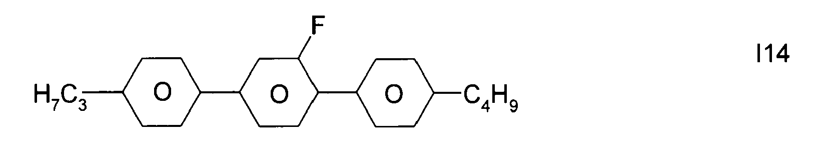

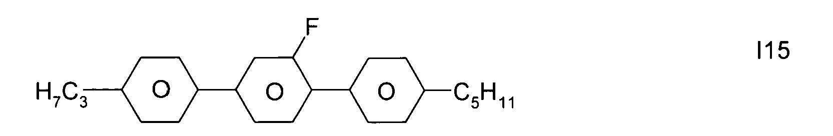

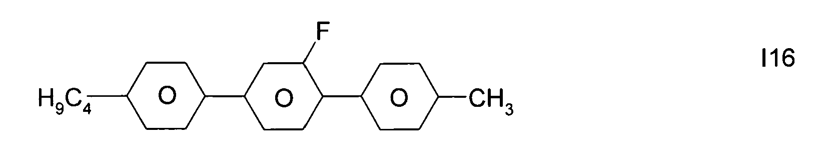

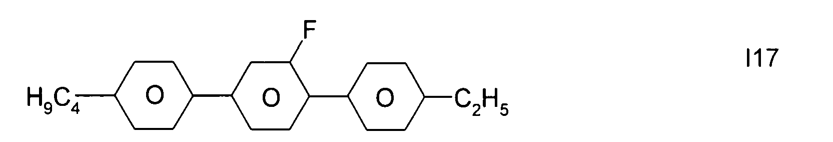

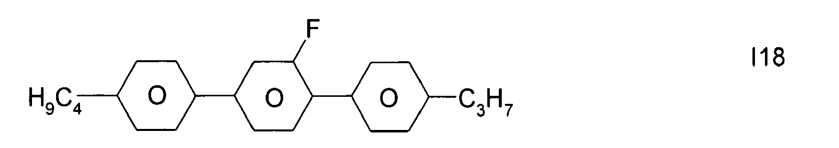

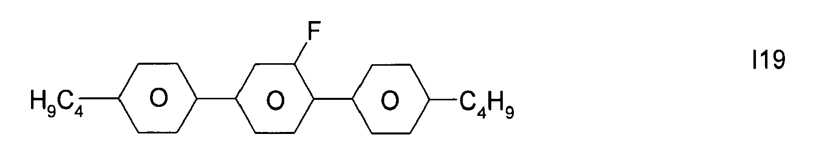

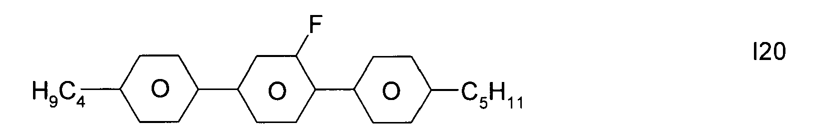

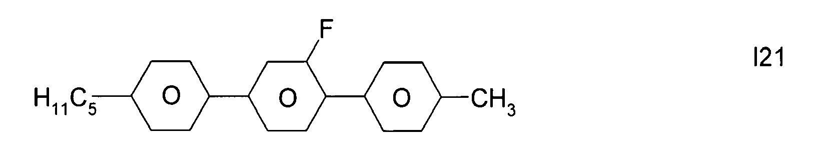

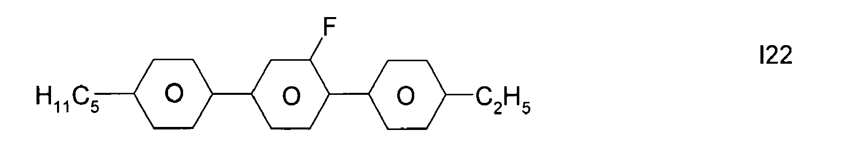

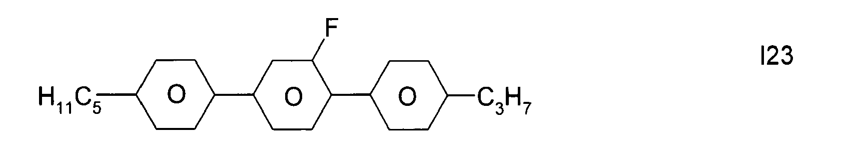

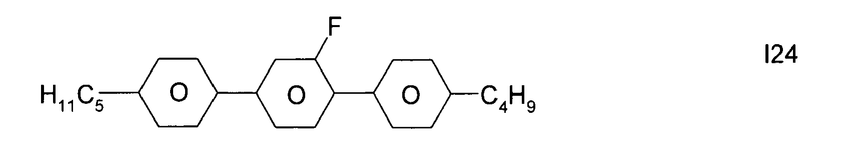

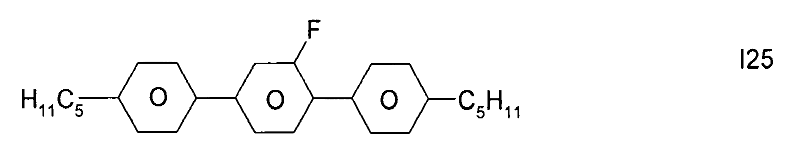

5. Medium according to at least one of the preceding claims, **characterised in that** the proportion of compounds of the formula I in the mixture as a whole is 1 to 60% by weight.

6. Medium according to at least one of the preceding claims, **characterised in that** it additionally comprises one or more compounds selected from the group consisting of compounds of the general formulae II to X: 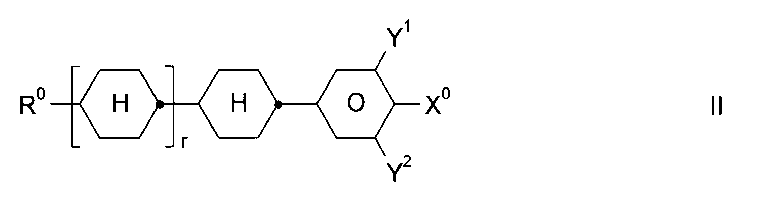 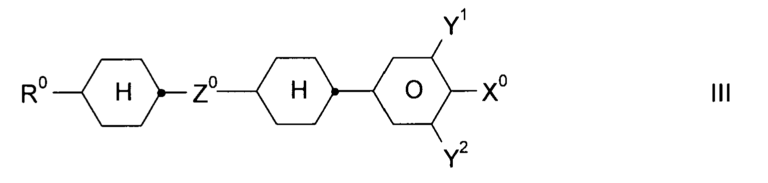 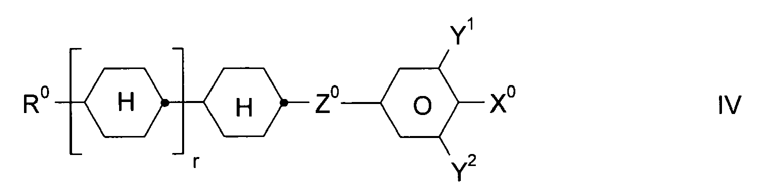 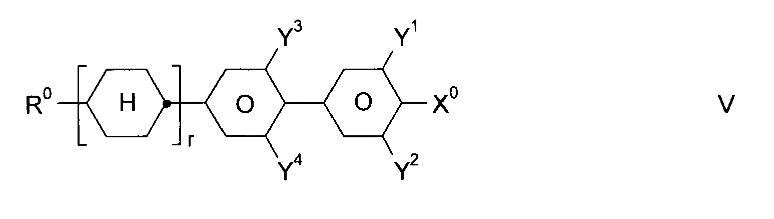 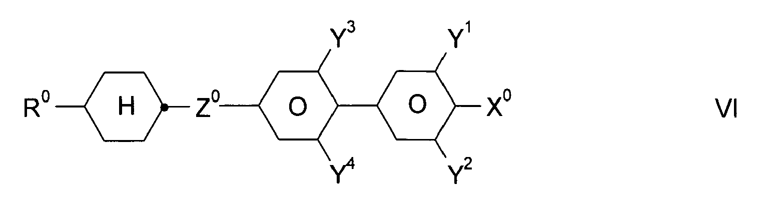 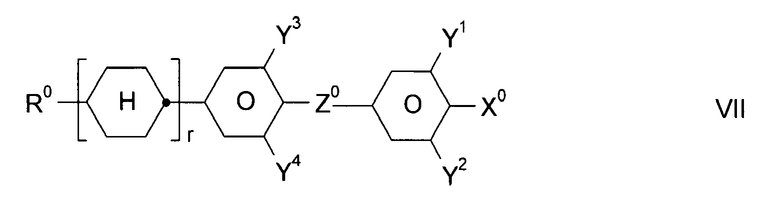 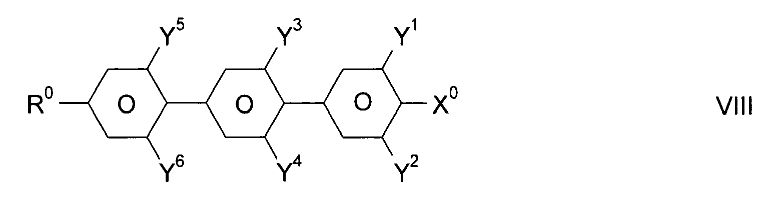 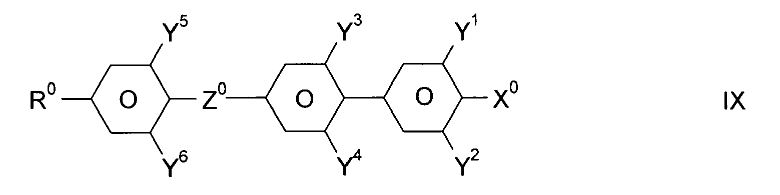 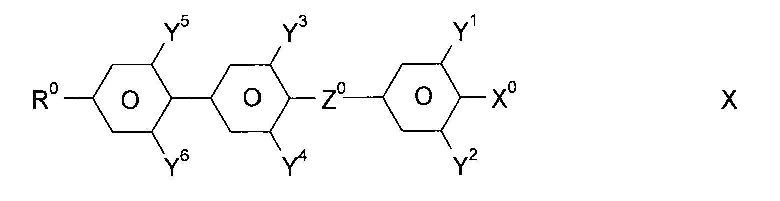 in which the individual radicals have the following meanings:
R⁰: n-alkyl, oxaalkyl, fluoroalkyl or alkenyl, each having up to 9 C atoms;
X⁰: F, Cl, halogenated alkyl or halogenated alkoxy having 1 to 6 C atoms, or halogenated alkenyl having 2 to 6 C atoms;
Z⁰: -CF₂O-, -OCF₂-, -CH₂O-, -OCH₂-, -CO-O-, -O-CO-, -CH=CH-, -C₂H₄-, -C₂F₄-, -CH₂CF₂-, -CF₂CH₂- or -C₄H₈-;
Y¹, Y², Y³, Y⁴, Y⁵ and Y⁶_{:} each, independently of one another, H or F;
r: 0 or 1 .

7. Medium according to Claim 6, **characterised in that** the proportion of compounds of the formulae II to X in the mixture as a whole is 20 to 70% by weight.

8. Medium according to Claim 1, **characterised in that** the proportion of compounds of the formulae XI to XVII in the mixture as a whole is 5 to 70% by weight.

9. Use of a liquid-crystalline medium according to at least one of the preceding claims for electro-optical purposes.

10. Electro-optical display devices containing a liquid-crystalline medium according to at least one of Claims 1 to 8.

## Revendications

1. Milieu cristallin liquide basé sur un mélange de composés polaires d'anisotropie positive ou négative, **caractérisé en ce qu'**il comprend un ou plusieurs composés de la formule générale I 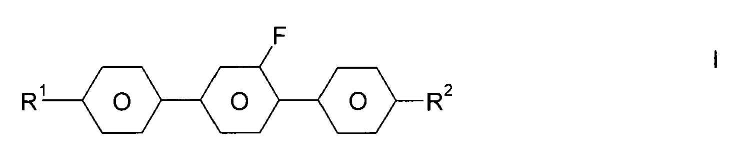 dans laquelle
R¹ et R² chacun, indépendamment l'un de l'autre, de façon iden- tique ou différente, représentent H ou un radical alkyle non substitué ayant 1 à 12 atomes de C où, en addition, un ou plusieurs groupes CH₂ dans ces radicaux peuvent chacun être remplacés, indépendamment l'un de l'autre, par -CH=CH- ou -C≡C-,
et
**en ce qu'**il comprend un ou plusieurs composés choisis parmi le groupe constitué des composés des formules générales XI à XVII: 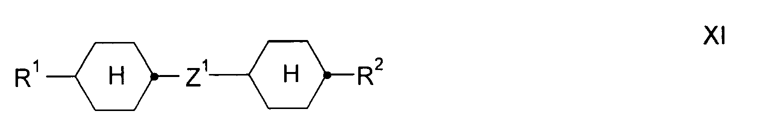 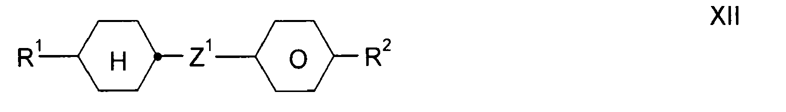 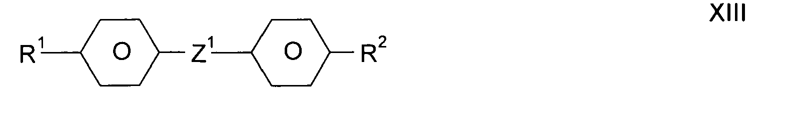 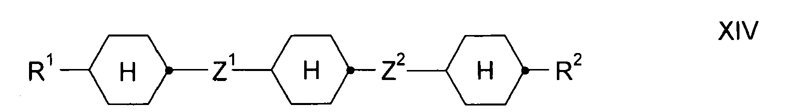 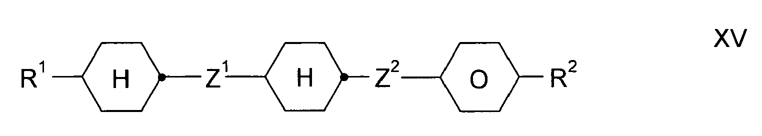 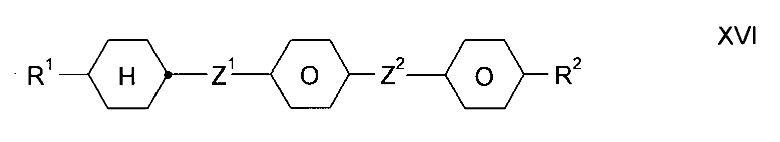 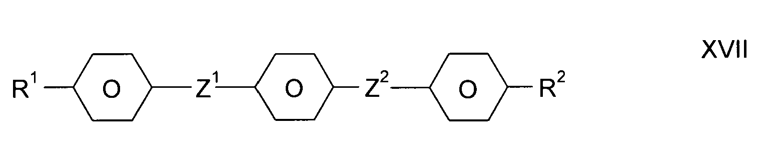 dans lesquelles les radicaux individuels ont les significations suivantes :
R¹, R²: indépendamment l'un de l'autre, de façon identique ou diffé- rente, n-alkyle, n-alcoxy ou alkényle, chacun ayant jusqu'à 9 atomes de C; et
Z¹, Z²: indépendamment l'un de l'autre, de façon identique ou diffé- rente, une liaison simple, -CF₂O- -OCF₂-, -CH₂O- -OCH₂-, -CH=CH-, -C₂H₄-, -C₂F₄-, -CH₂CF₂-, -CF₂CH₂- ou -C₄H₈-.

2. Milieu selon la revendication 1, **caractérisé en ce que**, dans le composé de la formule I, R¹ et/ou R², indépendamment l'un de l'autre, de façon identique ou différente, représentent H, un radical alkyle en chaîne droite ayant 1 à 9 atomes de C ou un radical alkényle en chaîne droite ayant 2 à 9 atomes de C.

3. Milieu selon la revendication 1 ou 2, **caractérisé en ce qu'**il comprend un ou plusieurs composés choisis parmi le groupe des composés des sous-formules Ia à Id: 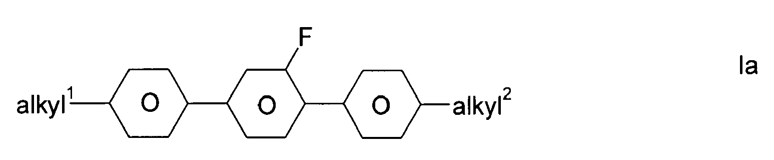 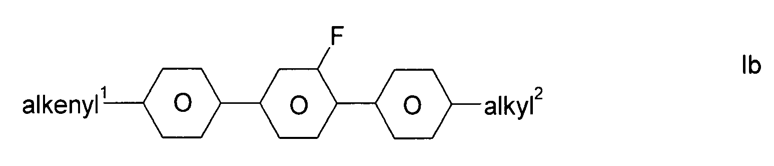 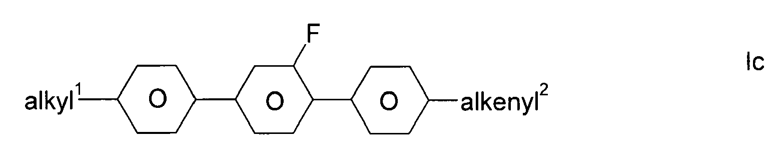 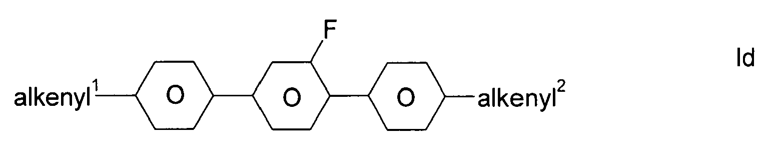 dans lesquelles le terme "alkyl'" et "alkyl²" dans chaque cas, indépendamment l'un de l'autre, de façon identique ou différente, représente un atome d'hydrogène ou un radical alkyle ayant 1 à 9 atomes de C, de préférence un radical alkyle en chaîne droite ayant 1 à 5 atomes de C, et le terme "alkenyl¹" et "alkenyl²" dans chaque cas, indépendamment l'un de l'autre, de façon identique ou différente, représente un radical alkényle ayant 2 à 9 atomes de C, de préférence un radical alkényle en chaîne droite ayant 2 à 5 atomes de C.

4. Milieu selon au moins l'une des revendications précédentes, **caractérisé en ce qu'**il comprend un ou plusieurs composés choisis parmi le groupe des composés des sous-formules I1 à I25:

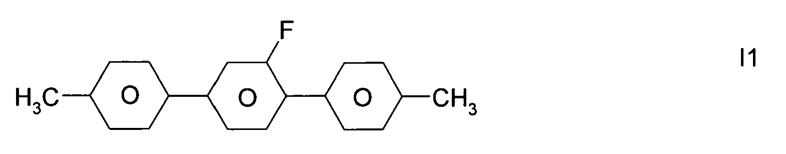

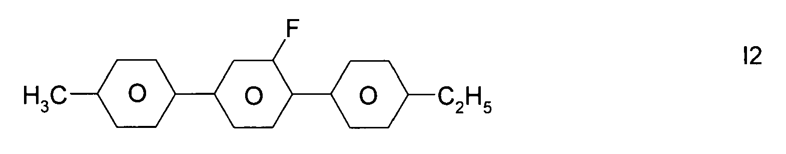

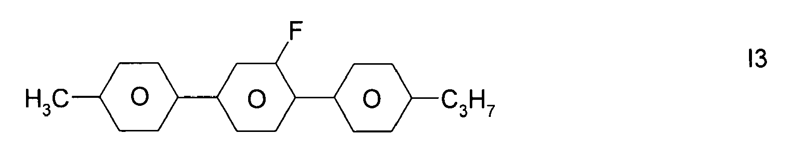

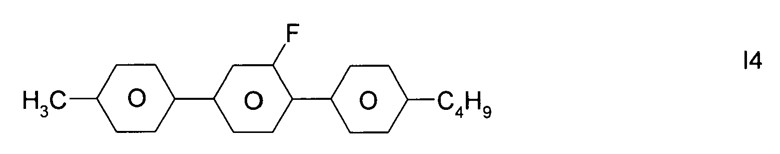

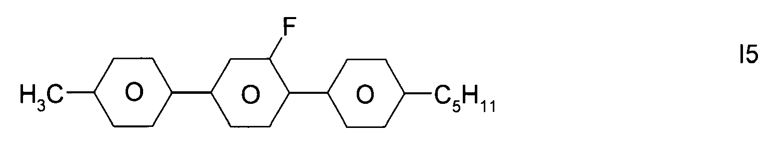

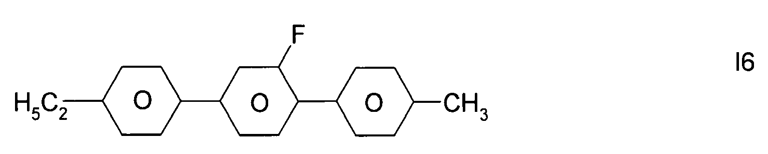

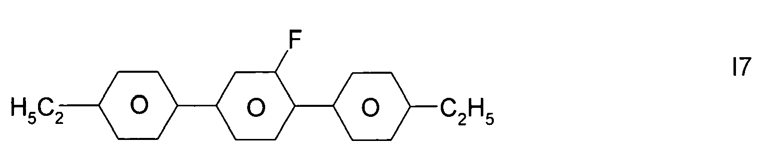

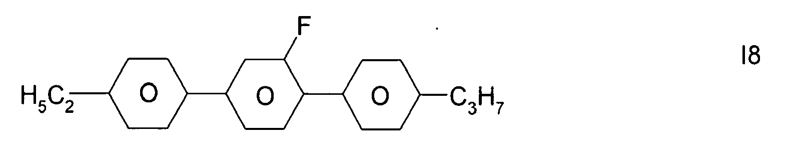

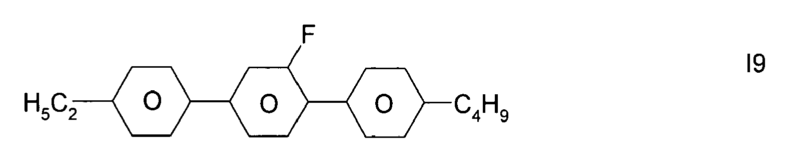

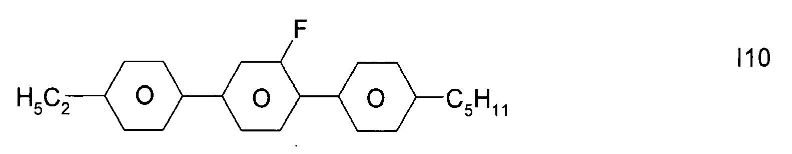

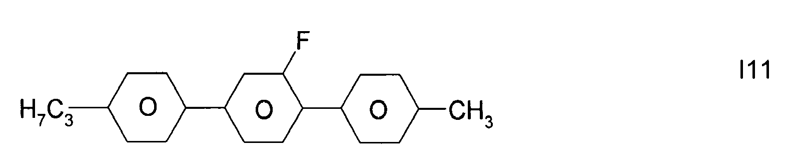

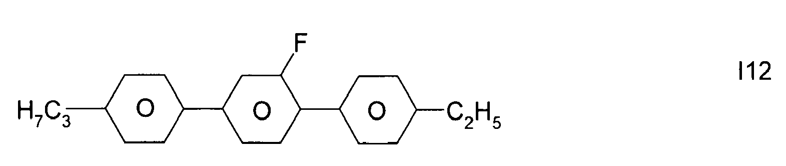

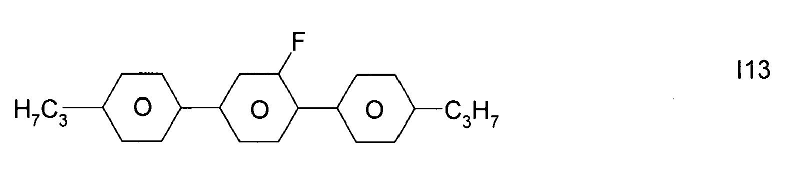

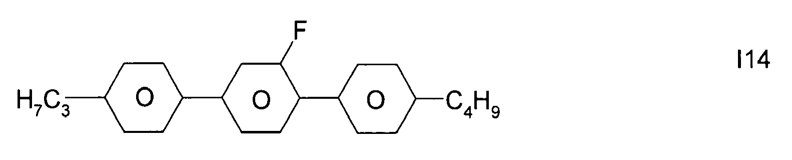

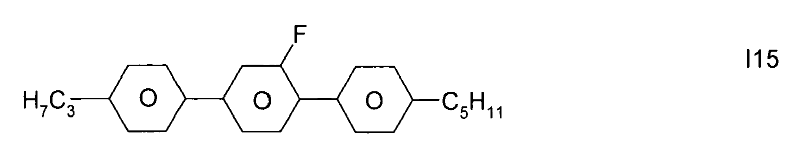

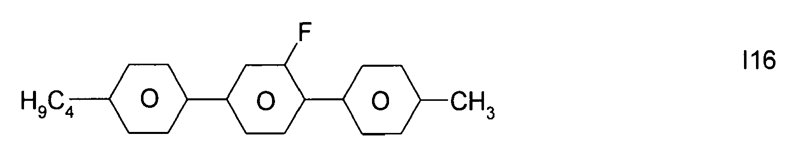

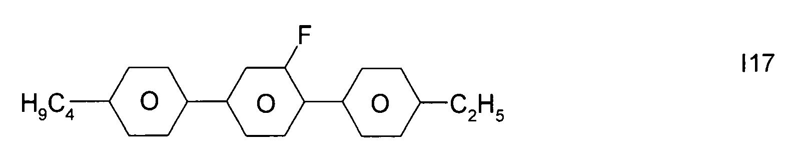

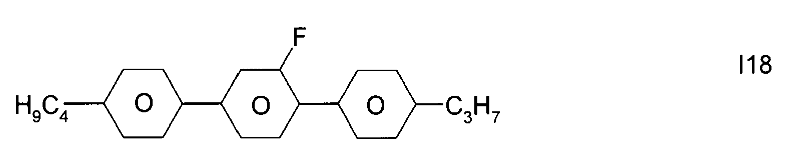

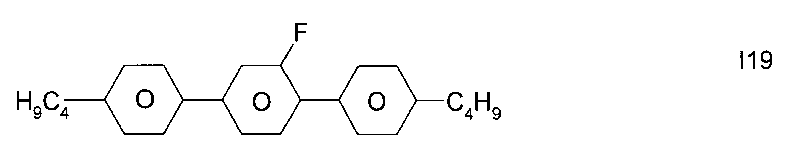

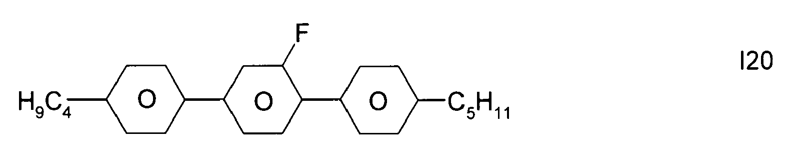

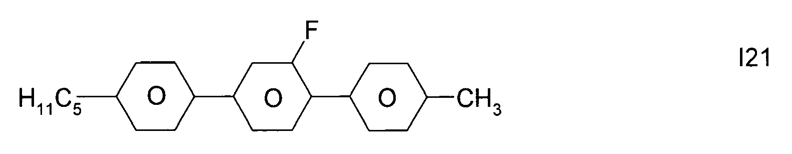

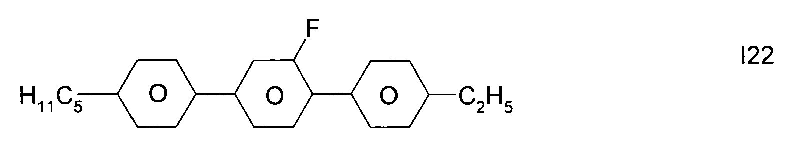

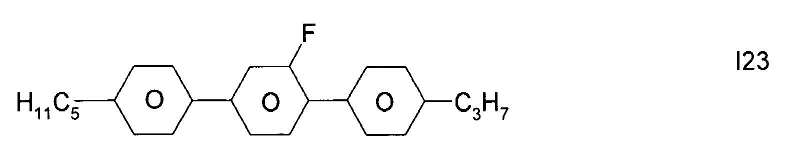

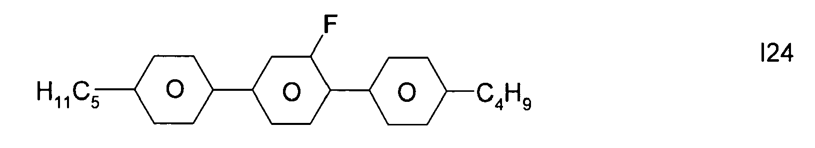

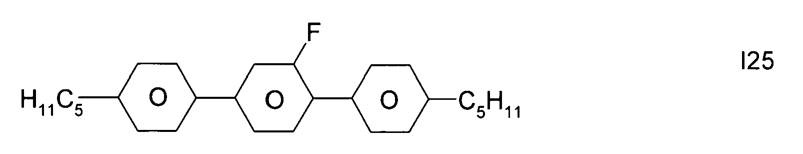

5. Milieu selon au moins l'une des revendications précédentes, **caractérisé en ce que** la proportion de composés de la formule I dans le mélange dans sa totalité est de 1 à 60% en poids.

6. Milieu selon au moins l'une des revendications précédentes, **caractérisé en ce qu'**il comprend additionnellement un ou plusieurs composés choisis parmi le groupe constitué des composés des formules générales II à X: 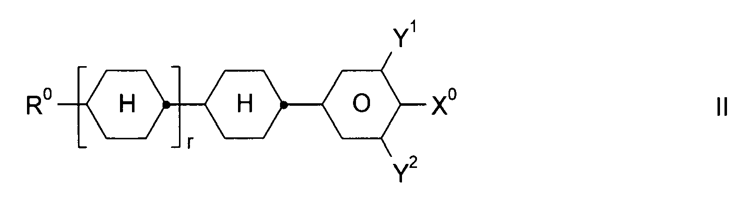 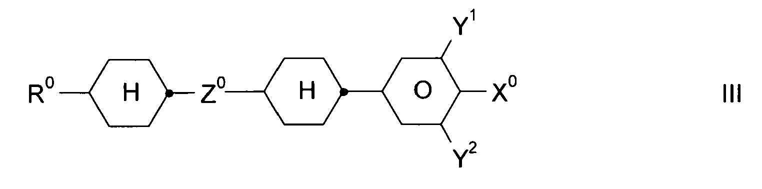 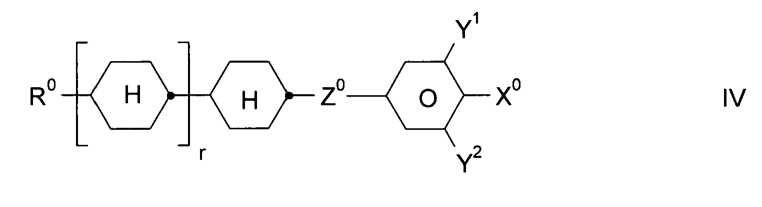 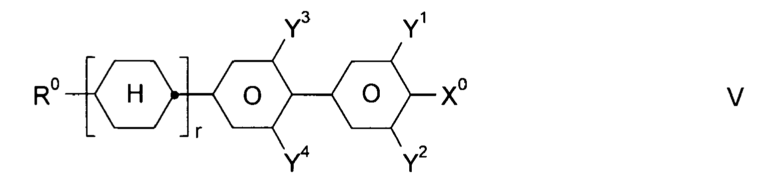 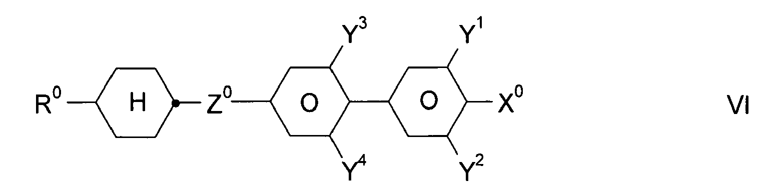 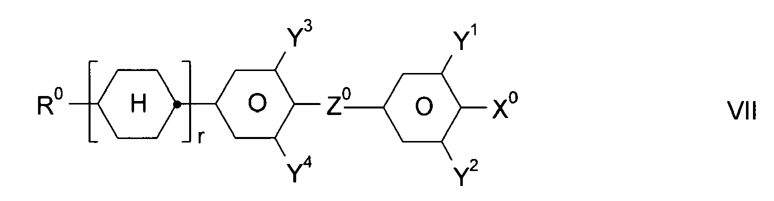 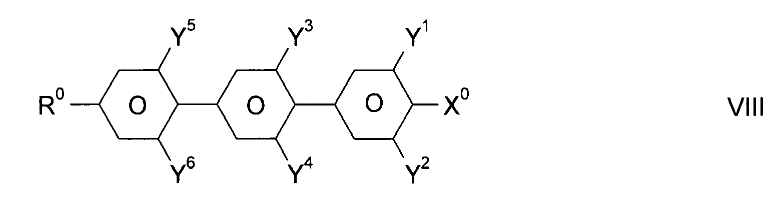 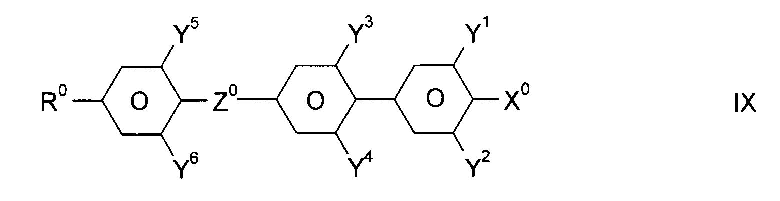 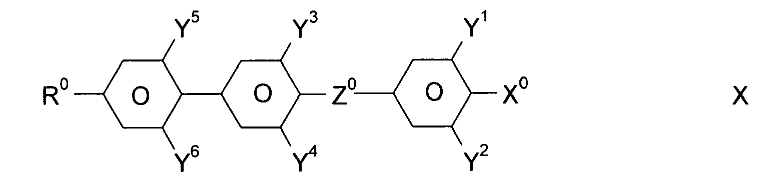 dans lesquelles les radicaux individuels ont les significations suivantes :
R⁰: n-alkyle, oxaalkyle, fluoroalkyle ou alkényle, chacun ayant jusqu'à 9 atomes de C;
X⁰: F, Cl, alkyle halogéné ou alcoxy halogéné ayant 1 à 6 atomes de C, ou alkényle halogéné ayant 2 à 6 atomes de C;
Z⁰: -CF₂O-, -OCF₂-, -CH₂O-, -OCH₂-, -CO-O-, -O-CO-, -CH=CH-, -C₂H₄-, -C₂F₄-, -CH₂CF₂-, -CF₂CH₂- ou -C₄H₈-;
Y¹ , Y², Y³, Y⁴, Y⁵ et Y⁶_{:} chacun, indépendamment l'un de l'autre, H ou F;
r: 0 ou 1.

7. Milieu selon la revendication 6, **caractérisé en ce que** la proportion de composés des formules II à X dans le mélange dans sa totalité est de 20 à 70% en poids.

8. Milieu selon la revendication 1, **caractérisé en ce que** la proportion de composés des formules XI à XVII dans le mélange dans sa totalité est de 5 à 70% en poids.

9. Utilisation d'un milieu cristallin liquide selon au moins l'une des revendications précédentes dans des buts électro-optiques.

10. Dispositifs d'affichages électro-optiques contenant un milieu cristallin liquide selon au moins l'une des revendications 1 à 8.
